(19) Europäisches Patentamt
European Patent Office
Office européen des brevets

(11) EP 4 745 633 A1

(12) EUROPEAN PATENT APPLICATION
published in accordance with Art. 153(4) EPC

(43) Date of publication:
**20.05.2026 Bulletin 2026/21**

(21) Application number: **24839791.1**

(22) Date of filing: **10.07.2024**

(51) International Patent Classification (IPC):
***G02B 5/30*** *(2006.01)* ***C07F 7/08*** *(2006.01)*
***G02B 5/18*** *(2006.01)*

(52) Cooperative Patent Classification (CPC):
**C09K 19/56; C07F 7/08; C09K 19/2007; C09K 19/406; C09K 19/42; C09K 19/54; C09K 19/586; G02B 5/18; G02B 5/30;**
C09K 2019/0448; C09K 2019/122; C09K 2019/2035; C09K 2019/2078; C09K 2219/03; C09K 2219/11

(86) International application number:
**PCT/JP2024/024982**

(87) International publication number:
**WO 2025/013901 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 JP 2023113782**
**26.12.2023 JP 2023219204**

(71) Applicant: **FUJIFILM Corporation**
**Tokyo 106-8620 (JP)**

(72) Inventors:
- **MACHIDA, Takashi**
**Minamiashigara-shi, Kanagawa 250-0193 (JP)**
- **KODAMA, Keisuke**
**Minamiashigara-shi, Kanagawa 250-0193 (JP)**
- **OKUBO, Megumi**
**Minamiashigara-shi, Kanagawa 250-0193 (JP)**
- **INADA, Hiroshi**
**Minamiashigara-shi, Kanagawa 250-0193 (JP)**

(74) Representative: **HGF**
**HGF Limited**
**4th Floor, 1 City Square**
**Leeds LS1 2ES (GB)**

(54) **LIQUID CRYSTAL COMPOSITION, OPTICALLY ANISOTROPIC LAYER, CURED FILM, DIFFRACTION ELEMENT, AND COMPOUND**

(57) The present invention provides a liquid crystal composition which has excellent aligning properties of a liquid crystal compound and excellent adhesiveness between a liquid crystal layer after being cleaned with a solvent and a layer disposed adjacent to the liquid crystal layer, in a case of forming a liquid crystal layer. In addition, there is provided a compound which has excellent aligning properties of a liquid crystal compound and excellent adhesiveness between a liquid crystal layer after being cleaned with a solvent and a layer disposed adjacent to the liquid crystal layer, in a case of forming a liquid crystal layer by being mixed with a liquid crystal compound. In addition, there are provided an optically anisotropic layer, a cured film, and a diffraction element. The liquid crystal composition of the present invention contains a compound represented by Formula (1) and a liquid crystal compound.

$$B\text{-}Z\text{-}(A\text{-}Z)_{n1}\text{-}B \qquad (1)$$

EP 4 745 633 A1

FIG. 1

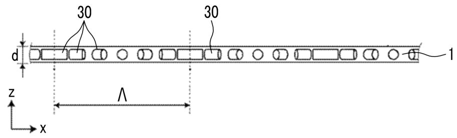

## Description

## BACKGROUND OF THE INVENTION

1. Field of the Invention

The present invention relates to a liquid crystal composition, an optically anisotropic layer, a cured film, a diffraction element, and a compound.

2. Description of the Related Art

An optically anisotropic layer formed by aligning a liquid crystal compound in a predetermined alignment state, using a composition containing a liquid crystal compound (hereinafter, also referred to as "liquid crystal composition"), is used for various applications such as a diffraction element. The liquid crystal composition may contain an aligning agent which can restrict aligning properties of the liquid crystal compound from the air interface side (hereinafter, also referred to as "air interface side aligning agent"), and as such an aligning agent, a fluorine-based aligning agent having a perfluoroalkyl chain, which has a low surface free energy and is likely to be surface-biased, has been widely used in the related art. However, in recent years, a PFAS-free alternative material has been required from the viewpoint of environmental pollution, and a silicon-based aligning agent including a siloxane chain has been expected as an alternative.

For example, JP2019-508526A discloses a silicon-containing compound (for example, a compound having the following structure) as a coloring agent (dichroic coloring agent) used in combination with a liquid crystal compound.

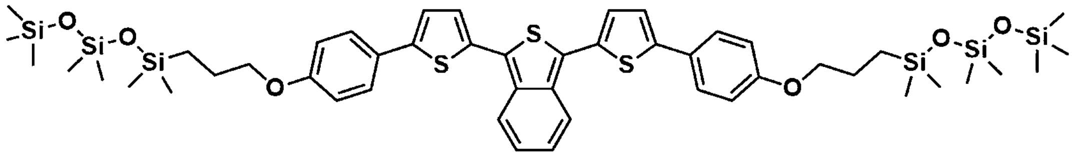

## SUMMARY OF THE INVENTION

In recent years, the present inventors have prepared a liquid crystal composition containing the silicon-containing compound disclosed in JP2019-508526A and a liquid crystal compound, and have examined characteristics thereof, and as a result, it has been clarified that the silicon-containing compound has an insufficient function as an aligning agent which restricts aligning properties of the liquid crystal compound.

In general, as the aligning agent (air interface side aligning agent) which can restrict aligning properties of the liquid crystal compound from the air interface side, an aligning agent formed from the liquid crystal composition, which is likely to be biased to the air interface side in a liquid crystal layer, is used. The present inventors have examined the silicon-containing compound as an aligning agent which can suitably restrict aligning properties of the liquid crystal compound, and as a result, it has been clarified that, in a case where another liquid crystal layer, a pressure-sensitive adhesive sheet, or the like is further disposed on the surface of the liquid crystal layer on a side where the air interface side aligning agent is biased, adhesiveness between the liquid crystal layer and the adjacent layer may be deteriorated depending on the structure of the silicon-containing compound. In a case where another liquid crystal layer, a pressure-sensitive adhesive sheet, or the like is further disposed as an adjacent layer on the liquid crystal layer, typically, a treatment (cleaning treatment) of applying a solvent to the surface of the liquid crystal layer on the side where the adjacent layer is disposed to extract a component which may hinder the adhesiveness, such as a surfactant (hereinafter, also referred to as a "component such as a surfactant"), is performed before the adjacent layer is disposed. A specific example of the cleaning treatment corresponds to a treatment of rinsing the surface of the liquid crystal layer on the side where the adjacent layer is disposed with a solvent to extract the component such as a surfactant. The present inventors have clarified that, depending on a structure of the silicon-containing compound, the adhesiveness between the liquid crystal layer which has been subjected to the cleaning treatment with a solvent and a layer (adjacent layer) disposed adjacent to the liquid crystal layer may be deteriorated, and there is a need to improve this.

Therefore, an object of the present invention is to provide a liquid crystal composition which has excellent aligning properties of a liquid crystal compound and excellent adhesiveness between a liquid crystal layer after being cleaned with a solvent and a layer disposed adjacent to the liquid crystal layer, in a case of forming a liquid crystal layer.

Another object of the present invention is to provide a compound which has excellent aligning properties of a liquid crystal compound and excellent adhesiveness between a liquid crystal layer after being cleaned with a solvent and a layer disposed adjacent to the liquid crystal layer, in a case of forming a liquid crystal layer by being mixed with a liquid

crystal compound.

Still another object of the present invention is to provide an optically anisotropic layer, a cured film, and a diffraction element.

The present inventors have found that the above-described objects can be achieved by the following configurations.

[1] A liquid crystal composition comprising:

a compound represented by Formula (1) described later; and
a liquid crystal compound.

[2] The liquid crystal composition according to [1],
in which, in Formula (B-1) to Formula (B-5), X represents the group represented by Formula (C-2) or Formula (C-3).
[3] The liquid crystal composition according to [1] or [2],
in which, in Formula (B-1) to Formula (B-5), X represents the group represented by Formula (C-3).
[4] The liquid crystal composition according to any one of [1] to [3],
in which a silicon atom content of the compound represented by Formula (1) is 17.5% to 40.0%.
[5] The liquid crystal composition according to any one of [1] to [4],
in which, in Formula (B-1) to Formula (B-5), m represents 1, and L represents a chain-like alkylene group having 1 to 4 carbon atoms in total, in which at least one $-CH_2-$ may be replaced with -NH-, -O-, -S-, -CO-, -CS-, -SO-, or $-SO_2-$.
[6] The liquid crystal composition according to [1],
in which B's each independently represent a group selected from the group consisting of groups represented by Formula (B-1-1) to Formula (B-1-5) described later.
[7] The liquid crystal composition according to any one of [1] to [6],
in which the liquid crystal compound is a compound represented by Formula (2) described later.
[8] The liquid crystal composition according to [7],
in which, in Formula (2), at least one of two P's represents an acryloyloxy group, a methacryloyloxy group, an epoxy group, a vinyl ether group, or a vinyl ester group.
[9] The liquid crystal composition according to [7] or [8],
in which, in Formula (2), two P's each independently represent an acryloyloxy group, a methacryloyloxy group, an epoxy group, a vinyl ether group, or a vinyl ester group.
[10] The liquid crystal composition according to any one of [7] to [9],
in which the compound represented by Formula (2) includes a tolan structural moiety.
[11] An optically anisotropic layer formed of the liquid crystal composition according to any one of [1] to [10].
[12] A cured film formed of the liquid crystal composition according to any one of [1] to [10].
[13] A diffraction element formed of the liquid crystal composition according to any one of [1] to [10].
[14] A compound represented by Formula (1) described later.
[15] The compound according to [14],
in which, in Formula (B-1) to Formula (B-5), X represents the group represented by Formula (C-2) or Formula (C-3).
[16] The compound according to [14] or [15],
in which, in Formula (B-1) to Formula (B-5), X represents the group represented by Formula (C-3).
[17] The compound according to any one of [14] to [16],
in which a silicon atom content is 17.5% to 40.0%.
[18] The compound according to any one of [14] to [17],
in which, in Formula (B-1) to Formula (B-5), m represents 1, and L represents a chain-like alkylene group having 1 to 4 carbon atoms in total, in which at least one $-CH_2-$ may be replaced with -NH-, -O-, -S-, -CO-, -CS-, -SO-, or $-SO_2-$.
[19] The compound according to [14],
in which B's each independently represent a group selected from the group consisting of groups represented by Formula (B-1-1) to Formula (B-1-5) described later.

According to the present invention, it is possible to provide a liquid crystal composition which has excellent aligning properties of a liquid crystal compound and excellent adhesiveness between a liquid crystal layer after being cleaned with a solvent and a layer disposed adjacent to the liquid crystal layer, in a case of forming a liquid crystal layer.

In addition, according to the present invention, it is possible to provide a compound which has excellent aligning properties of a liquid crystal compound and excellent adhesiveness between a liquid crystal layer after being cleaned with a solvent and a layer disposed adjacent to the liquid crystal layer, in a case of forming a liquid crystal layer by being mixed with a liquid crystal compound.

In addition, according to the present invention, it is possible to provide an optically anisotropic layer, a cured film,

and a diffraction element.

## BRIEF DESCRIPTION OF THE DRAWINGS

FIG. 1 is a schematic view showing an embodiment of an optically anisotropic layer.
FIG. 2 is a schematic plan view of the optically anisotropic layer shown in FIG. 1.
FIG. 3 is a conceptual view showing an action of the optically anisotropic layer shown in FIG. 2.
FIG. 4 is a conceptual view showing an action of the optically anisotropic layer shown in FIG. 2.
FIG. 5 is a schematic view showing another example of the optically anisotropic layer.
FIG. 6 is a schematic view showing another example of the optically anisotropic layer.

## DESCRIPTION OF THE PREFERRED EMBODIMENTS

Hereinafter, the present invention will be described in detail.

Although configuration requirements to be described below are described based on representative embodiments of the present invention, the present invention is not limited to the embodiments.

In the present specification, numerical ranges represented by "to" include numerical values before and after "to" as lower limit values and upper limit values.

In a notation for a group (atomic group) in the present specification, in a case where the group is denoted without specifying whether it is substituted or unsubstituted, the group includes both a group having no substituent and a group having a substituent. For example, an "alkyl group" includes not only an alkyl group having no substituent (unsubstituted alkyl group), but also an alkyl group having a substituent (substituted alkyl group).

In the present specification, for each component, one kind of substance corresponding to each component may be used alone, or two or more kinds thereof may be used in combination. Here, in a case where two or more kinds of substances are used in combination for each component, the content of the component indicates the total content of the substances used in combination, unless otherwise specified.

In the present specification, "(meth)acrylate" is used to mean "any one or both of acrylate and methacrylate", and "(meth)acryloyl" is used to mean "any one or both of acryloyl and methacryloyl".

In the present specification, a solid content of a composition means a component forming an optically anisotropic layer, which does not include a solvent. The component forming the optically anisotropic layer herein may be a component in which a chemical structure changes by a reaction (polymerization) in a case of forming the optically anisotropic layer. In addition, even in a case where the component is liquid, the component is included in the solid content as long as the component forms the optically anisotropic layer.

A bonding direction of divalent groups cited in the present specification is not limited unless otherwise specified. For example, in a case where Y in a compound represented by Formula "X-Y-Z" is -COO-, Y may be -CO-O- or -O-CO-. In addition, the above-described compound may be "X-CO-O-Z" or "X-O-CO-Z".

In the present specification, unless otherwise specified, a molecular weight in a case of a molecular weight distribution is a weight-average molecular weight. In the present specification, a weight-average molecular weight (Mw) and a number-average molecular weight (Mn) are values in terms of polystyrene by gel permeation chromatography (GPC).

In the present specification, Re(λ) represents an in-plane retardation at a wavelength λ. Unless otherwise specified, the wavelength λ is 550 nm.

In addition, in the present specification, Re(λ) is a value measured at the wavelength λ using AxoScan (manufactured by Axometrics, Inc.). By inputting an average refractive index ((nx + ny + nz)/3) and a film thickness (d (μm)) in AxoScan,
a slow axis direction (°),

$$Re(\lambda) = R0(\lambda),$$

and are calculated.

Although R0(λ) is displayed as a numerical value calculated by AxoScan, it means Re(λ).

[Liquid crystal composition]

The liquid crystal composition contains a compound represented by Formula (1) described later (hereinafter, also

referred to as "specific compound"), and a liquid crystal compound. Since the liquid crystal composition contains the specific compound, in a case of forming a liquid crystal layer, the liquid crystal compound has excellent aligning properties, and the liquid crystal layer after being cleaned with a solvent and a layer (adjacent layer) disposed adjacent to the liquid crystal layer are less likely to be peeled off and thus have excellent adhesiveness.

Although the action mechanism of the specific compound is not necessarily clear, it is considered that the specific compound exhibits a high alignment restriction force on the liquid crystal compound due to the following points: the specific compound is likely to be compatible with the liquid crystal compound due to a predetermined linear mesogen structural moiety represented by "$-Z-(A-Z)_{n1}-$"; and the specific compound is likely to be biased to a surface of the liquid crystal layer due to a predetermined silicon-containing group represented by "Formulae (B-1) to (B-3)" at the terminal portion. This is also clear from a comparison between Examples and Comparative Example 1, which will be described later, in which, in a case where the mesogen structural moiety has a 2,5-thiophene ring group as in Comparative Example 1, the alignment restriction force on the liquid crystal compound is not exhibited.

In addition, the specific compound does not have a polymerizable group in the structure thereof. Therefore, it is considered that, in a case where the liquid crystal layer is cleaned with a solvent after forming the liquid crystal layer using the liquid crystal composition, the specific compound is easily extracted from the liquid crystal layer, and as a result, the liquid crystal layer formed of the liquid crystal composition has excellent adhesiveness to the adjacent layer.

Hereinafter, in the liquid crystal layer formed of the liquid crystal composition, the aligning properties of the liquid crystal compound are more excellent and/or the adhesiveness between the liquid crystal layer after being cleaned with a solvent and a layer (adjacent layer) disposed adjacent to the liquid crystal layer is more excellent is also referred to as "effect of the present invention is more excellent".

In addition, hereinafter, the liquid crystal layer formed of the liquid crystal composition is also referred to as "optically anisotropic layer".

Hereinafter, each component contained in the liquid crystal composition will be described in detail.

[Specific compound]

The liquid crystal composition contains a compound represented by Formula (1) (specific compound).

Hereinafter, the specific compound will be described in detail.

$$B-Z-(A-Z)_{n1}-B \qquad (1)$$

In Formula (1), A's each independently represent a group selected from the group consisting of groups represented by Formula (A-1) to Formula (A-13), provided that, in a case where n1 is an integer of 2 or more, a plurality of A's may be the same or different from each other.

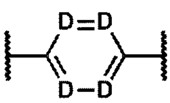
(A-1)

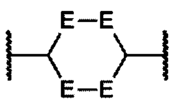
(A-2)

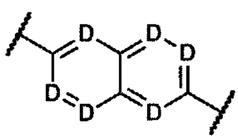
(A-3)

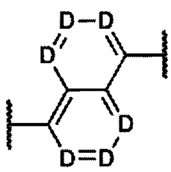
(A-4)

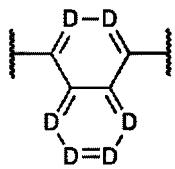
(A-5)

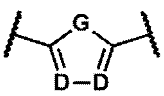
(A-6)

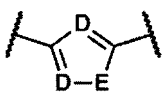
(A-7)

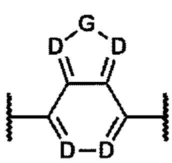
(A-8)

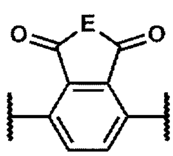
(A-9)

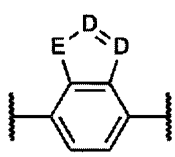
(A-10)

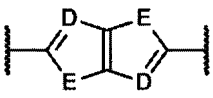

**(A-11)**

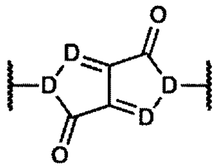

**(A-12)**

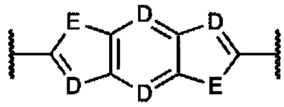

**(A-13)**

In Formula (A-1) to Formula (A-13), D's each independently represent $CR^{A1}$ or a nitrogen atom. In addition, a wavy line represents a bonding position.

Among these, as D, $CR^{A1}$ is preferable.

$R^{A1}$'s each independently represent a hydrogen atom or a substituent S1. The substituent S1 will be described in a later section.

Among these, as $R^{A1}$, a hydrogen atom, an alkyl group, an alkoxy group, or an alkoxycarbonyl group is preferable.

E's each independently represent $CR^{A2}R^{A3}$, $NR^{A4}$, an oxygen atom, or a sulfur atom. Among these, as E, $CR^{A2}R^{A3}$, $NR^{A4}$, or an oxygen atom is preferable.

G represents $CR^{A5}R^{A6}$, $NR^{A7}$, or an oxygen atom.

$R^{A2}$ to $R^{A7}$ each independently represent a hydrogen atom or a substituent S1. The substituent S1 will be described in a later section.

Among these, as $R^{A2}$ to $R^{A7}$, a hydrogen atom, an alkyl group, an alkoxy group, or an alkoxycarbonyl group is preferable.

In Formula (1), as A, among these, from the viewpoint that the effect of the present invention is more excellent, a group selected from the group consisting of the groups represented by Formulae (A-1) to (A-5) and Formulae (A-8) to (A-13) is preferable, and a group selected from the group consisting of the groups represented by Formulae (A-1) to (A-3) is more preferable.

In addition, in Formula (1), in a case where n1 is an integer of 2 or more, it is also preferable that at least one of a plurality of A's represents the group represented by Formula (A-1).

In Formula (1), Z's each independently represent a single bond, -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, -CH=CH-COO-, -CH=CH-OCO-, $-COO-CH_2CH_2-$, $-OCO-CH_2CH_2-$, $-COO-CH_2-$, $-OCO-CH_2-$, -COO-NH-, -CH=CH-, -N=N-, -CH=N-N=CH-, -CH=N-, -CF=CF-, -C=C-, -C=C-C=C-, $-OCH_2CH_2O-$, $-SCH_2CH_2S-$, -O-CO-CO-O-, or $-O-CH_2-O-$.

Among these, from the viewpoint that the effect of the present invention is more excellent, Z is preferably a single bond or -COO-, and more preferably -COO-.

In Formula (1), n1 represents an integer of 1 or more.

n1 is preferably an integer of 1 to 100, more preferably an integer of 1 to 50, still more preferably an integer of 1 to 30, even more preferably an integer of 1 to 10, particularly preferably an integer of 1 to 6, and most preferably an integer of 1 to 3.

In Formula (1), suitable examples of the structural moiety represented by $-Z-(A-Z)_{n1}-$include $-Z^1-A-Z^2-$, $-Z^1-A-Z^3-A-Z^2-$, $-Z^1-A-Z^3-A-Z^4-A-Z^2-$, and $-Z^1-A-Z^3-A-Z^4-A-Z^5-A-Z^2-$.

In the above-described structural moieties, $Z^1$ to $Z^5$'s each independently represent the group represented by Z described above. Among these, $Z^1$ and $Z^2$ are each independently preferably a single bond, -COO-, -CH=CH-, -C=C-, $-CH_2-O-$, $-CH_2-O-$, $-CH_2-S-$, -NH-CO-, $-COO-CH_2-$, $-OCO-CH_2-$, or -CH=N-. $Z^3$ to $Z^5$ are each independently preferably a single bond, -CO-, $-OCH_2CH_2O-$, -COO-, -N=N-, or $-CH_2-O-$.

In Formula (1), B's each independently represent a group selected from the group consisting of groups represented by Formula (B-1) to Formula (B-5).

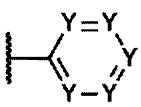

**(B-1)**

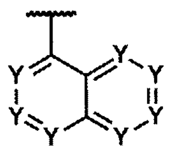

**(B-2)**

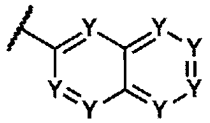

**(B-3)**

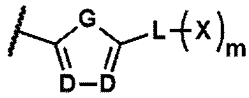

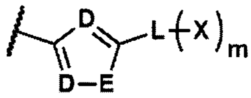

(B-4) (B-5)

In Formulae (B-1) to (B-5), D, E, and G have the same meaning as D, E, and G in Formulae (A-1) to (A-13), and suitable aspects thereof are also the same.

In Formula (B-1) to Formula (B-5), Y's each independently represent $CR^{B1}$ or a nitrogen atom.

Among these, as Y, $CR^{B1}$ is preferable.

$R^{B1}$'s each independently represent a hydrogen atom, a substituent S1, or $-L-(X)_m$. Here, at least one of Y's represents $CR^{BT}$. $R^{BT}$ represents $-L-(X)_m$.

In the group represented by Formula (B-1) to Formula (B-3), it is preferable that one to three of Y's represent $CR^{BT}$, and it is more preferable that one or two of Y's represent $CR^{BT}$.

Among these, as $R^{B1}$, a hydrogen atom, an alkyl group, an alkoxy group, an alkoxycarbonyl group, or $-L-(X)_m$ is preferable, and a hydrogen atom or $-L-(X)_m$ is more preferable.

Hereinafter, L, X, and m will be described. The substituent S1 will be described in a later section.

L's each independently represent a single bond or a chain-like (linear or branched) (m+1)-valent hydrocarbon group. Here, in the above-described hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C=C-, -CH< may be replaced with -N< or -SiH<, and at least one >C< may be replaced with >Si<.

The number of atoms in the chain-like (m+1)-valent hydrocarbon group represented by L, other than hydrogen atoms, is, for example, preferably 1 to 30, more preferably 1 to 20, still more preferably 1 to 15, particularly preferably 1 to 10, and most preferably 1 to 6.

Specific examples of the chain-like (m+1)-valent hydrocarbon group represented by L include a chain-like (m+1)-valent aliphatic hydrocarbon group.

From the viewpoint that the effect of the present invention is more excellent, L preferably represents a chain-like (preferably linear) alkylene group having 1 to 10 carbon atoms in total, in which at least one $-CH_2-$ may be replaced with -NH-, -O-, -S-, -CO-, -CS-, -SO-, or $-SO_2-$; more preferably represents a chain-like (preferably linear) alkylene group having 1 to 6 carbon atoms in total, in which at least one $-CH_2-$ may be replaced with -NH-, -O-, -S-, -CO-, -CS-, -SO-, or $-SO_2-$; and still more preferably represents a chain-like (preferably linear) alkylene group having 1 to 4 carbon atoms in total, in which at least one $-CH_2-$ may be replaced with -NH-, -O-, -S-, -CO-, -CS-, -SO-, or $-SO_2-$.

m represents an integer of 1 or more.

m is preferably an integer of 1 to 4, more preferably 1 or 2, and still more preferably 1.

X's each independently represent a group represented by Formula (C-1) to Formula (C-3).

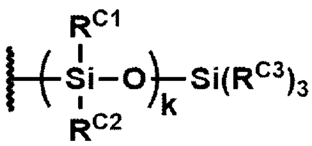

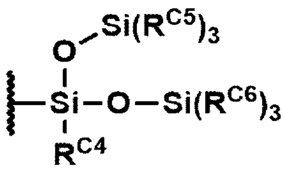

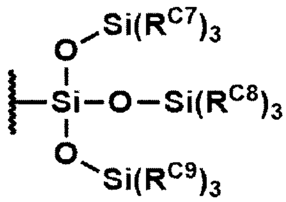

(C-1) (C-2) (C-3)

In Formula (C-1), $R^{C1}$ to $R^{C3}$ each independently represent an alkyl group having 1 to 10 carbon atoms. In Formula (C-1), a plurality of $R^{C1}$'s, a plurality of $R^{C2}$'s, and a plurality of $R^{C3}$'s may be the same or different from each other.

In Formula (C-2), $R^{C4}$ represents an alkyl group having 1 to 10 carbon atoms, and $R^{C5}$ and $R^{C6}$ each independently represent an alkyl group having 1 to 10 carbon atoms or a group represented by Formula (C-1X). In Formula (C-2), a plurality of $R^{C5}$'s and a plurality of $R^{C6}$'s may be the same or different from each other.

In Formula (C-3), $R^{C7}$ to $R^{C9}$ each independently represent an alkyl group having 1 to 10 carbon atoms or a group represented by Formula (C-1X). In Formula (C-3), a plurality of $R^{C7}$'s, a plurality of $R^{C8}$'s, and a plurality of $R^{C9}$'s may be the same or different from each other.

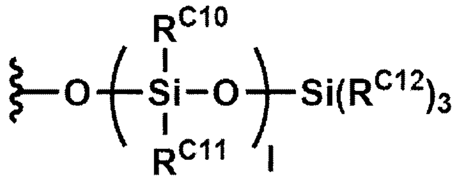

(C-1X)

In Formula (C-1X), $R^{C10}$ to $R^{C12}$ each independently represent an alkyl group having 1 to 10 carbon atoms. l represents an integer of 0 to 20. In Formula (C-1X), in a case where l is an integer of 2 or more, a plurality of $R^{C10}$'s or a plurality of $R^{C11}$'s may be the same or different from each other. A plurality of $R^{C12}$'s may be the same or different from each other.

In Formulae (C-1) to (C-3), and Formula (C-1X), the alkyl group having 1 to 10 carbon atoms represented by $R^{C1}$ to $R^{C12}$ is preferably a chain-like (linear or branched) alkyl group having 1 to 10 carbon atoms, and more preferably a linear alkyl group having 1 to 10 carbon atoms.

In particular, the number of carbon atoms in the alkyl group having 1 to 10 carbon atoms, represented by $R^{C1}$ to $R^{C12}$, is preferably 1 to 6 and more preferably 1 to 3.

The alkyl group having 1 to 10 carbon atoms, represented by $R^{C1}$ to $R^{C12}$, may have a substituent (preferably, the substituent S1 described later), but preferably does not have a substituent.

Among these, as $R^{C1}$ to $R^{C4}$ and $R^{C10}$ to $R^{C12}$, a methyl group is preferable.

Among these, as $R^{C5}$ to $R^{C9}$, a methyl group or the group represented by Formula (C-1X) is preferable.

In Formula (C-1), k represents an integer of 2 to 20.

From the viewpoint that the effect of the present invention is more excellent, k preferably represents an integer of 3 to 10, and more preferably represents an integer of 3 to 6.

In Formula (C-1X), l represents an integer of 0 to 20.

From the viewpoint that the effect of the present invention is more excellent, l preferably represents an integer of 0 to 10, and more preferably represents an integer of 0 to 6.

From the viewpoint that the effect of the present invention is more excellent, X preferably represents the group represented by Formula (C-2) or Formula (C-3), and more preferably represents the group represented by Formula (C-3).

In Formula (1), as B, among these, from the viewpoint that the effect of the present invention is more excellent, a group selected from the group consisting of the groups represented by Formulae (B-1) to (B-3) is preferable, a group selected from the group consisting of the group represented by Formula (B-1) is more preferable, and a group selected from groups consisting of Formulae (B-1-1) to (B-1-5) is particularly preferable.

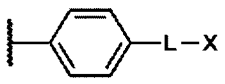

(B-1-1)

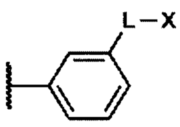

(B-1-2)

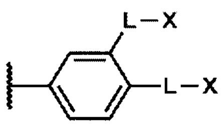

(B-1-3)

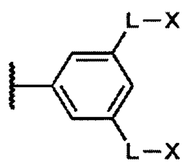

(B-1-4)

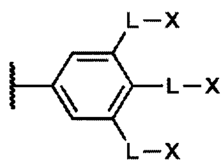

(B-1-5)

In Formulae (B-1-1) to (B-1-5), X has the same meaning as X in Formula (B-1) described above, and a suitable aspect thereof is also the same.

L represents a single bond or a chain-like (linear or branched) divalent hydrocarbon group. Here, in the above-described hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C≡C-, at least one -CH< may be replaced with -N< or -SiH<, and >C< may be replaced with >Si<.

The number of atoms in the chain-like divalent hydrocarbon group represented by L, other than hydrogen atoms, is, for example, preferably 1 to 30, more preferably 1 to 20, still more preferably 1 to 15, particularly preferably 1 to 10, and most preferably 1 to 6.

Specific examples of the chain-like divalent hydrocarbon group represented by L include a chain-like divalent aliphatic hydrocarbon group.

From the viewpoint that the effect of the present invention is more excellent, L preferably represents a chain-like (preferably linear) alkylene group having 1 to 10 carbon atoms in total, in which at least one $-CH_2-$ may be replaced with -NH-, -O-, -S-, -CO-, -CS-, -SO-, or $-SO_2-$; more preferably represents a chain-like (preferably linear) alkylene group having

1 to 6 carbon atoms in total, in which at least one $-CH_2-$ may be replaced with -NH-, -O-, -S-, -CO-, -CS-, -SO-, or $-SO_2-$; and still more preferably represents a chain-like (preferably linear) alkylene group having 1 to 4 carbon atoms in total, in which at least one $-CH_2-$ may be replaced with -NH-, -O-, -S-, -CO-, -CS-, -SO-, or $-SO_2-$.

Hereinafter, the substituent S1 will be described.

(Substituent S1)

The substituent S1 is a group selected from the group consisting of a halogen atom, an alkyl group, a cycloalkyl group, an aryl group, a heterocyclic group, a cyano group, a hydroxy group, a nitro group, a carboxyl group, an alkoxy group, an aryloxy group, a silyloxy group, a heterocyclic oxy group, an acyloxy group, a carbamoyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo or heterocyclic azo group, an imide group, a phosphino group, a phosphinyl group, a phosphinyloxy group, a phosphinylamino group, and a silyl group.

In addition, each of the above-described groups may further have a substituent (for example, one or more groups of each of the above-described groups), as possible. For example, an alkyl group which may have a substituent is also included as the form of the substituent S1.

In addition, in a case where the substituent S1 has a carbon atom, the number of carbon atoms in the substituent S1 is, for example, 1 to 20.

In addition, the number of atoms in the substituent S1, other than hydrogen atoms, is, for example, 1 to 30.

In the substituent S1, examples of the halogen atom include a fluorine atom, a chlorine atom, a bromine atom, and an iodine atom.

In the substituent S1, the number of carbon atoms in the (linear or branched) alkyl group is preferably 1 to 20, more preferably 1 to 10, and still more preferably 1 to 6. Examples of the alkyl group include a methyl group, an ethyl group, a n-propyl group, an i-propyl group, a n-butyl group, a tert-butyl group, and a n-hexyl group.

In the substituent S1, the cycloalkyl group may be monocyclic or polycyclic. Examples of an aspect in which the cycloalkyl group is polycyclic include a bicycloalkyl group. The number of carbon atoms in the cycloalkyl group is preferably 3 to 20, more preferably 3 to 10, still more preferably 6 to 10, and particularly preferably 6.

In the substituent S1, an alkyl moiety in each of the alkoxy group, the alkylthio group, the alkoxycarbonylamino group, the alkylsulfonylamino group, the alkylsulfinyl group, the alkylsulfonyl group, and the alkoxycarbonyl group preferably has the same aspect as the above-described (linear or branched) alkyl group.

In the substituent S1, a hydrocarbon ring constituting the aryl group may be a monocyclic ring or a polycyclic ring (for example, a 2- to 6-membered ring or the like). The number of ring member atoms in the aryl group is preferably 5 to 15, more preferably 6 to 10, and still more preferably 6.

In the substituent S1, an aryl moiety in each of the aryloxy group, the aryloxycarbonylamino group, the arylsulfonylamino group, the arylthio group, the arylsulfinyl group, the arylsulfonyl group, the aryloxycarbonyl group, and the arylazo group preferably has the same aspect as the above-described aryl group.

In the substituent S1, a hydrocarbon ring constituting the heterocyclic group (heteroaryl group) may be a monocyclic ring or a polycyclic ring (for example, a 2- to 6-membered ring or the like). The number of ring member atoms in the heterocyclic group is preferably 5 to 15, and more preferably 5 or 6. In the heterocyclic group, the number of heteroatoms as the ring member atoms is, for example, 1 to 10, preferably 1 to 3, and more preferably 1 or 2. Examples of the above-described heteroatom include a nitrogen atom, a sulfur atom, and an oxygen atom.

In the substituent S1, a heterocyclic group moiety in each of the heterocyclic oxy group (heteroaryloxy group), the heterocyclic thio group (heteroarylthio group), and the heterocyclic azo group (heteroarylozo group) preferably has the same aspect as the above-described heterocyclic group (heteroaryl group).

In the substituent S1, the acyl group may be an alkylcarbonyl group or an arylcarbonyl group. An alkyl moiety in the alkylcarbonyl group preferably has the same aspect as the above-described (linear or branched) alkyl group. In addition, an aryl group moiety in the arylcarbonyl group preferably has the same aspect as the above-described aryl group.

In the substituent S1, an acyl group moiety in each of the acyloxy group and the acylamino group preferably has the same aspect as the above-described acyl group. Specifically, the acyloxy group may be an alkylcarbonyloxy group or an arylcarbonyloxy group, and the acylamino group may be an alkylcarbonylamino group or an arylcarbonylamino group.

In the substituent S1, the amino group may be an unsubstituted amino group ($-NH_2$) or a substituted amino group (-NHR or $-N(R)_2$).

The substituent (R) in the substituted amino group is preferably an alkyl group or the like.

The above-described alkyl group is preferably linear or branched. In addition, the number of carbon atoms is preferably 1 to 20, more preferably 1 to 10, and still more preferably 1 to 6. Examples of the alkyl group include a methyl

group, an ethyl group, a n-propyl group, an i-propyl group, a n-butyl group, a tert-butyl group, and a n-hexyl group.

In the substituent S1, an amino group moiety in each of the acylamino group, the aminocarbonylamino group, the alkoxycarbonylamino group, the aryloxycarbonylamino group, the sulfamoylamino group, the alkylsulfonylamino or arylsulfonylamino group, and the phosphinylamino group may be an unsubstituted amino group (-NH-) or a substituted amino group (-NR-).

The substituent (R) in the substituted amino group is preferably an alkyl group or the like.

The above-described alkyl group is preferably linear or branched. In addition, the number of carbon atoms is preferably 1 to 20, more preferably 1 to 10, and still more preferably 1 to 6. Examples of the alkyl group include a methyl group, an ethyl group, a n-propyl group, an i-propyl group, a n-butyl group, a tert-butyl group, and a n-hexyl group.

In the substituent S1, the silyl group is preferably a group represented by $-Si(R)_3$.

R's in the silyl group each independently represent a substituent.

The substituent represented by R is preferably an alkyl group, an aryl group, or the like.

The above-described alkyl group is preferably linear or branched. In addition, the number of carbon atoms is preferably 1 to 20, more preferably 1 to 10, and still more preferably l to 6.

The above-described aryl group preferably has the same aspect as the above-described aryl group, and a phenyl group is more preferable.

In the substituent S1, a silyl group moiety in the silyloxy group preferably has the same aspect as the above-described silyl group.

In the substituent S1, the imide group is preferably a group represented by -CO-NR-CO-R or $-N(-CO-R)_2$.

R's in the imide group each independently represent a hydrogen atom or a substituent.

The substituent represented by R is preferably an alkyl group or an aryl group.

The above-described alkyl group is preferably linear or branched. In addition, the number of carbon atoms is preferably 1 to 20, more preferably 1 to 10, and still more preferably 1 to 6.

The above-described aryl group preferably has the same aspect as the above-described aryl group, and a phenyl group is more preferable.

Typically, the specific compound does not have a polymerizable group (a polymerizable group capable of chain polymerization (a chain-polymerizable group)).

The polymerizable group herein is typically a chain-polymerizable group such as an addition polymerizable group and a ring-opening polymerizable group, and is intended to a group which can be polymerized under normal use conditions.

Here, for example, even in a case of an ethylenically unsaturated group known as an addition polymerizable group, in a case where polymerization reactivity is poor due to a factor such as steric hindrance under normal use, it does not correspond to the "polymerizable group" (specifically, an alkenylene group or the like present at a site linking ring structures in a mesogenic moiety corresponds to this). An alkynylene group present at a site linking ring structures in the mesogenic moiety also does not correspond to the polymerizable group under normal use.

From the viewpoint that the aligning properties are more excellent, a lower limit value of a silicon atom content of the specific compound is preferably 17.5% or more, more preferably 18.5% or more, and still more preferably 20.0% or more. In addition, from the viewpoint that the adhesiveness is more excellent, the upper limit value thereof is preferably 40.0% or less, more preferably 30.0% or less, still more preferably 28.0% or less, particularly preferably 26.5% or less, more particularly preferably 23.5% or less, and most preferably 20.0% or less. The silicon atom content (%) of the specific compound is obtained by (Molecular weight of silicon atom in molecule/Molecular weight of specific compound) × 100.

The lower limit value of the molecular weight of the specific compound is preferably 400 or more, more preferably 700 or more, and still more preferably 1,000 or more. In addition, the upper limit value thereof is preferably 5,000 or less, more preferably 4,000 or less, still more preferably 3,000 or less, and particularly preferably 2,000 or less.

Specific examples of the specific compound will be shown below, but the specific compound is not limited thereto.

In the following formulae, a wavy line and * represent a bonding position.

[Table 1]

| Table A1 | **X-L-M-L-X** | | |
|---|---|---|---|
| Compound number | M = | L = | X = |
| Compound A1 | 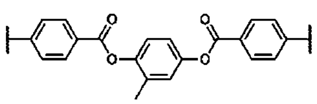 | 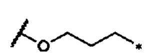 | 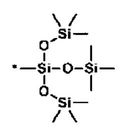 |

(continued)

| Table A1 | X-L-M-L-X | | |
|---|---|---|---|
| Compound number | M = | L = | X = |
| Compound A2 | 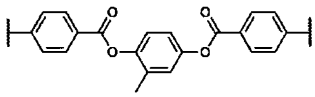 | 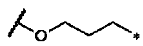 | 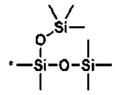 |
| Compound A3 | 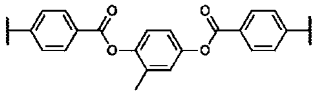 | 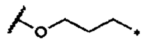 | 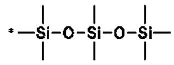 |
| Compound A4 | 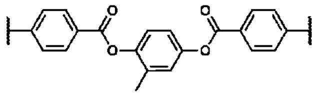 | 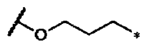 | 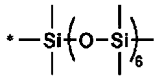 |
| Compound A5 | 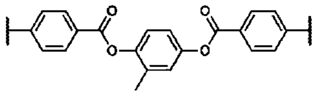 | 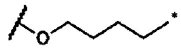 | 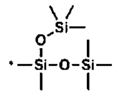 |
| Compound A6 | 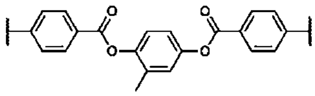 | 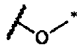 | 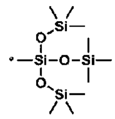 |
| Compound A7 | 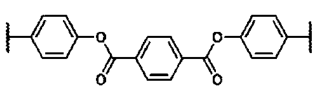 | 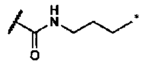 | 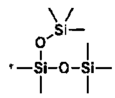 |
| Compound A8 | 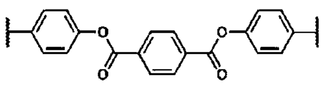 | 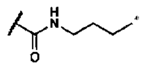 | 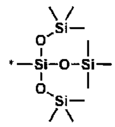 |
| Compound A9 | 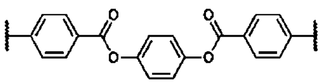 | 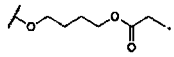 | 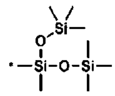 |
| Compound A10 | 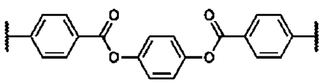 | 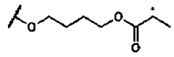 | 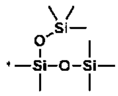 |

[Table 2]

| Table A2 | X-L-M-L-X | | |
|---|---|---|---|
| Compound number | M = | L= | X = |
| Compound A11 | 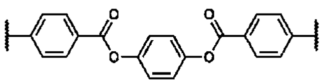 | 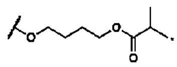 | 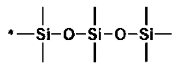 |
| Compound A12 | 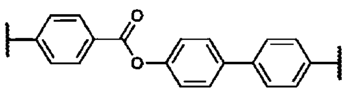 | 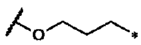 | 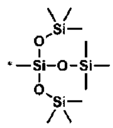 |
| Compound A13 | 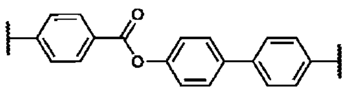 | 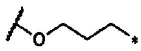 | 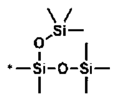 |

(continued)

| Table A2 | X-L-M-L-X | | |
|---|---|---|---|
| Compound number | M = | L= | X = |
| Compound A14 | 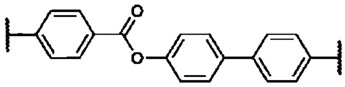 | 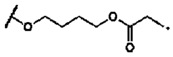 | 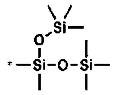 |
| Compound A15 | 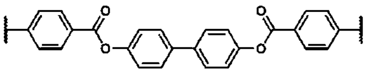 | 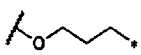 | 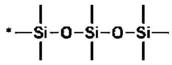 |
| Compound A16 | 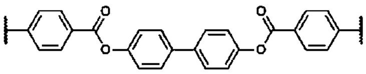 | 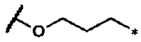 | 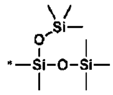 |
| Compound A17 | 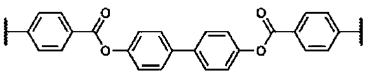 | 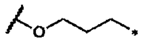 | 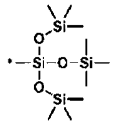 |
| Compound A18 | 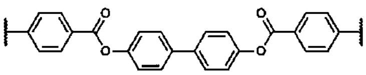 | 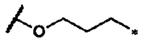 | 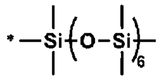 |
| Compound A19 | 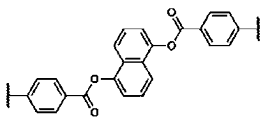 | 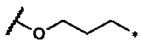 | 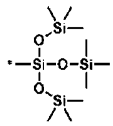 |
| Compound A20 | 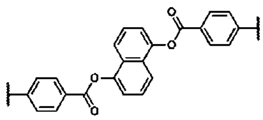 | 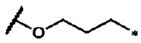 | 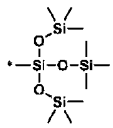 |

[Table 3]

| Table A3 | X-L-M-L-X | | |
|---|---|---|---|
| Compound number | M = | L= | X = |
| Compound A21 | 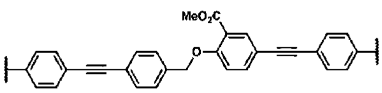 | 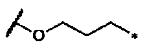 | 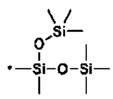 |
| Compound A22 | 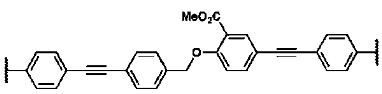 | 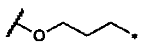 | 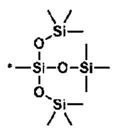 |
| Compound A23 | 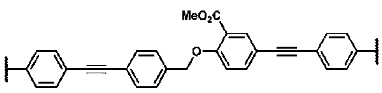 | 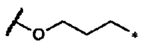 | 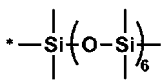 |
| Compound A24 | 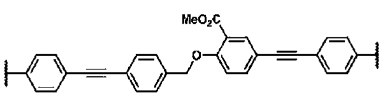 | 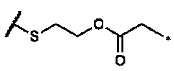 | 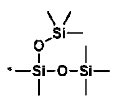 |
| Compound A25 | 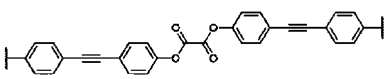 | 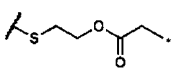 | 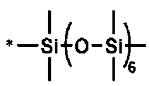 |

(continued)

| Table A3 | X-L-M-L-X | | |
|---|---|---|---|
| Compound number | M = | L= | X = |
| Compound A26 | 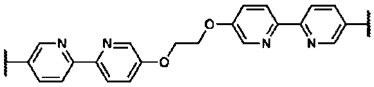 | 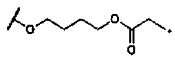 | 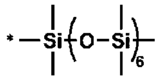 |
| Compound A27 | 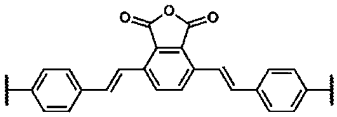 | 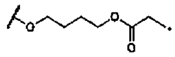 | 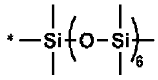 |
| Compound A28 | 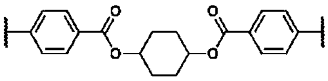 | 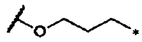 | 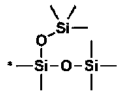 |
| Compound A29 | 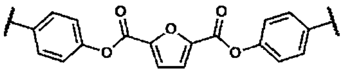 | 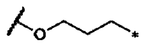 | 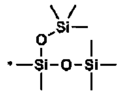 |
| Compound A30 | 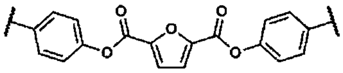 | 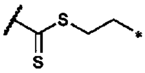 | 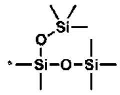 |

[Table 4]

| Table A4 | X-L-M-L-X | | |
|---|---|---|---|
| Compound number | M = | L= | X = |
| Compound A31 | 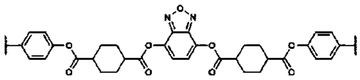 | 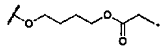 | 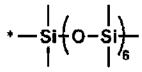 |
| Compound A32 | 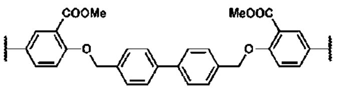 | 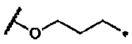 | 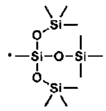 |
| Compound A33 | 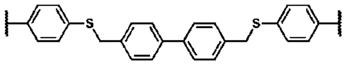 | 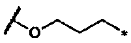 | 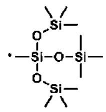 |
| Compound A34 | 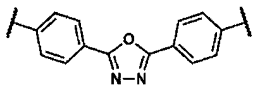 | 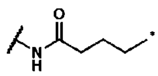 | 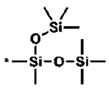 |
| Compound A35 | 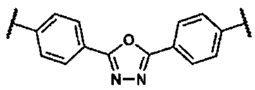 | 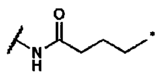 | 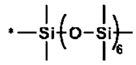 |
| Compound A36 | 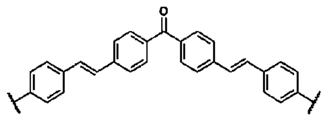 | 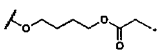 | 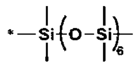 |
| Compound A37 | 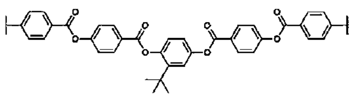 | 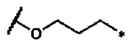 | 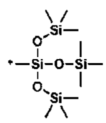 |

(continued)

| Table A4 | X-L-M-L-X | | |
|---|---|---|---|
| Compound number | M = | L= | X = |
| Compound A38 | 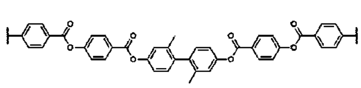 | 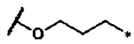 | 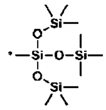 |
| Compound A39 | 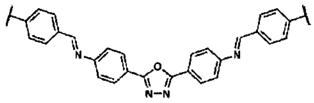 | 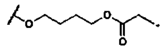 | 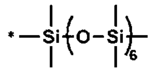 |
| Compound A40 | 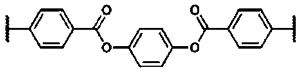 | 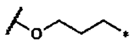 | 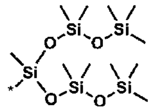 |
| Compound A41 | 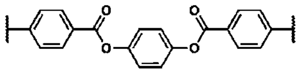 | 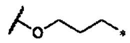 | 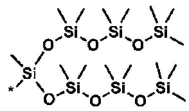 |

[Table 5]

| Table A5 | X-L-M-L-X | | |
|---|---|---|---|
| Compound number | M= | L= | X = |
| Compound A42 | 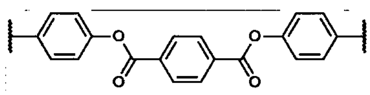 | 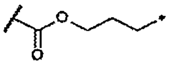 | 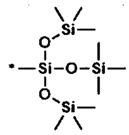 |
| Compound A43 | 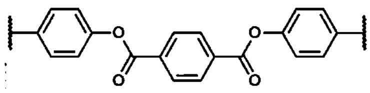 | 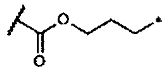 | 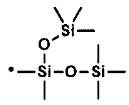 |
| Compound A44 | 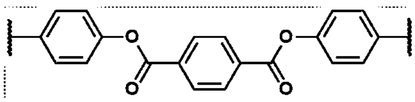 | 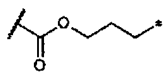 | 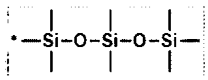 |
| Compound A45 | 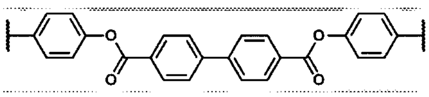 | 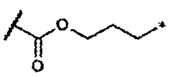 | 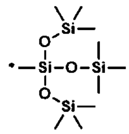 |

[Table 6]

| Table B1 | 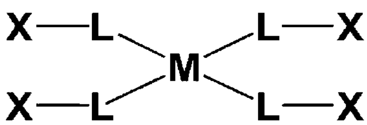 | | |
|---|---|---|---|
| Compound number | M = | L = | X = |
| Compound B1 | 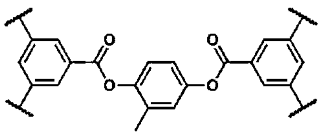 | 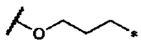 | 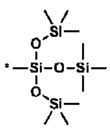 |

(continued)

| Table B1 | 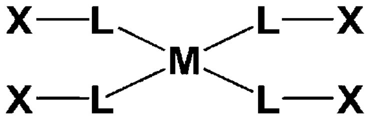 | | |
|---|---|---|---|
| Compound number | M = | L = | X = |
| Compound B2 | 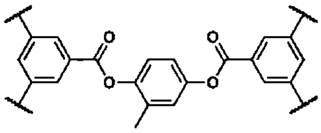 | 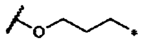 | 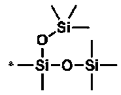 |
| Compound B3 | 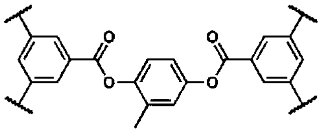 | 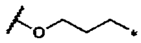 | 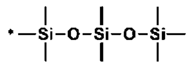 |
| Compound B4 | 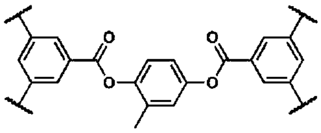 | 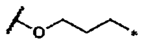 | 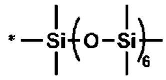 |
| Compound B5 | 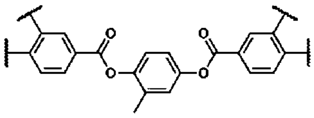 | 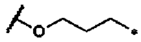 | 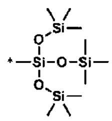 |
| Compound B6 | 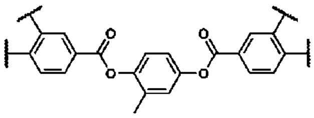 | 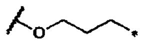 | 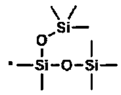 |
| Compound B7 | 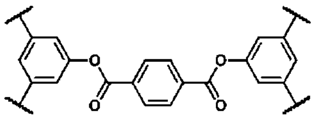 | 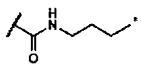 | 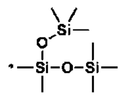 |
| Compound B8 | 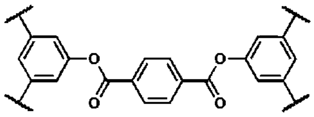 | 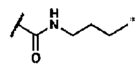 | 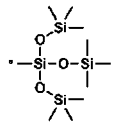 |

[Table 7]

| Table B2 | 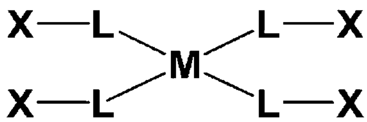 | | |
|---|---|---|---|
| Name | M = | L = | X = |
| Compound B9 | 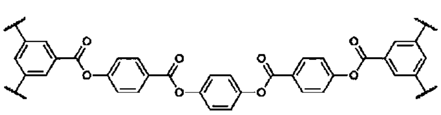 | 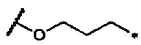 | 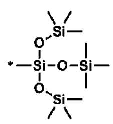 |
| Compound B10 | 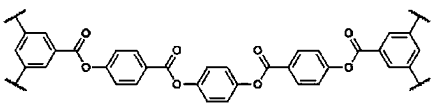 | 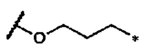 | 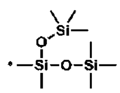 |

(continued)

| Table B2 | 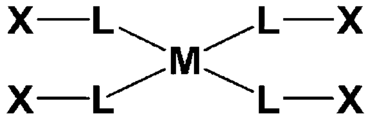 | | |
|---|---|---|---|
| Name | M = | L = | X = |
| Compound B11 | 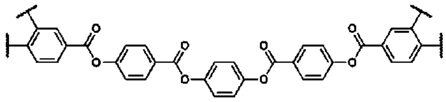 | 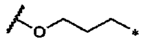 | 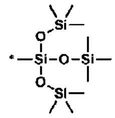 |
| Compound B12 | 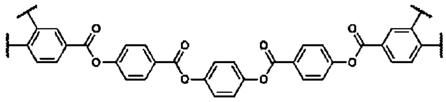 | 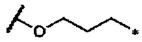 | 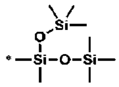 |
| Compound B13 | 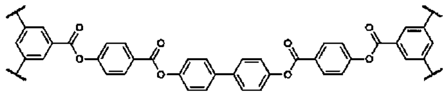 | 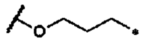 | 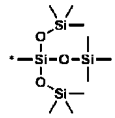 |
| Compound B14 | 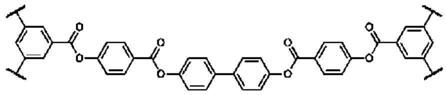 | 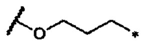 | 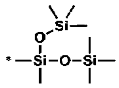 |
| Compound B15 | 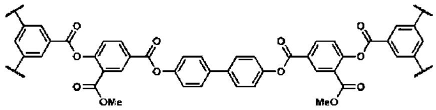 | 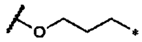 | 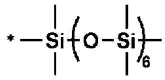 |
| Compound B16 | 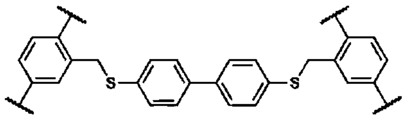 | 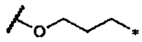 | 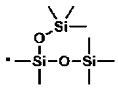 |

[Table 8]

| Table B3 | 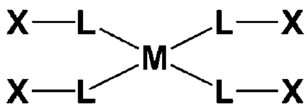 | | |
|---|---|---|---|
| Name | M = | L = | X = |
| Compound B17 | 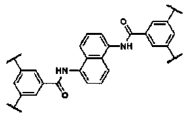 | 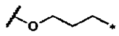 | 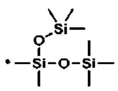 |
| Compound B18 | 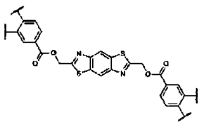 | 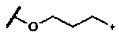 | 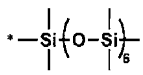 |
| Compound B19 | 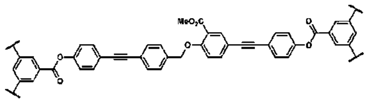 | 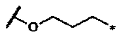 | 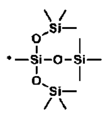 |
| Compound B20 | 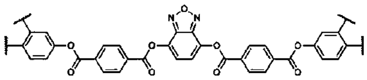 | 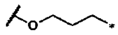 | 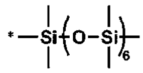 |

(continued)

| Table B3 | 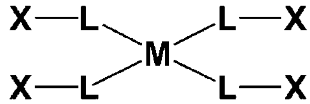 | | |
|---|---|---|---|
| Name | M = | L = | X = |
| Compound B21 | 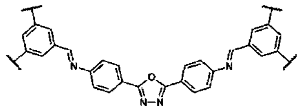 | 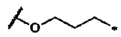 | 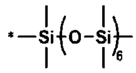 |
| Compound B22 | 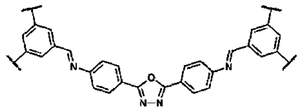 | 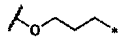 | 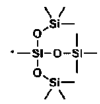 |
| Compound B23 | 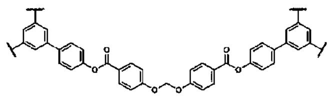 | 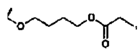 | 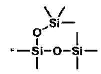 |
| Compound B24 | 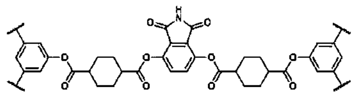 | 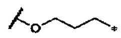 | 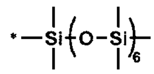 |
| Compound B25 | 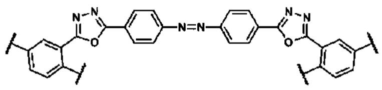 | 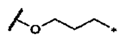 | 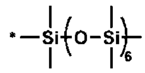 |
| Compound B26 | 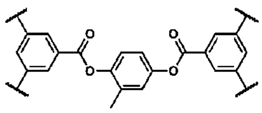 | 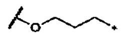 | 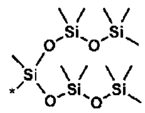 |

[Table 9]

| Table B4 | 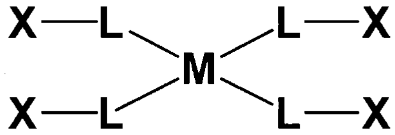 | | |
|---|---|---|---|
| Name | M = | L = | X = |
| Compound B27 | 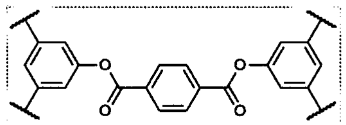 | 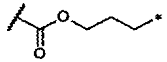 | 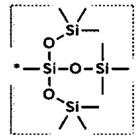 |
| Compound B28 | 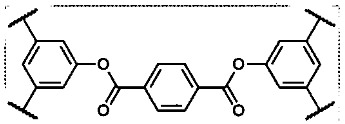 | 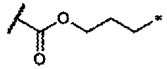 | 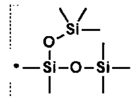 |
| Compound B29 | 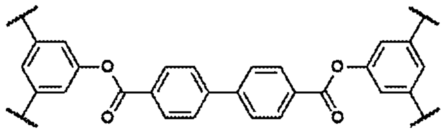 | 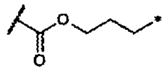 | 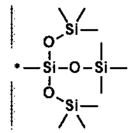 |
| Compound B30 | 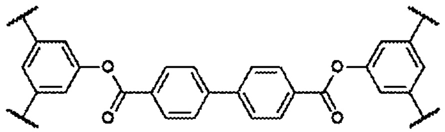 | 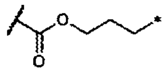 | 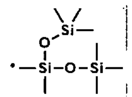 |
| Compound B31 | 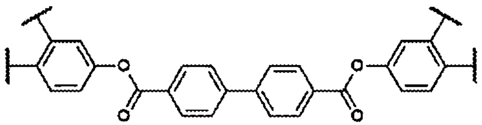 | 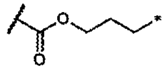 | 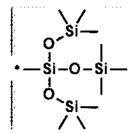 |
| Compound B32 | 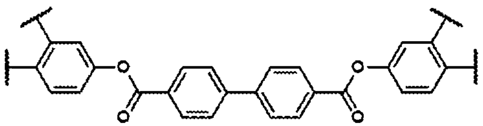 | 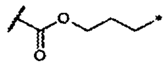 | 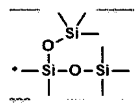 |

(continued)

| Table B4 | 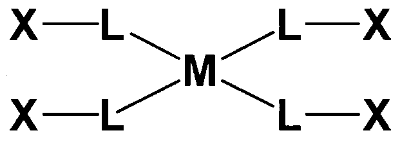 | | |
|---|---|---|---|
| Name | M = | L = | X = |
| Compound B33 | 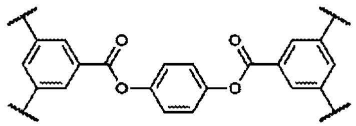 | 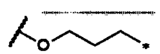 | 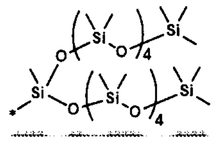 |

[Table 10]

| Table C1 | 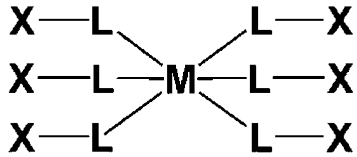 | | |
|---|---|---|---|
| Compound number | M = | L = | X = |
| Compound C1 | 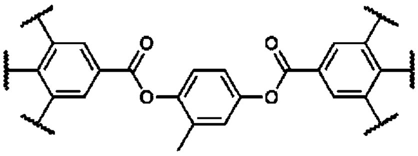 | 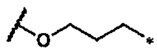 | 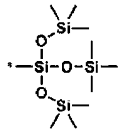 |
| Compound C2 | 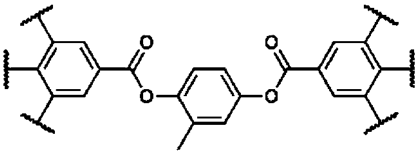 | 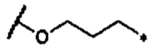 | 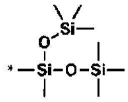 |
| Compound C3 | 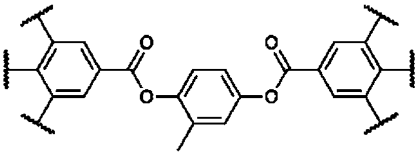 | 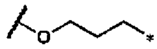 | 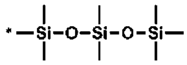 |
| Compound C4 | 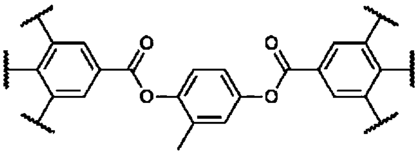 | 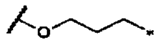 | 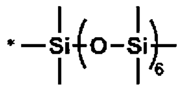 |
| Compound C5 | 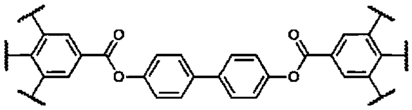 | 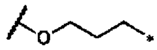 | 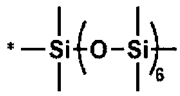 |
| Compound C6 | 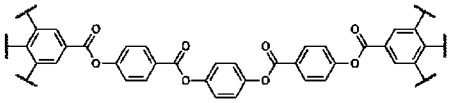 | 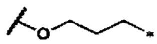 | 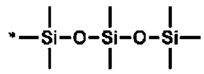 |

[Table 11]

| Compound number | M = | L = | X = |
|---|---|---|---|
| Compound C7 | 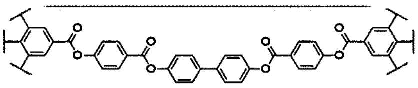 | 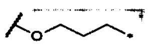 | 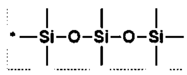 |
| Compound C8 | 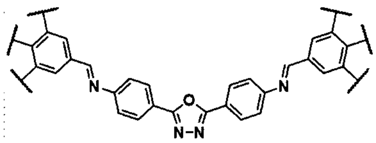 | 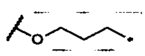 | 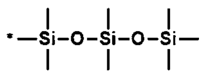 |
| Compound C9 | 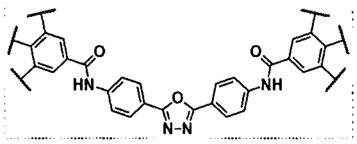 | 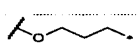 | 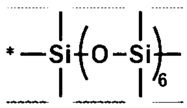 |

(continued)

| Compound number | M = | L = | X = |
|---|---|---|---|
| Compound C10 | 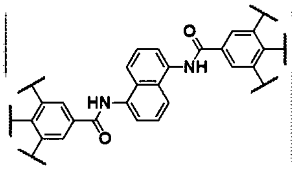 | 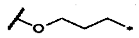 | 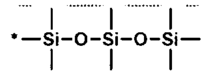 |
| Compound C11 | 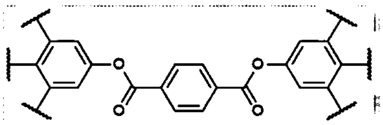 | 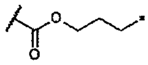 | 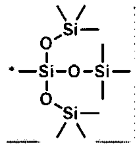 |
| Compound C12 | 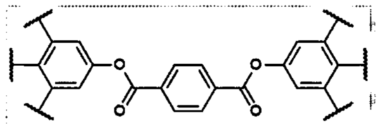 | 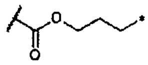 | 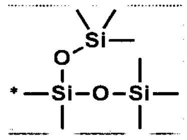 |
| Compound C13 | 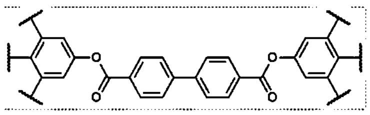 | 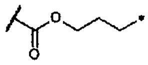 | 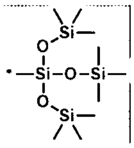 |
| Compound C14 | 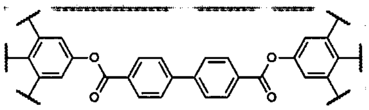 | 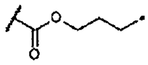 | 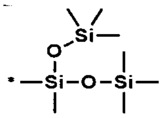 |

[Table 12]

| Table D1 | 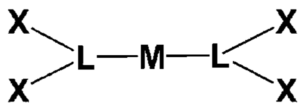 | | |
|---|---|---|---|
| Compound number | M = | L= | X = |
| Compound D 1 | 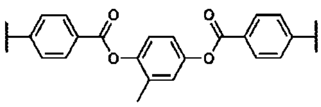 | 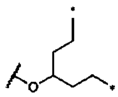 | 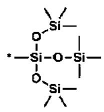 |
| Compound D2 | 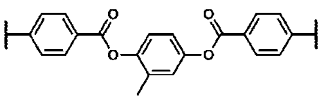 | 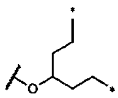 | 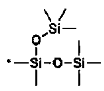 |
| Compound D3 | 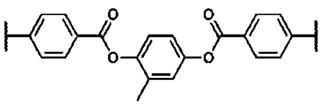 | 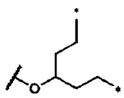 | 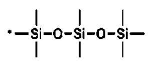 |
| Compound D4 | 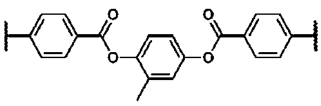 | 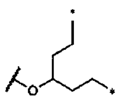 | 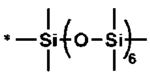 |
| Compound D5 | 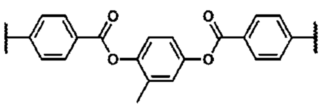 | 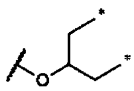 | 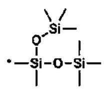 |

(continued)

| Table D1 | 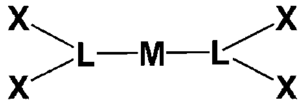 | | |
|---|---|---|---|
| Compound number | M = | L= | X = |
| Compound D6 | 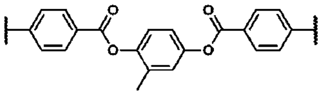 | 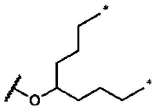 | 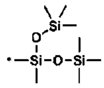 |
| Compound D7 | 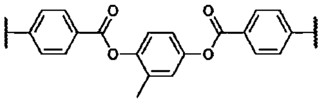 | 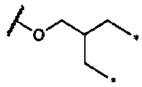 | 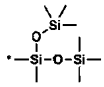 |
| Compound D8 | 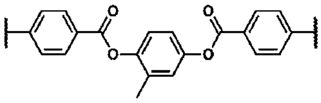 | 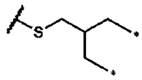 | 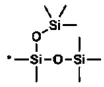 |

[Table 13]

| Table D2 | 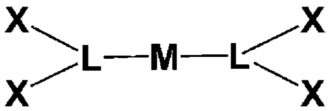 | | |
|---|---|---|---|
| Compound number | M = | L= | X = |
| Compound D9 | 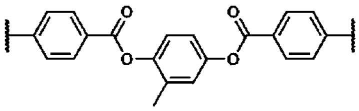 | 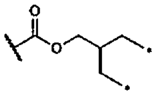 | 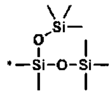 |
| Compound D10 | 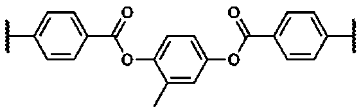 | 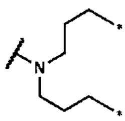 | 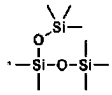 |
| Compound D11 | 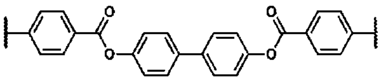 | 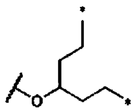 | 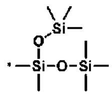 |
| Compound D12 | 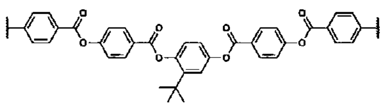 | 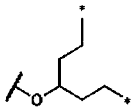 | 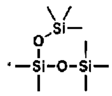 |
| Compound D13 | 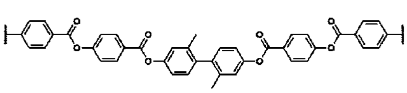 | 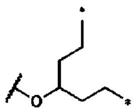 | 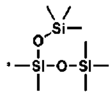 |
| Compound D14 | 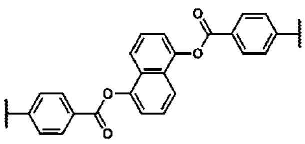 | 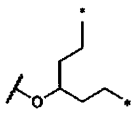 | 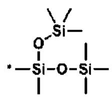 |

(continued)

| Table D2 | 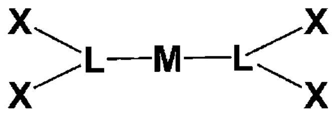 | | |
|---|---|---|---|
| Compound number | M = | L= | X = |
| Compound D15 | 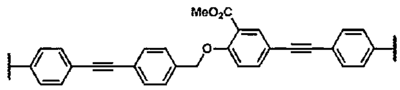 | 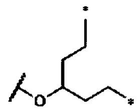 | 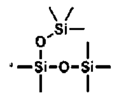 |

[Table 14]

| Table E1 | |
|---|---|
| Compound E1 | 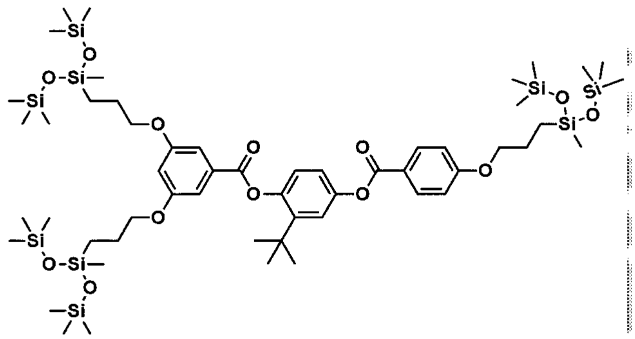 |
| Compound E2 | 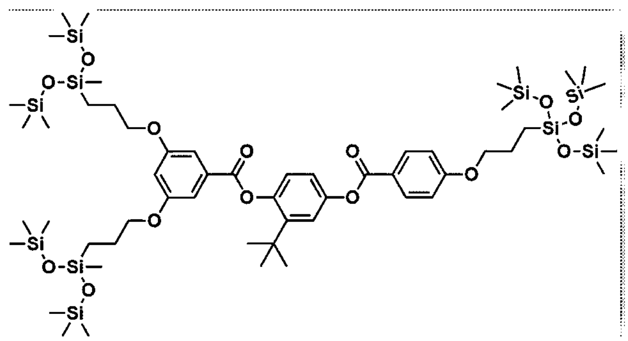 |
| Compound E3 | 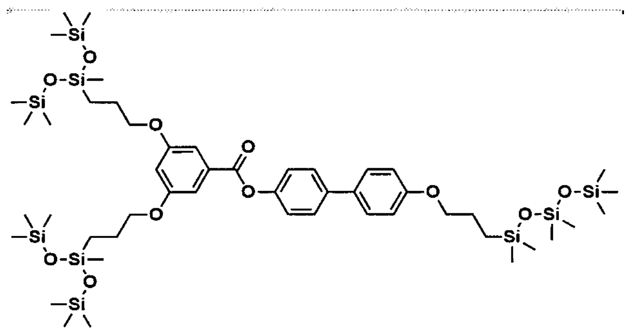 |

(continued)

| Table E1 | |
|---|---|
| Compound E4 | 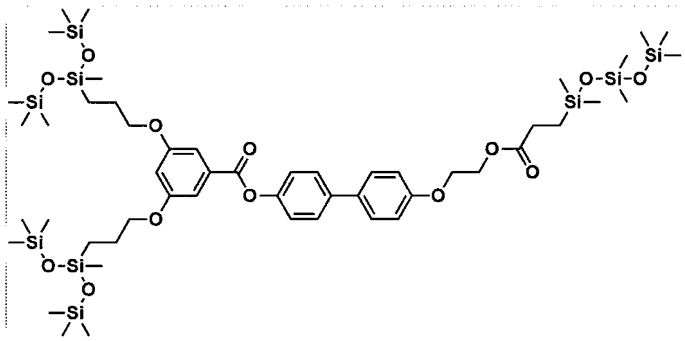 |

[Table 15]

| Table E2 | |
|---|---|
| Compound E5 | 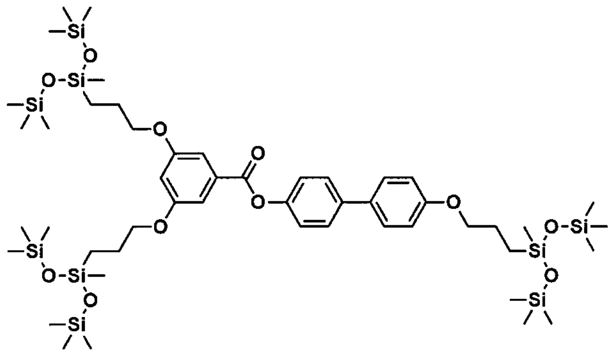 |
| Compound E6 | 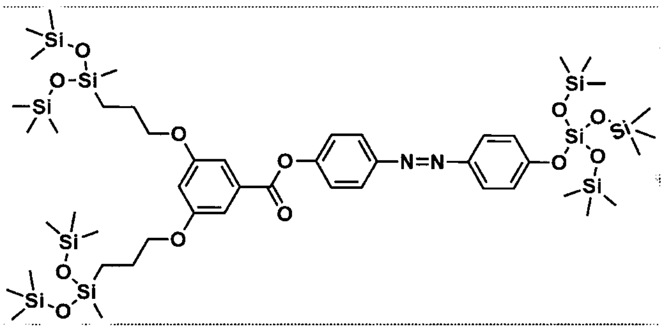 |
| Compound E7 | 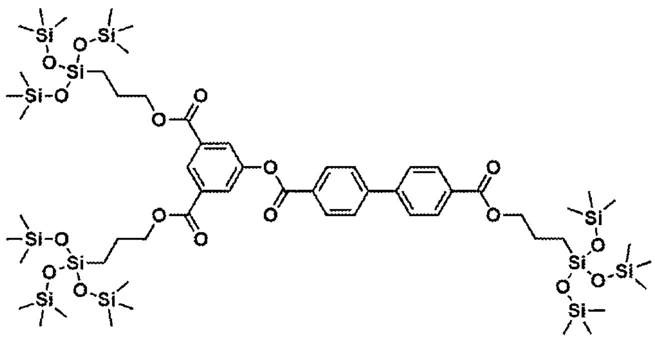 |

(continued)

| Table E2 | |
|---|---|
| Compound E8 | 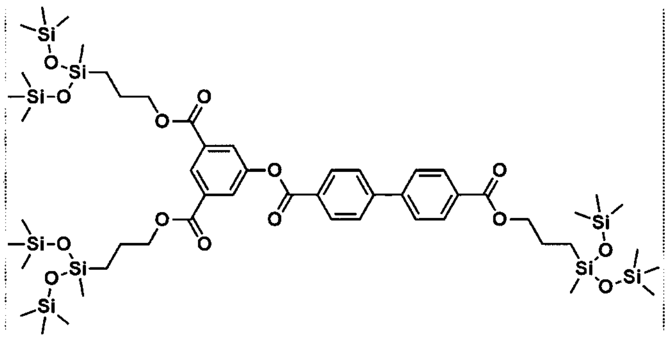 |

A content of the specific compound in the liquid crystal composition is preferably 0.01% to 5.00% by mass, more preferably 0.03% to 3.00% by mass, and still more preferably 0.05% to 1.00% by mass with respect to the total mass of solid contents of the liquid crystal composition.
The specific compound may be used alone, or in combination of two or more kinds thereof.
In a case where two or more kinds of the specific compounds are used in combination, the total content thereof is preferably within the above-described numerical range.
Regarding the specific compound, in an air interface of layers, a tilt angle of the molecules of the liquid crystal compound can be reduced, or the liquid crystal compound can be substantially horizontally aligned.
In the present specification, "horizontal alignment" means that the molecular axis of the liquid crystal compound (in a case where the liquid crystal compound is a rod-like liquid crystal compound, corresponding to a major axis of the liquid crystal compound) and the film surface are parallel to each other, but it is not required to be strictly parallel. In the present specification, "horizontal alignment" means an alignment in which the tilt angle formed with the film surface is less than 20 degrees. In a case where the liquid crystal compound is horizontally aligned in a vicinity of the air interface, orientation defect hardly occurs, and as a result, transparency in the visible light region is high. On the other hand, in a case where the molecules of the liquid crystal compound are aligned at a large tilt angle, for example, in a case of cholesteric phase, since a spiral axis thereof deviates from a normal line of the film surface, reflectivity may decrease, fingerprint patterns may occur, or haze may increase or diffractivity may be exhibited, which are not preferable.

[Liquid crystal compound]

The liquid crystal composition contains a liquid crystal compound.
The liquid crystal compound means a compound exhibiting liquid crystallinity, which is a compound other than the specific compound.
For the compound exhibiting liquid crystallinity, it is intended that the compound has properties of expressing a mesophase between a crystalline phase (low temperature side) and an isotropic phase (high temperature side) in a case of changing a temperature. As a specific observation method, optical anisotropy and fluidity derived from a liquid crystalline phase can be confirmed by performing an observation using a polarizing microscope while heating the compound or lowering a temperature of the compound with a hot stage system FP90, manufactured by METTLER TOLEDO, or the like.
The liquid crystal compound is not particularly limited as long as it has liquid crystallinity, and may be a rod-like liquid crystal compound or a disk-like liquid crystal compound. Examples thereof include a rod-like nematic liquid crystal compound. Examples of the rod-like nematic liquid crystal compound include azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolans, and alkenylcyclohexylbenzonitriles. High-molecular-weight liquid crystal compounds can also be used as well as low-molecular-weight liquid crystal compounds.
The liquid crystal compound may be polymerizable or non-polymerizable, but is preferably polymerizable.
From the viewpoint that the liquid crystal phase can be fixed, as the liquid crystal compound, a liquid crystal compound having one or more polymerizable groups is preferable, a liquid crystal compound having two or more polymerizable groups is more preferable, and a liquid crystal compound having two polymerizable groups is still more preferable.
A rod-like liquid crystal compound having no polymerizable group is described in various documents (for example, Y. Goto et. al., Mol. Cryst. Liq. Cryst. 1995, Vol. 260, pp. 23 to 28).

Meanwhile, a polymerizable rod-like liquid crystal compound is obtained by introducing a polymerizable group into the rod-like liquid crystal compound. Examples of the polymerizable group include an unsaturated bond-containing polymerizable group, an epoxy group, and an aziridinyl group; and among these, an ethylenically unsaturated bond group is preferable. The polymerizable group can be introduced into the molecule of the rod-like liquid crystal compound by various methods. The number of polymerizable groups in the polymerizable rod-like liquid crystal compound is preferably 1 to 6, more preferably 1 to 3, and still more preferably 2. Two or more kinds of polymerizable rod-like liquid crystal compounds may be used in combination. In a case where two or more kinds of polymerizable rod-like liquid crystal compounds are used in combination, an alignment temperature can be decreased.

As the liquid crystal compound, a compound represented by Formula (2) (hereinafter, also referred to as "specific liquid crystal compound") is preferable.

$$P\text{-}L\text{-}T\text{-}(Q\text{-}T)_{n2}\text{-}L\text{-}P \qquad (2)$$

In Formula (2), P's each independently represent a hydrogen atom or a substituent S2.

In Formula (2), it is preferable that at least one of two P's represents a polymerizable group, and it is more preferable that both of two P's represent a polymerizable group.

Hereinafter, the substituent S2 will be described.

(Substituent S2)

The substituent S2 is a group selected from the group consisting of a halogen atom, an alkyl group, a cycloalkyl group, an alkynyl group, an aryl group, a heterocyclic group, a cyano group, a hydroxy group, a nitro group, a carboxyl group, an alkoxy group, an aryloxy group, a silyloxy group, a heterocyclic oxy group, an acyloxy group, a carbamoyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo or heterocyclic azo group, an imide group, a phosphino group, a phosphinyl group, a phosphinyloxy group, a phosphinylamino group, a silyl group, and a polymerizable group.

Each group other than the polymerizable group, described as the substituent S2, is the same as each group described as the substituent S1, and suitable aspects thereof are also the same.

Among these, an alkyl group is preferable as the substituent S2 represented by P.

In the above-described substituent S2, examples of the polymerizable group include a known polymerizable group capable of chain polymerization (a chain-polymerizable group); and from the viewpoint of reactivity, a functional group capable of addition polymerization is preferable, and an ethylenically unsaturated bond group is more preferable.

Suitable specific examples of the polymerizable group include an alkenyl group, an alkynyl group, a cycloalkenyl group, and groups represented by Formulae (P-1) to (P-22). In Formulae (P-1) to (P-22), * represents a bonding position. In addition, Ra represents a hydrogen atom or a methyl group. In addition, Me represents a methyl group, and Et represents an ethyl group. In addition, the hydrogen atom in Formulae (P-1) to (P-22) may be substituted with the group exemplified as the substituent S2.

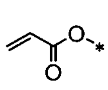
(P-1)

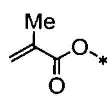
(P-2)

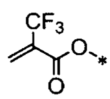
(P-3)

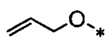
(P-4)

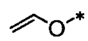
(P-5)

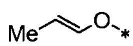
(P-6)

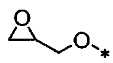
(P-7)

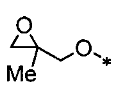
(P-8)

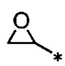
(P-9)

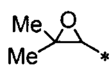
(P-10)

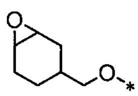
(P-11)

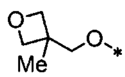
(P-12)

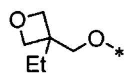
(P-13)

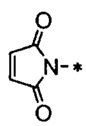
(P-14)

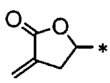
(P-15)

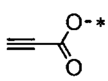
(P-16)

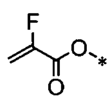
(P-17)

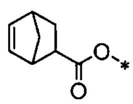
(P-18)

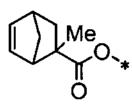
(P-19)

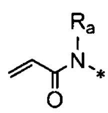
(P-20)

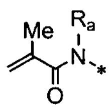
(P-21)

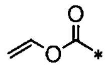

(P-22)

Among these, as the polymerizable group, from the viewpoint that the effect of the present invention is more excellent, it is preferable to represent an acryloyloxy group (corresponding to Formula (P-1)), a methacryloyloxy group (corresponding to Formula (P-2)), an epoxy group (corresponding to Formula (P-9)), a vinyl ether group (corresponding to Formula (P-5)), or a vinyl ester group (corresponding to Formula (P-22)); and it is more preferable to represent an acryloyloxy group or a methacryloyloxy group.

In Formula (2), L's each independently represent a single bond or an alkylene group in which at least one $-CH_2-$ may be replaced with -NH-, -O-, -S-, -CO-, -SO-, or $-SO_2-$.

The above-described alkylene group is preferably linear or branched.

The total number of carbon atoms in the alkylene group represented by L is preferably 1 to 12, more preferably 1 to 10, and still more preferably 1 to 6.

Among these, as L, it is preferable to represent an alkylene group having 1 to 10 carbon atoms in total, in which at least one $-CH_2-$ may be replaced with -O- or -CO-; and it is more preferable to represent an alkylene group having 1 to 6 carbon atoms in total, in which at least one $-CH_2-$ may be replaced with -O- or -CO-.

The above-described alkylene group represented by L may have a substituent (preferably, the above-described substituent S1), but preferably does not have a substituent.

In Formula (2), T's each independently represent a single bond, -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, -CH=CH-COO-, -CH=CH-OCO-, $-COO-CH_2CH_2-$, $-OCO-CH_2CH_2-$, $-COO-CH_2-$, $-OCO-CH_2-$, $-COO-NH_2-$, -CH=CH-, -N=N-, -CH=N-N=CH-, -CH=N-, -N=CH-, -CF=CF-, -C=C-, -C=C-C=C-, $-OCH_2CH_2O-$, or $-SCH_2CH_2S-$.

Among these, from the viewpoint that the effect of the present invention is more excellent, T is preferably -O-, $-OCH_2-$, $-CH_2CH_2-$, -CO-, -COO-, -CO-NH-, -CH=CH-, -N=N-, -CH=N-, -N=CH-, -C=C-, or $-OCH_2CH_2O-$; and more preferably $-OCH_2-$, -COO-, -CO-NH-, -CH=CH-, -N=N-, or -C≡C-.

In Formula (2), Q represents a divalent aromatic ring group or a divalent alicyclic ring group, which may have a substituent.

The divalent aromatic ring group may be a divalent aromatic hydrocarbon ring group or a divalent aromatic heterocyclic group. In addition, the divalent aromatic ring group may be monocyclic or polycyclic.

The number of carbon atoms in an aromatic hydrocarbon ring constituting the divalent aromatic hydrocarbon ring group is preferably 6 to 10. Specific examples of the aromatic hydrocarbon ring include a benzene ring and a naphthalene ring; a benzene ring is more preferable.

The number of ring members in an aromatic heterocyclic ring constituting the divalent aromatic heterocyclic group is preferably 5 to 10 and more preferably 5 or 6. Examples of a heteroatom included in the aromatic heterocyclic ring include a nitrogen atom, an oxygen atom, and a sulfur atom. The number of heteroatoms included in the aromatic heterocyclic ring is not particularly limited, but for example, it is preferably 1 to 4 and more preferably 1 or 2. Specific examples of the aromatic heterocyclic ring include a pyridine ring, a pyridazine ring, a pyrimidine ring, a pyrazine ring, a triazine ring, a thiophene ring, a thiazole ring, and an imidazole ring.

The divalent alicyclic ring group may be a divalent aliphatic hydrocarbon ring group or a divalent aliphatic heterocyclic group. In addition, the divalent alicyclic group may be monocyclic or polycyclic.

The number of ring members in an aliphatic hydrocarbon ring constituting the divalent aliphatic hydrocarbon ring group is preferably 5 to 12, more preferably 5 to 10, and still more preferably 5 or 6. Specific examples of the aliphatic hydrocarbon ring include a cyclopentane ring, a cyclohexane ring, a cycloheptane ring, a cyclooctane ring, a norbornene ring, and an adamantane ring. Among these, a cyclopentane ring or a cyclohexane ring is preferable.

Examples of a heteroatom included in an aliphatic heterocyclic ring constituting the divalent aliphatic heterocyclic group include a nitrogen atom, an oxygen atom, and a sulfur atom. The number of ring members in the aliphatic heterocyclic ring is not particularly limited, but is preferably 5 to 10. Specific examples of the aliphatic heterocyclic ring include an oxolane ring, an oxane ring, a piperidine ring, and a piperazine ring. In the aliphatic heterocyclic ring, $-CH_2-$ constituting the ring may be replaced with -CO-, and examples thereof include a phthalimide ring.

In addition, a hydrogen atom in the above-described divalent aromatic ring group and divalent alicyclic ring group may be substituted with another substituent such as an alkyl group, an alkoxy group, a cyano group, a nitro group, and a halogen atom.

Among these, as the substituent, from the viewpoint that solubility of the specific liquid crystal compound is further improved, a fluorine atom, a chlorine atom, a fluoroalkyl group, an alkoxy group, or an alkyl group is preferable, and a fluoroalkyl group, an alkoxy group, or an alkyl group is more preferable.

The number of carbon atoms in the fluoroalkyl group and alkyl group, and the number of carbon atoms in an alkyl

group of the alkoxy group are not particularly limited, but are preferably 1 to 10, more preferably 1 to 5, still more preferably 1 to 3, and particularly preferably 1.

The fluoroalkyl group is a group in which at least one hydrogen atom in the alkyl group is replaced with a fluorine atom, and it is preferable that all hydrogen atoms are replaced with fluorine atoms (so-called perfluoroalkyl group is preferable).

As Q, a divalent aromatic hydrocarbon ring group which may have a substituent is preferable, and a phenylene group bonded at the 1-position and the 4-position is more preferable.

In addition, an aspect in which one of n2 pieces of Q's in Formula (2) is any aromatic hydrocarbon ring group selected from the group consisting of groups represented by Formulae (Ar-1) to (Ar-5) is also exemplified.

In a case where one of n2 pieces of Q's include any aromatic hydrocarbon ring group selected from the group consisting of the groups represented by Formulae (Ar-1) to (Ar-5), an aspect in which n2 represents 3 and Q located at the center of three Q's represents any aromatic hydrocarbon ring selected from the group consisting of the groups represented by Formulae (Ar-1) to (Ar-5) or an aspect in which n2 represents 5 and Q located at the center of five Q's represents any aromatic hydrocarbon ring selected from the group consisting of the groups represented by Formulae (Ar-1) to (Ar-5) is preferable.

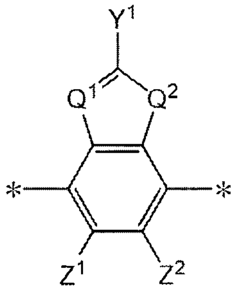

(Ar-1)

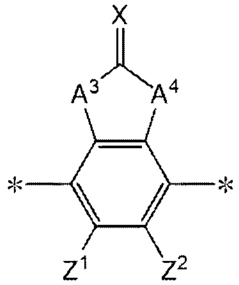

(Ar-2)

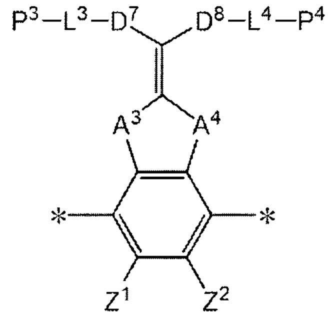

(Ar-3)

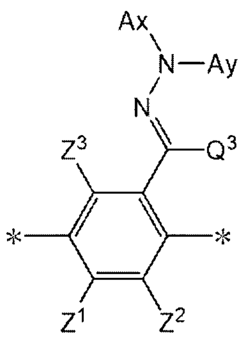

(Ar-4)

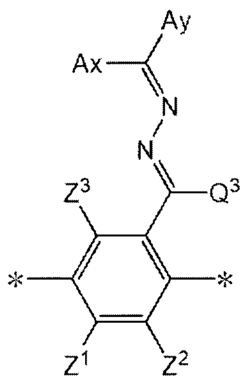

(Ar-5)

In Formula (Ar-1), $Q^1$ represents N or CH.

$Q^2$ represents -S-, -O-, or -N($R^6$)-.

$R^6$ represents a hydrogen atom or an alkyl group having 1 to 6 carbon atoms.

Examples of the alkyl group having 1 to 6 carbon atoms, represented by $R^6$, include a methyl group, an ethyl group, a propyl group, an isopropyl group, a n-butyl group, an isobutyl group, a sec-butyl group, a tert-butyl group, a n-pentyl group, and a n-hexyl group.

$Y^1$ represents an aromatic hydrocarbon group having 6 to 12 carbon atoms, which may have a substituent, an aromatic heterocyclic group having 3 to 12 carbon atoms, which may have a substituent, or an alicyclic hydrocarbon group having 6 to 20 carbon atoms, which may have a substituent, where one or more of $-CH_2-$'s constituting the alicyclic hydrocarbon group may be replaced with -O-, -S-, or NH-.

Examples of the aromatic hydrocarbon group having 6 to 12 carbon atoms, represented by $Y^1$, include a phenyl group, a 2,6-diethylphenyl group, and a naphthyl group.

Examples of the aromatic heterocyclic group having 3 to 12 carbon atoms, represented by $Y^1$, include a thienyl group, a thiazolyl group, a benzothiazolyl group, a benzofuryl group, a furyl group, and a pyridyl group.

Examples of the alicyclic hydrocarbon group having 6 to 20 carbon atoms, represented by $Y^1$, include a

cyclohexylene group, a cyclopentylene group, a norbornylene group, and an adamantylene group.

In addition, examples of the substituent which may be included in $Y^1$ include the above-described substituent S2.

In addition, in Formulae (Ar-1) to (Ar-5), $Z^1$, $Z^2$, and $Z^3$ each independently represent a hydrogen atom, a monovalent aliphatic hydrocarbon group having 1 to 20 carbon atoms, a monovalent alicyclic hydrocarbon group having 3 to 20 carbon atoms, a monovalent aromatic hydrocarbon group having 6 to 20 carbon atoms, a monovalent aromatic heterocyclic group having 6 to 20 carbon atoms, a halogen atom, a cyano group, a nitro group, $-OR^7$, $-NR^8R^9$, $-SR^{10}$, $-COOR^{11}$, or $-COR^{12}$.

$R^7$ to $R^{12}$ each independently represent a hydrogen atom or an alkyl group having 1 to 6 carbon atoms.

In addition, $Z^1$ and $Z^2$ may be bonded to each other to form an aromatic ring.

As the monovalent aliphatic hydrocarbon group having 1 to 20 carbon atoms, represented by $Z^1$, $Z^2$, and $Z^3$, an alkyl group having 1 to 15 carbon atoms is preferable, and an alkyl group having 1 to 8 carbon atoms is more preferable.

Examples of the monovalent aliphatic hydrocarbon group having 1 to 20 carbon atoms, represented by $Z^1$, $Z^2$, and $Z^3$, include a methyl group, an ethyl group, an isopropyl group, a tert-pentyl group (1,1-dimethylpropyl group), a tert-butyl group, and a 1,1-dimethyl-3,3-dimethyl-butyl group.

Examples of the monovalent alicyclic hydrocarbon group having 3 to 20 carbon atoms, represented by $Z^1$, $Z^2$, and $Z^3$, include monocyclic saturated hydrocarbon groups such as a cyclopropyl group, a cyclobutyl group, a cyclopentyl group, a cyclohexyl group, a cycloheptyl group, a cyclooctyl group, a cyclodecyl group, a methylcyclohexyl group, and an ethylcyclohexyl group; monocyclic unsaturated hydrocarbon groups such as a cyclobutenyl group, a cyclopentenyl group, a cyclohexenyl group, a cycloheptenyl group, a cyclooctenyl group, a cyclodecenyl group, a cyclopentadienyl group, a cyclohexadienyl group, a cyclooctadienyl group, and a cyclodecadiene group; and polycyclic saturated hydrocarbon groups such as a bicyclo[2.2.1]heptyl group, a bicyclo[2.2.2]octyl group, a tricyclo[$5.2.1.0^{2,6}$]decyl group, a tricyclo[$3.3.1.1^{3,7}$]decyl group, a tetracyclo[$6.2.1.1^{3,6}.0^{2,7}$]dodecyl group, and an adamantyl group.

As the monovalent aromatic hydrocarbon group having 6 to 20 carbon atoms, represented by $Z^1$, $Z^2$, and $Z^3$, an aryl group having 6 to 12 carbon atoms (particularly, a phenyl group) is preferable. Examples of the monovalent aromatic hydrocarbon group having 6 to 20 carbon atoms, represented by $Z^1$, $Z^2$, and $Z^3$, include a phenyl group, a 2,6-diethylphenyl group, a naphthyl group, and a biphenyl group.

Examples of the monovalent aromatic heterocyclic group having 6 to 20 carbon atoms, represented by $Z^1$, $Z^2$, and $Z^3$, include a 4-pyridyl group, a 2-furyl group, a 2-thienyl group, a 2-pyrimidinyl group, and a 2-benzothiazolyl group.

Examples of the halogen atom represented by $Z^1$, $Z^2$, and $Z^3$ include a fluorine atom, a chlorine atom, a bromine atom, and an iodine atom.

Examples of the alkyl group having 1 to 6 carbon atoms, represented by $R^7$ to $R^{12}$, include a methyl group, an ethyl group, a propyl group, an isopropyl group, a n-butyl group, an isobutyl group, a sec-butyl group, a tert-butyl group, a n-pentyl group, and a n-hexyl group.

In Formulae (Ar-2) and (Ar-3), $A^3$ and $A^4$ each independently represent a group selected from the group consisting of -O-, $-N(R^{13})-$, -S-, and -CO-.

$R^{13}$ represents a hydrogen atom or a substituent.

Examples of the substituent represented by $R^{13}$ include the above-described substituent S2.

In Formula (Ar-2), X represents a hydrogen atom or a non-metal atom of Groups 14 to 16 to which a substituent may be bonded.

Examples of the non-metal atom of Groups 14 to 16, represented by X, include an oxygen atom, a sulfur atom, a nitrogen atom to which a hydrogen atom or a substituent is bonded [$=N-R^{N1}$, $R^{N1}$ represents a hydrogen atom or a substituent], and a carbon atom to which a hydrogen atom or a substituent is bonded [$=C-(R^{C1})_2$, $R^{C1}$ represents a hydrogen atom or a substituent].

Specific examples of the substituent include an alkyl group, an alkoxy group, an alkyl-substituted alkoxy group, a cyclic alkyl group, an aryl group (for example, a phenyl group, a naphthyl group, and the like), a cyano group, an amino group, a nitro group, an alkylcarbonyl group, a sulfo group, and a hydroxyl group.

In Formula (Ar-3), $D^7$ and $D^8$ each independently represent a single bond, -CO-, -O-, -S-, -C(=S)-, $-CR^1R^2-$, $-CR^3=CR^4-$, $-NR^5-$, or a divalent linking group consisting of a combination of two or more of these groups.

$R^1$ to $R^5$ each independently represent a hydrogen atom, a fluorine atom, or an alkyl group having 1 to 12 carbon atoms.

Examples of the divalent linking groups represented by $D^7$ and $D^8$ include -CO-, -O-, -CO-O-, -CSO-, $-CR^1R^2-$, $-CR^1R^2-CR^1R^2-$, $-O-CR^1R^2-$, $-CR^1R^2-O-CR^1R^2-$, $-CO-O-CR^1R^2-$, $-O-CO-CR^1R^2-$, $-CR^1R^2-O-CO-CR^1R^2-$, $-CR^1R^2-CO-O-CR^1R^2-$, $-NR^5-CR^1R^2-$, and $-CO-NR^5-$; and -CO-, -O-, or -CO-O- is preferable.

In Formula (Ar-3), $L^3$ and $L^4$ each independently represent a single bond, a chain-like (linear or branched) alkylene group having 1 to 14 carbon atoms, or a divalent linking group in which one or more of $-CH_2-$'s constituting the chain-like (linear or branched) alkylene group having 1 to 14 carbon atoms is replaced with -O-, -S-, -NH-, $-N(R^{14})-$, or -CO-.

$R^{14}$ represents a substituent. Examples of the substituent include the above-described substituent S2.

In Formula (Ar-3), $P^3$ and $P^4$ each independently represent a monovalent organic group. However, at least one of

$P^3$ or $P^4$ represents a polymerizable group.

Examples of the monovalent organic group represented by $P^3$ and $P^4$ include a group corresponding to the organic group exemplified as the substituent S2 (preferably, an alkyl group, an aryl group, or a heteroaryl group) and a polymerizable group (preferably, the monovalent group represented by Formulae (P-1) to (P-22) described above).

In Formulae (Ar-4) and (Ar-5), Ax represents an organic group having 2 to 30 carbon atoms, which has at least one aromatic ring selected from the group consisting of an aromatic hydrocarbon ring and an aromatic heterocyclic ring.

In addition, Ay represents a hydrogen atom, an alkyl group having 1 to 12 carbon atoms, which may have a substituent, or an organic group having 2 to 30 carbon atoms which has at least one aromatic ring selected from the group consisting of an aromatic hydrocarbon ring and an aromatic heterocyclic ring. At least one $-CH_2-$ in the alkyl group of Ay may be replaced with -O-, -S-, -CO-, -SO-, $-SO_2-$, or -NH-.

Here, the aromatic rings in Ax and Ay may have a substituent, and Ax and Ay may be bonded to each other to form a ring.

In addition, $Q^3$ represents a hydrogen atom or an alkyl group having 1 to 6 carbon atoms, which may have a substituent.

Examples of Ax and Ay include those described in paragraphs [0039] to [0095] of WO2014/010325A.

In addition, examples of the alkyl group having 1 to 20 carbon atoms, represented by $Q^3$, include a methyl group, an ethyl group, a propyl group, an isopropyl group, a n-butyl group, an isobutyl group, a sec-butyl group, a tert-butyl group, a n-pentyl group, and a n-hexyl group. Examples of the substituent include the above-described substituent S2.

In a case where n2 is an integer of 2 or more, a plurality of Q's in the formula may be the same or different from each other.

In Formula (2), n2 represents an integer of 1 or more.

Among these, n2 is preferably 1 to 6, more preferably 2 to 5, and still more preferably 3 to 4.

It is preferable that the liquid crystal compound (preferably, the specific liquid crystal compound) includes a tolan structural moiety in the molecule. The tolan structural moiety refers to a structural moiety represented by *-Ph-C≡C-Ph-* (here, Ph represents a benzene ring group which may have a substituent, and * represents a bonding position).

In a case where the liquid crystal compound (preferably, the specific liquid crystal compound) includes the tolan structural moiety in the molecule, the optically anisotropic layer formed of the liquid crystal compound (preferably, the specific liquid crystal compound) is likely to obtain diffracted light with a large diffraction angle and a high diffraction efficiency.

In addition, in the related art, the optically anisotropic layer formed of the composition containing the liquid crystal compound including the tolan structural moiety may have a problem in laminatability. As a result of the studies of the present inventors, it has been found that, by using the specific compound in combination with the liquid crystal compound including the tolan structural moiety (in other words, in a case where the composition contains the liquid crystal compound including the tolan structural moiety and the specific compound), an optically anisotropic layer having excellent anisotropy and excellent laminatability can be formed.

In addition, it is also preferable that the liquid crystal compound (preferably, the specific liquid crystal compound) is a polymerizable liquid crystal compound having reverse wavelength dispersibility.

In the present specification, the "polymerizable liquid crystal compound having reverse wavelength dispersibility" means a property that, in a case where an in-plane retardation (Re) value in a visible light region is measured for an optically anisotropic layer produced using such a liquid crystal compound, the Re value increases as a measurement wavelength increases.

In addition, as the liquid crystal compound, compounds described in "Makromol. Chem., vol. 190, p. 2255 (1989), Advanced Materials, vol. 5, p. 107 (1993)", US4683327A, US5622648A, US5770107A, WO95/022586A, WO95/024455A, WO97/000600A, WO98/023580A, WO98/052905A, JP1989-272551A (JP-H1-272551A), JP1994-016616A (JP-H6-016616A), JP1995-110469A (JP-H7-110469A), JP1999-080081A (JP-H11-080081A), JP2001-328973A, and the like can also be preferably used.

In addition, as the rod-like liquid crystal compound, for example, compounds described in JP1999-513019A (JP-H11-513019A) and JP2007-279688A can also be preferably used.

Two or more kinds of liquid crystal compounds may be used in combination. In a case where two or more kinds of liquid crystal compounds are used in combination, an alignment temperature can be decreased.

In addition, as a liquid crystal compound other than the above, a cyclic organopolysiloxane compound having a cholesteric phase, as described in JP1982-165480A (JP-S57-165480A), or the like can also be used.

In addition, the liquid crystal compound may be a polymer liquid crystal compound. As the polymer liquid crystal compound, a polymer in which a mesogen group exhibiting liquid crystal are introduced into the main chain, the side chain, or both main chain and side chain, a polymeric cholesteric liquid crystal in which a cholesteryl group is introduced into the side chain, a liquid crystalline polymer as described in JP1997-133810A (JP-H9-133810A), a liquid crystalline polymer as described in JP1999-293252A (JP-H11-293252A), and the like can be used.

As the disk-like liquid crystal compound, for example, compounds described in JP2007-108732A and

JP2010-244038A can also be preferably used.

From the viewpoint that anisotropy is excellent in a case of being used as the optically anisotropic layer and the viewpoint that diffracted light with a large diffraction angle and a high diffraction efficiency can be obtained in a case of being used as the diffraction element, a birefringence index Δn of the liquid crystal compound is preferably 0.15 or more, more preferably 0.20 or more, and still more preferably 0.25 or more. The upper limit thereof is not particularly limited, but is usually 0.50 or less.

In addition, specific examples of the polymerizable liquid crystal compound having a large refractive index anisotropy include compounds described in JP2009-102245A, JP4655348B, JP4524827B, JP4720200B, JP2004-091380A, JP3972430B, JP4517416B, JP2002-128742A, JP4810750B, JP5888544B, JP2014-019654A, JP6241654B, JP6372060B, JP6323144B, JP2005-015406A, JP2007-230968A, JP6761484B, JP6681992B, WO19/182129A, CN01134217A, KR101069555B, KR101690767B, CN20120229730A, JP4053782B, JP2009-249406A, JP4121075B, JP2005-528416A, US6514578B, WO06/006819A, JP2011-184417A, JP2013-095685A, JP2013-103897A, JP2002-088008A, JP2002-226412A, JP2012-167214A, JP2012-167068A, JP2018-084511A, JP2003-055317A, JP2001-329264A, JP2002-030016A, JP2003-055664A, JP2018-070889A, CN102557896B, US2015369982A, JP2020-105264A, JP2014-224237A, JP2012-051862A, JP2010-106274A, JP2005-179557A, JP2005-035985A, JP2002-012579A, JP2002-003845A, JP2001-233837A, JP2019-532167A, JP2016-509247A, JP2010-503733A, JP2003-533557A, WO19/098115A, WO18/034216A, WO18/221236A, WO18/123396A, WO18/003482A, WO17/086143A, WO14/192655A, WO13/161669A, and WO09/104468A.

Specific examples of the liquid crystal compound are shown below, but the liquid crystal compound is not limited thereto.

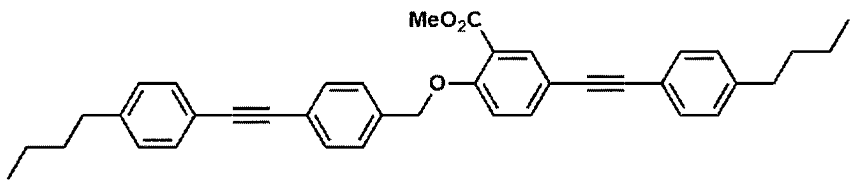

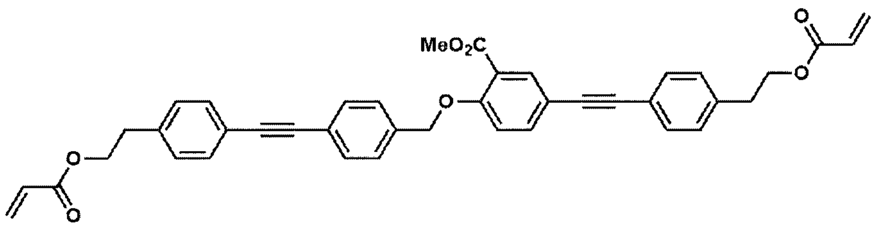

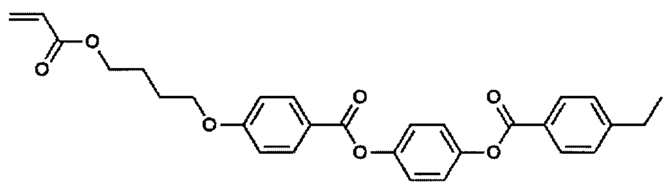

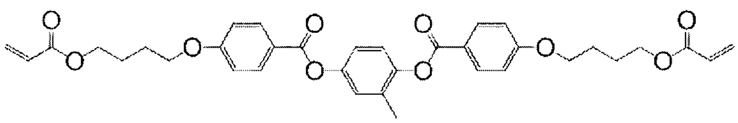

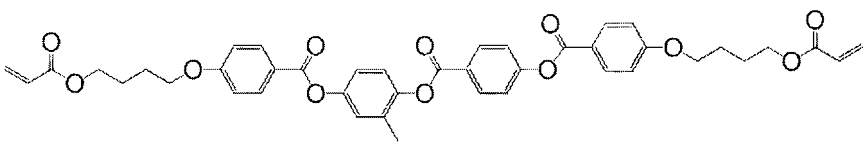

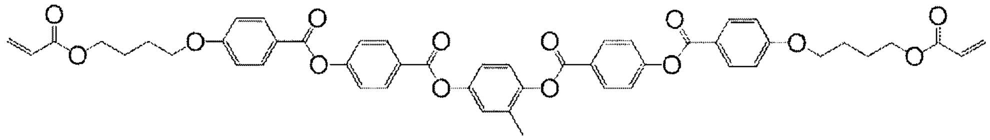

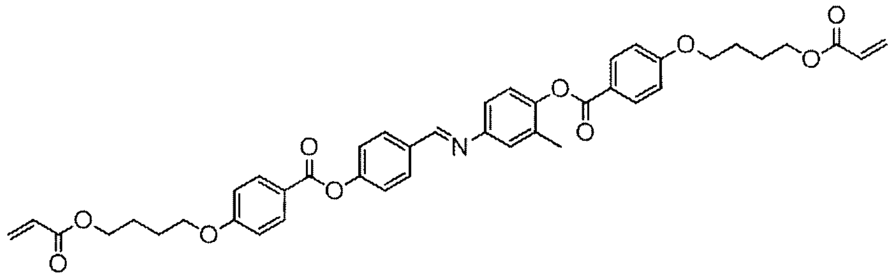

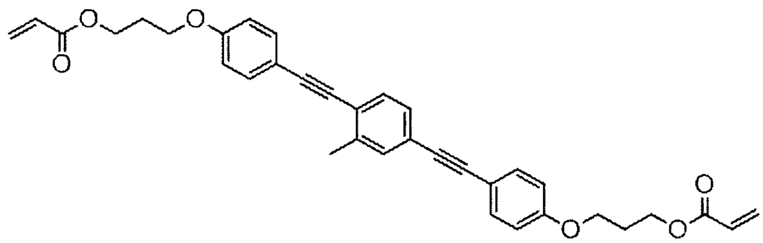

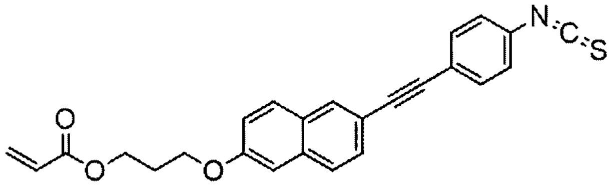

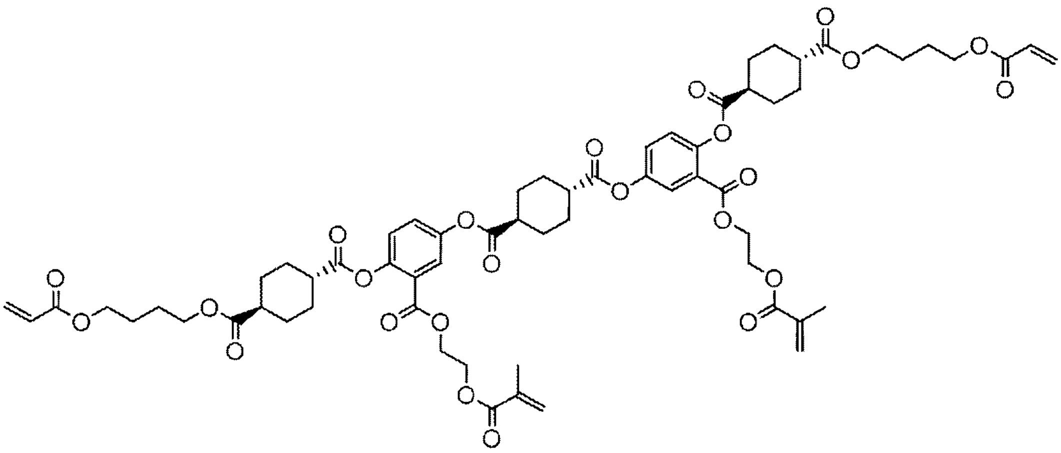

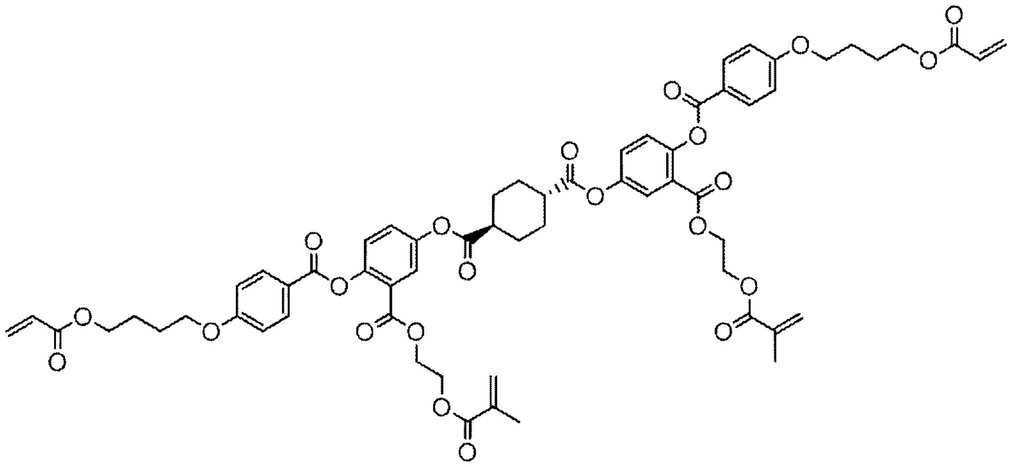

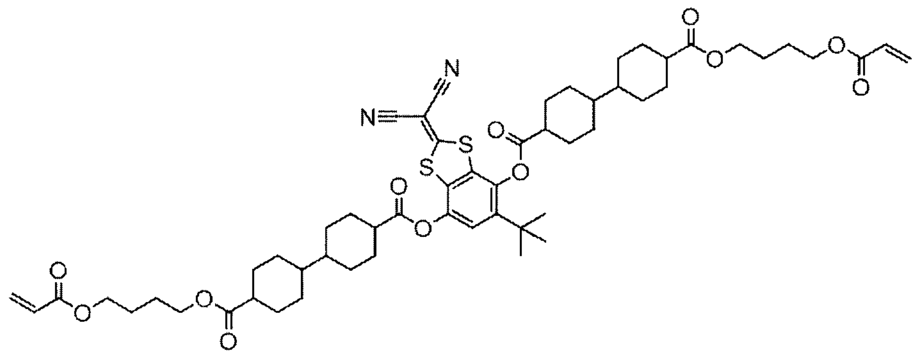

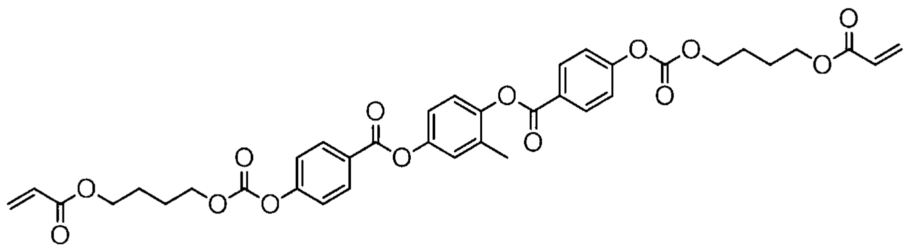

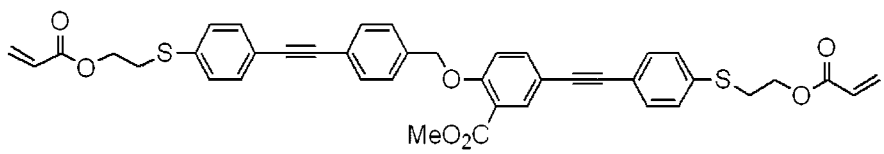

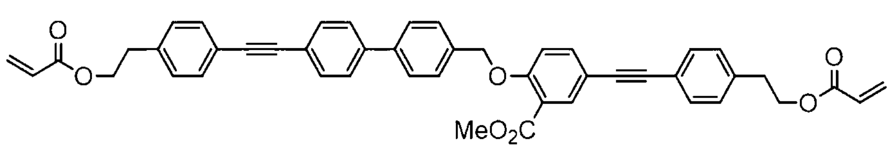

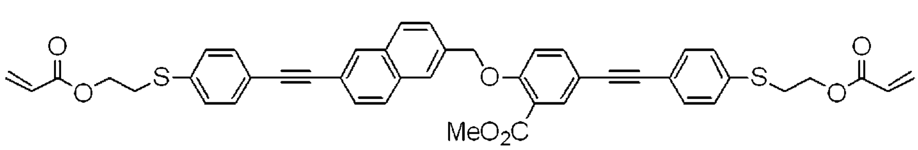

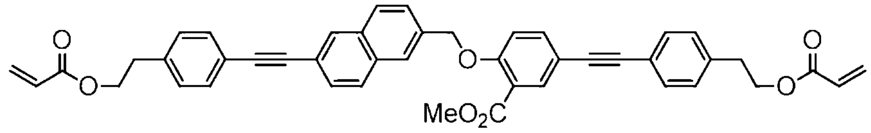

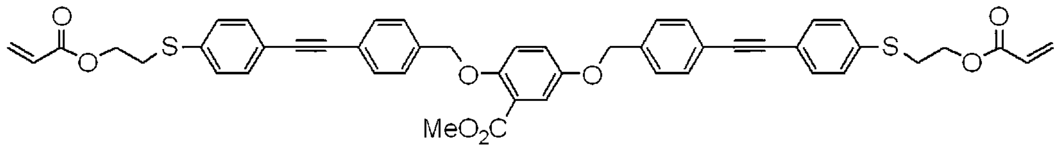

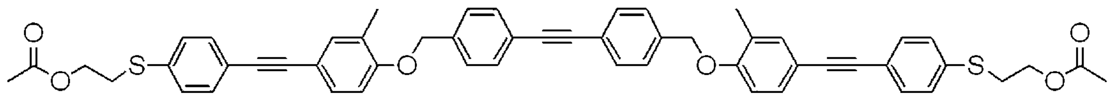

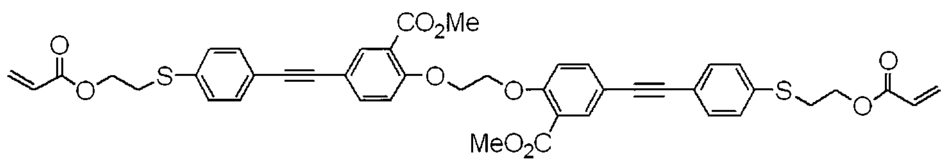

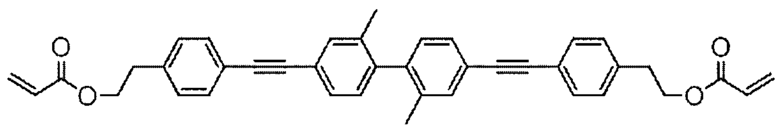

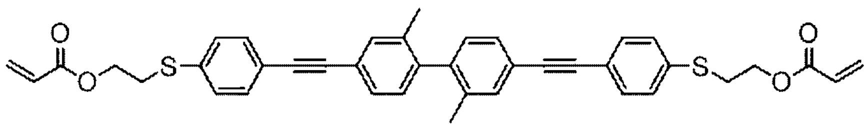

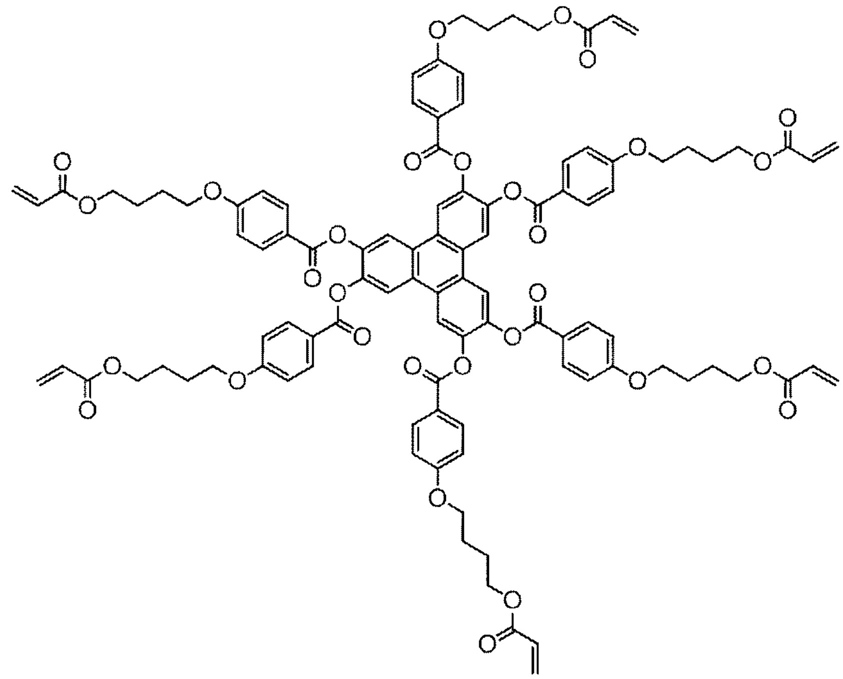

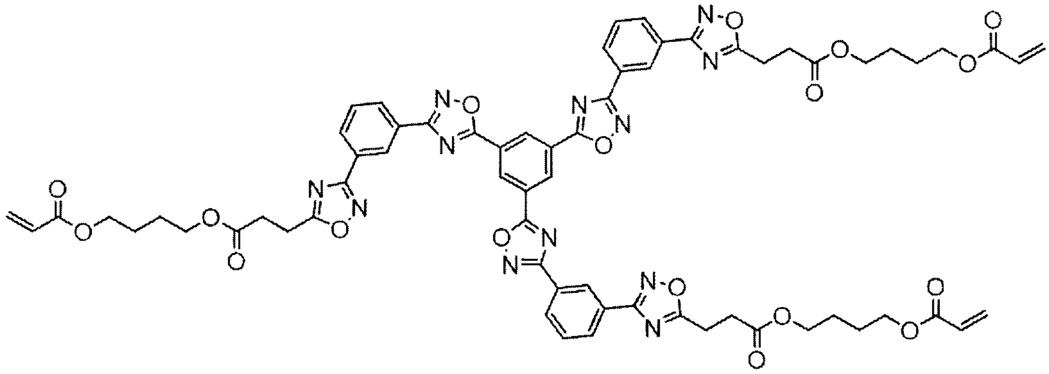

In addition, preferred examples of the liquid crystal compound include compounds represented by Formulae (1) to (22) (among these, those exhibiting smectic properties). K (side chain structure) in Formulae (1) to (22) corresponds to any of Table K1 to Table K3 described below.

In Tables K1 to K3, "*" shown in the side chain structure of K represents a bonding position to an aromatic ring specified in Formulae (1) to (22).

In addition, in the side chain structures shown as 2-2 in Table K2 and 3-2 in Table 3, a group adjacent to each of the acryloyloxy group and the methacryloyl group represents a propylene group (a group in which a methyl group is replaced with an ethylene group), and represents a mixture of regioisomers in which the position of the methyl group is different.

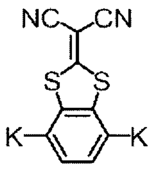

(1)

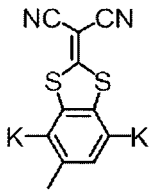

(2)

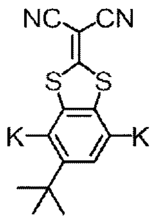

(3)

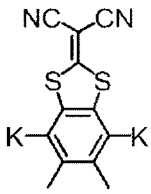

(4)

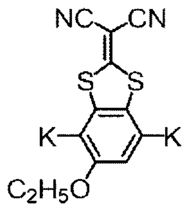

(5)

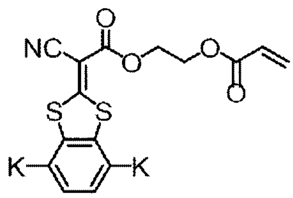

(6)

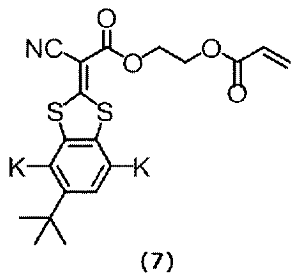

(7)

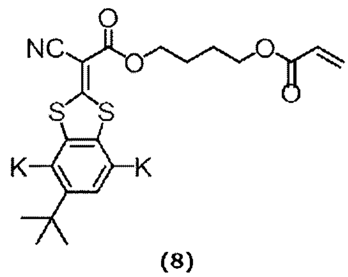

(8)

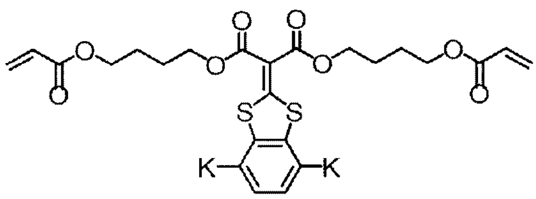

(9)

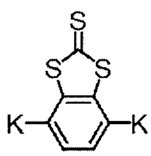

(10)

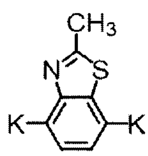

(11)

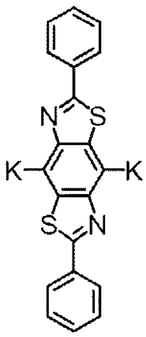

(12)

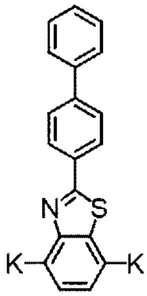 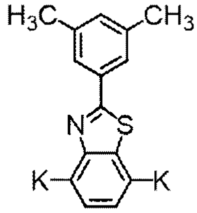 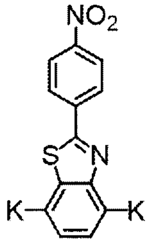 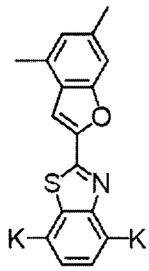 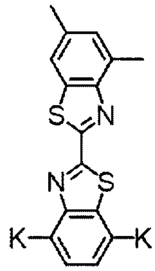

(13) (14) (15) (16) (17)

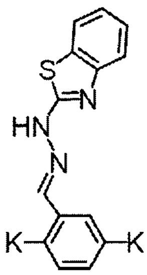 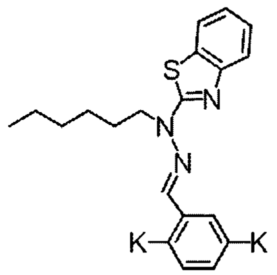 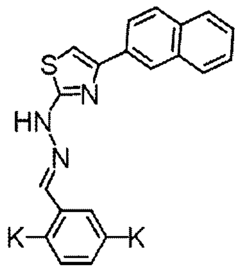

(18) (19) (20)

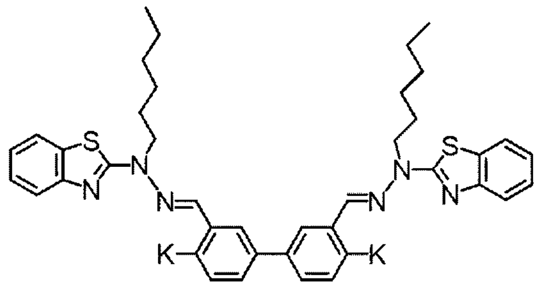 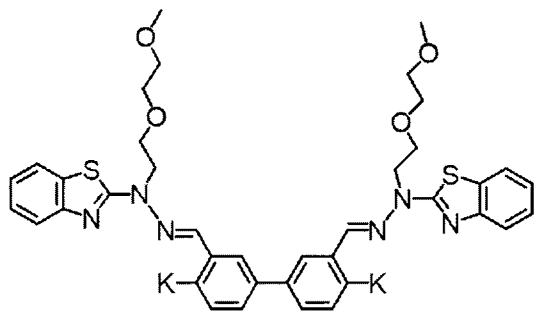

(21) (22)

[Table 16]

| Table K-1 | K (side chain structure) |
|---|---|
| 1-1 | 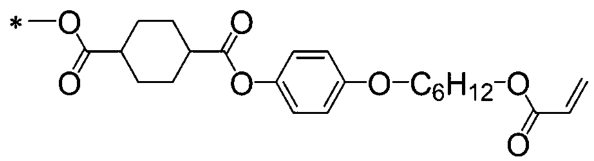 |
| 1-2 | 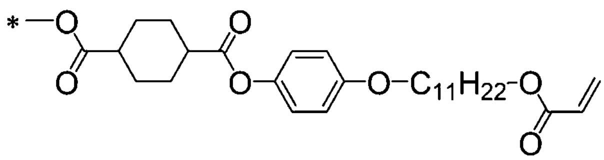 |
| 1-3 | 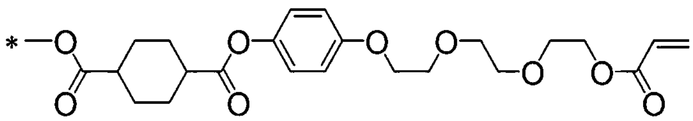 |

(continued)

| Table K-1 | K (side chain structure) |
|---|---|
| 1-4 | 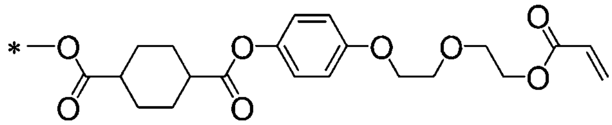 |
| 1-5 | 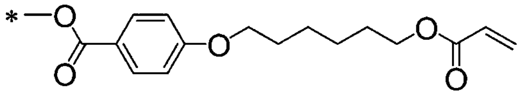 |
| 1-6 | 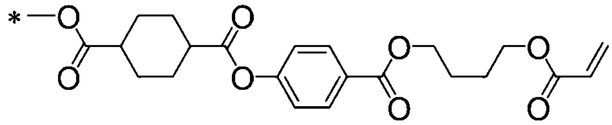 |

[Table 17]

| Table K-2 | K (side chain structure) |
|---|---|
| 2-1 | 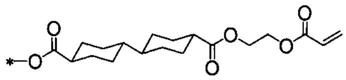 |
| 2-2 | 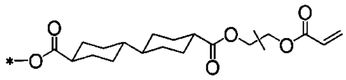 |
| 2-3 | 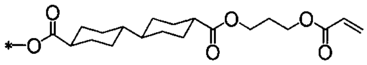 |
| 2-4 | 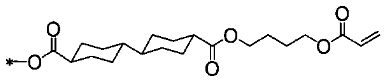 |
| 2-5 | 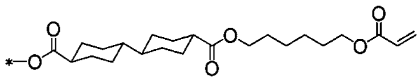 |
| 2-6 | 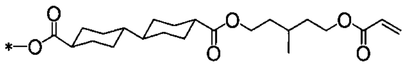 |
| 2-7 | 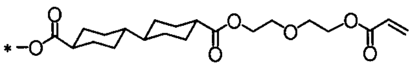 |
| 2-8 | 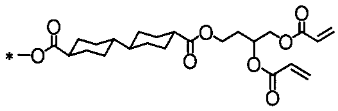 |
| 2-9 | 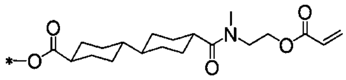 |
| 2-10 | 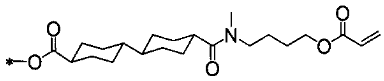 |
| 2-11 | 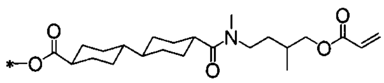 |

(continued)

| Table K-2 | K (side chain structure) |
|---|---|
| 2-12 | 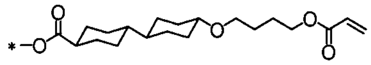 |
| 2-13 | 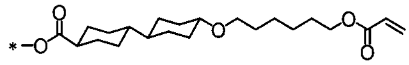 |
| 2-14 | 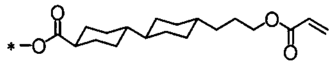 |

[Table 18]

| Table K-3 | K (side chain structure) |
|---|---|
| 3-1 | 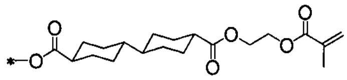 |
| 3-2 | 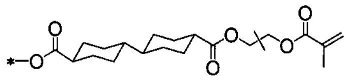 |
| 3-3 | 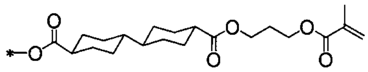 |
| 3-4 | 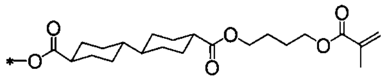 |
| 3-5 | 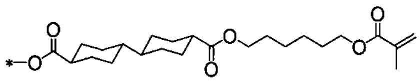 |
| 3-6 | 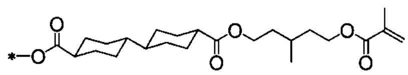 |
| 3-7 | 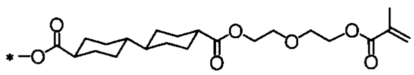 |
| 3-8 | 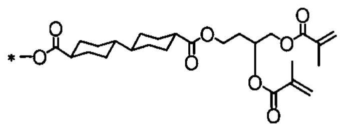 |
| 3-9 | 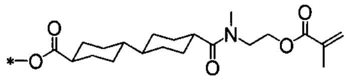 |
| 3-10 | 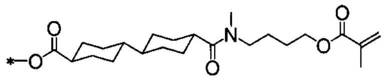 |
| 3-11 | 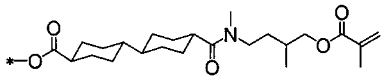 |
| 3-12 | 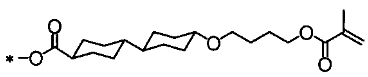 |
| 3-13 | 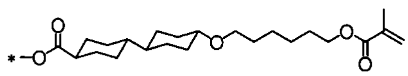 |

(continued)

| Table K-3 | K (side chain structure) |
|---|---|
| 3-14 | 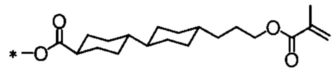 |

A content of the liquid crystal compound in the liquid crystal composition is not particularly limited, but is preferably 5% to 99% by mass, more preferably 25% to 98% by mass, and still more preferably 75% to 98% by mass with respect to the total mass of solid contents of the liquid crystal composition.
In the liquid crystal composition, the liquid crystal compound may be used alone or in combination of two or more kinds thereof. In a case where two or more kinds thereof are used in combination, the total content thereof is preferably within the above-described range.

[Polymerization initiator]

The liquid crystal composition may contain a polymerization initiator.
Examples of the polymerization initiator include a photopolymerization initiator and a thermal polymerization initiator; and among these, a photopolymerization initiator capable of initiating a polymerization reaction by ultraviolet irradiation is preferable. Examples of the photopolymerization initiator include an alkylphenone compound, an $\alpha$-carbonyl compound, acyloin ether, an $\alpha$-hydrocarbon-substituted aromatic acyloin compound, a polynuclear quinone compound, a phenazine compound, and an oxadiazole compound.
In a case where the liquid crystal composition contains a polymerization initiator, a content of the polymerization initiator in the liquid crystal composition is not particularly limited, but is preferably 0.1% to 20% by mass and more preferably 1% to 8% by mass with respect to the total mass of the liquid crystal compound.
In the liquid crystal composition, the polymerization initiator may be used alone or in combination of two or more kinds thereof. In a case where two or more kinds thereof are used in combination, the total content thereof is preferably within the above-described range.

[Solvent]

The liquid crystal composition may contain a solvent.
The solvent is preferably a solvent capable of dissolving each component blended in the liquid crystal composition, and examples thereof include ketones (for example, acetone, 2-butanone, methyl ethyl ketone, methyl isobutyl ketone, cyclohexanone, cyclopentanone, and the like), ethers (for example, dioxane, tetrahydrofuran, and the like), aliphatic hydrocarbons (for example, hexane and the like), alicyclic hydrocarbons (for example, cyclohexane and the like), aromatic hydrocarbons (for example, toluene, xylene, trimethylbenzene, and the like), halogenated carbons (dichloromethane, dichloroethane, dichlorobenzene, chlorotoluene, and the like), esters (for example, methyl acetate, ethyl acetate, butyl acetate, and the like), water, alcohols (for example, ethanol, isopropanol, butanol, cyclohexanol, and the like), cellosolves (for example, methyl cellosolve, ethyl cellosolve, and the like), cellosolve acetates, sulfoxides (for example, dimethyl sulfoxide and the like), and amides (for example, dimethylformamide, dimethylacetamide, and the like).
In a case where the liquid crystal composition contains a solvent, a content of the solvent in the liquid crystal composition is preferably an amount at which the concentration of solid contents in the liquid crystal composition is 0.5% to 30% by mass, and more preferably an amount at which the concentration of solid contents in the liquid crystal composition is 1% to 20% by mass.
In the liquid crystal composition, the solvent may be used alone or in combination of two or more kinds thereof. In a case where two or more kinds thereof are used in combination, the total content thereof is preferably within the above-described range.

[Chiral agent]

The liquid crystal composition may contain a chiral agent.
The chiral agent (optically active compound) has a function of inducing a helical structure of a cholesteric liquid crystalline phase. The chiral agent may be selected according to the purpose because a helical twisted direction or a helical pitch of the induced helix varies depending on the compound.
The chiral agent is not particularly limited, and for example, a compound described in "Liquid Crystal Device Handbook, Chapter 3, Article 4-3, chiral agent for twisted nematic (TN) or super twisted nematic (STN), p. 199, edited by No. 142 Committee of Japan Society for the Promotion of Science, 1989", isosorbide, an isomannide derivative, and the

like can be used.
The chiral agent generally contains an asymmetric carbon atom, but an axially chiral compound or a planar chiral compound, containing no asymmetric carbon atom, can also be used as the chiral agent. Examples of the axially chiral compound or the planar chiral compound include binaphthyl, helicene, paracyclophane, and derivatives thereof.
In addition, the chiral agent may include a polymerizable group. In a case where both the chiral agent and the liquid crystal compound have a polymerizable group, a polymer having a repeating unit induced from the polymerizable liquid crystal compound and a repeating unit induced from the chiral agent can be formed by a polymerization reaction between the polymerizable chiral agent and the polymerizable liquid crystal compound. In this aspect, the polymerizable group in the polymerizable chiral agent is preferably the same group as the polymerizable group in the polymerizable liquid crystal compound.
Furthermore, the chiral agent itself may be a liquid crystal compound.
In a case where the chiral agent has a photoisomerization group, a pattern having a desired reflection wavelength corresponding to a luminescence wavelength can be formed by irradiation with actinic ray or the like through a photo mask after coating and alignment, which is preferable. As the photoisomerization group, an isomerization site of a compound exhibiting photochromic properties, an azo group, an azoxy group, or a cinnamoyl group is preferable. As specific examples of the compound, compounds described in JP2002-080478A, JP2002-080851A, JP2002-179668A, JP2002-179669A, JP2002-179670A, JP2002-179681A, JP2002-179682A, JP2002-338575A, JP2002-338668A, JP2003-313189A, JP2003-313292A, and the like can be used.
In a case where the liquid crystal composition contains a chiral agent, a content of the chiral agent in the liquid crystal composition is not particularly limited, but is preferably 0.01% to 15% by mass and more preferably 1.0% to 10% by mass with respect to the content of the liquid crystal compound.

[Other additives]

The liquid crystal composition may contain a component other than the above-described components.
Examples of other components include a surfactant other than the specific aligning agent, an antioxidant, an ultraviolet absorber, a sensitizer, a stabilizer, a plasticizer, a chain transfer agent, a polymerization inhibitor, a defoamer, a leveling agent, a thickener, a flame retardant, a surfactant, a dispersant, and coloring materials such as a dye and a pigment.

[Production method of liquid crystal composition]

A production method of the liquid crystal composition is not particularly limited and known methods can be adopted; and for example, the liquid crystal composition can be produced by mixing the above-described various components. At the time of mixing, the various components may be mixed at a time or mixed sequentially.

[Applications of liquid crystal composition]

A cured product formed of the liquid crystal composition can be used as an optically anisotropic layer.
Alignment of the liquid crystal compound in the optically anisotropic layer is not particularly limited, and examples thereof include homogeneous alignment, homeotropic alignment, and cholesteric alignment.
Hereinafter, an example of the optically anisotropic layer and a manufacturing method of the optically anisotropic layer will be described.

<<Example of embodiment of optically anisotropic layer>>

An example of an embodiment of the optically anisotropic layer consisting of a cured layer of the above-described liquid crystal composition will be described with reference to the drawings.
FIGS. 1 and 2 are schematic cross-sectional views of an optically anisotropic layer 1. FIG. 1 is a schematic side view showing the optically anisotropic layer 1, and FIG. 2 is a schematic plan view showing a liquid crystal alignment pattern of the optically anisotropic layer 1 shown in FIG. 1. In the drawings, a sheet surface of the sheet-like optically anisotropic layer 1 is defined as an xy plane, and a thickness direction is defined as a z direction.
As shown in FIG. 1, the optically anisotropic layer 1 has a liquid crystal alignment pattern (length Λ of single period) in which an orientation of an optical axis derived from a liquid crystal compound 30 is changed while continuously rotating in at least one in-plane direction.
In FIGS. 1 to 4, only liquid crystal compounds present on one main surface side of the optically anisotropic layer 1 are shown in order to simplify the drawings and clearly show the configuration of the optically anisotropic layer 1. However, the optically anisotropic layer 1 has a structure in which the aligned liquid crystal compounds 30 are stacked in the same

manner as in an optically anisotropic layer which is formed of a composition containing a general liquid crystal compound.

In general, in a case where a value of an in-plane retardation is set as λ/2, the optically anisotropic layer 1 has a function as a general λ/2 plate, that is, a function of imparting a phase difference of a half wavelength, that is, 180° to two linearly polarized light components which are included in light incident into the optically anisotropic layer and are perpendicular to each other.

As shown in FIG. 2, in a plane of the optically anisotropic layer 1, the optically anisotropic layer 1 has a liquid crystal alignment pattern in which an orientation of an optical axis 30A derived from the liquid crystal compound 30 (hereinafter, may be also referred to as "optical axis 30A") is changed while continuously rotating in one direction. Here, the one direction in which the optical axis 30A rotates and changes match a direction of an x-axis in the xy plane. Hereinafter, the one direction in which the optical axis 30A is changed while rotating will be described as an x direction.

The optical axis 30A derived from the liquid crystal compound 30 is an axis having the highest refractive index in the liquid crystal compound 30, that is, a so-called slow axis. As shown in FIG. 1, in a case where the liquid crystal compound 30 is a rod-like liquid crystal compound, the optical axis 30A is along a rod-shaped major axis direction.

Specifically, the orientation of the optical axis 30A changes rotationally in the x direction means that an angle between the optical axis 30A of the liquid crystal compound 30, which is arranged along the x direction, and the x direction varies depending on positions in the x direction, and the angle between the optical axis 30A and the x direction sequentially changes from θ to θ+180° or θ-180° in the x direction. Here, the expression "the angle sequentially changes" means that the angle may change at constant angular intervals, or may change continuously. However, a difference between the angles of the optical axes 30A of the liquid crystal compound 30 adjacent to each other in the x direction is preferably 45° or less, more preferably 15° or less, and still more preferably less than 15°.

On the other hand, regarding the liquid crystal compound 30 forming the optically anisotropic layer 1, the liquid crystal compounds 30 having the same orientation of the optical axes 30A are arranged at regular intervals in a y direction perpendicular to the x direction in a plane, that is, a y direction perpendicular to the one direction (x direction) in which the optical axis 30A continuously rotates. In other words, regarding the liquid crystal compound 30 forming the optically anisotropic layer 1, in the liquid crystal compounds 30 arranged in the y direction, angles between the orientation of the optical axis 30A and the x direction are the same. In such a liquid crystal alignment pattern of the liquid crystal compound 30 in the optically anisotropic layer 1, the length (distance) over which the optical axis 30A of the liquid crystal compound 30 rotates 180° in the x direction in which the orientation of the optical axis 30A changes rotationally in a plane is defined as the length Λ of the single period in the liquid crystal alignment pattern. In other words, the length of the single period in the liquid crystal alignment pattern is defined as the distance between 0 and θ + 180° that is a range of the angle between the optical axis 30A of the liquid crystal compound 30 and the x direction. Specifically, as shown in FIG. 2, a distance of centers in the x direction of two liquid crystal compounds 30 in which the x direction and the direction of the optical axis 30A match each other is defined as the length Λ of the single period (hereinafter, may be also referred to as "single period Λ" or "period Λ"). The liquid crystal alignment pattern of the optically anisotropic layer 1 is a pattern in which the liquid crystal alignment of the single period Λ is repeated in the x direction.

As described above, regarding the optically anisotropic layer 1, in the liquid crystal compounds 30 arranged in the y direction, the angles between the optical axes 30A thereof and the x direction in which the orientation of the optical axis of the liquid crystal compound 30 rotates are the same. Regions where the liquid crystal compounds 30 in which the angles between the optical axes 30A and the x direction are the same are arranged in the y direction will be referred to as "regions R".

In this case, a value of the in-plane retardation (Re) in each region R is preferably a half wavelength of light (hereinafter, referred to as "target light") to be diffracted by the optically anisotropic layer, that is, in a case where a wavelength of the target light is λ, the in-plane retardation Re is preferably λ/2. The in-plane retardation is calculated from the product of a refractive index anisotropy Δn of the regions R and the thickness (film thickness) d of the optically anisotropic layer. Here, a difference in refractive index due to the refractive index anisotropy of the regions R in the optically anisotropic layer is defined by a difference between a refractive index of a direction of an in-plane slow axis of the region R and a refractive index of a direction orthogonal to the direction of the slow axis. That is, the difference Δn in refractive index due to the refractive index anisotropy of the regions R is the same as a difference between a refractive index of the liquid crystal compound 30 in the direction of the optical axis 30A and a refractive index of the liquid crystal compound 30 in a direction perpendicular to the optical axis 30A in a plane of the region R. That is, the above-described difference Δn in refractive index depends on the liquid crystal compound, and the in-plane retardation of each region R is substantially the same. However, as described above, each region R has a different direction of the optical axis 30A.

In the optically anisotropic layer 1, since the orientation of the optical axis 30A rotates in the plane, it is difficult to measure the in-plane retardation as a whole. However, the in-plane retardation of the optically anisotropic layer 1 can be estimated from the period and the diffraction efficiency.

In a case where circularly polarized light is incident into the optically anisotropic layer 1, the light is refracted and a direction of the circularly polarized light is changed.

This action is conceptually shown in FIG. 3 by exemplifying the optically anisotropic layer 1. It is assumed that the

in-plane retardation of the optically anisotropic layer 1 is λ/2.

In this case, as shown in FIG. 3, in a case where an incident ray Li as levorotatory circularly polarized light $P_L$ is incident into the optically anisotropic layer 1, the incident ray $L_1$ transmits through the optically anisotropic layer 1 to be imparted with a phase difference of 180°, and a transmitted ray $L_2$ is converted into dextrorotatory circularly polarized light $P_R$.

In addition, in a case where the incident ray $L_1$ transmits through the optically anisotropic layer 1, an absolute phase thereof changes depending on the orientation of the optical axis 30A of each liquid crystal compound 30. In this case, since the orientation of the optical axis 30A changes while rotating in the x direction, an amount of change in absolute phase of the incident ray Li varies depending on the orientation of the optical axis 30A. Furthermore, the liquid crystal alignment pattern formed in the optically anisotropic layer 1 is a pattern which is periodic in the x direction. Therefore, as shown in FIG. 3, the incident ray $L_1$ transmitted through the optically anisotropic layer 1 is imparted with an absolute phase Q1 which is periodic in the x direction corresponding to the orientation of each optical axis 30A. As a result, an equiphase plane E1 which is tilted in a direction opposite to the x direction is formed.

Therefore, the transmitted ray $L_2$ is refracted to be tilted in a direction perpendicular to the equiphase plane E1, and travels in a direction different from a traveling direction of the incident ray $L_1$. In this way, the incident ray Li of the levorotatory circularly polarized light $P_L$ is converted into the transmitted ray $L_2$ of the dextrorotatory circularly polarized light $P_R$ which is tilted by a predetermined angle in the x direction with respect to an incidence direction.

On the other hand, as conceptually shown in FIG. 4, in a case where an incident ray $L_4$ of dextrorotatory circularly polarized light $P_R$ is incident into the optically anisotropic layer 1 having the same in-plane retardation, the incident ray $L_4$ transmits through the optically anisotropic layer 1 to be imparted with a phase difference of 180°, and the incident ray $L_4$ is converted into a transmitted ray $L_5$ of levorotatory circularly polarized light $P_L$.

In addition, in a case where the incident ray $L_4$ transmits through the optically anisotropic layer 1, an absolute phase thereof changes depending on the orientation of the optical axis 30A of each liquid crystal compound 30. In this case, since the orientation of the optical axis 30A changes while rotating in the x direction, an amount of change in absolute phase of the incident ray $L_4$ varies depending on the orientation of the optical axis 30A. Furthermore, the liquid crystal alignment pattern formed in the optically anisotropic layer 1 is a pattern which is periodic in the x direction. Therefore, as shown in FIG. 4, the incident ray $L_4$ transmitted through the optically anisotropic layer 1 is imparted with an absolute phase Q2 which is periodic in the x direction corresponding to the orientation of each optical axis 30A.

Here, since the incident ray $L_4$ is dextrorotatory circularly polarized light $P_R$, the absolute phase Q2 which is periodic in the x direction corresponding to the orientation of the optical axis 30A is opposite to the incident ray Li as the levorotatory circularly polarized light $P_L$. As a result, in the incident ray $L_4$, an equiphase plane E2 which is tilted in the x direction opposite to that of the incident ray $L_1$ is formed.

Therefore, the incident ray $L_4$ is refracted to be tilted in a direction perpendicular to the equiphase plane E2, and travels in a direction different from a traveling direction of the incident ray $L_4$. In this way, the incident ray $L_4$ is converted into the transmitted ray $L_5$ of the levorotatory circularly polarized light, which is tilted by a predetermined angle in the x direction with respect to a direction opposite to the incidence direction.

As described above, in the optically anisotropic layer 1, the value of the in-plane retardation is preferably half the wavelength of the target light. This is because that, as the value of the in-plane retardation is closer to the half wavelength of the target light, high diffraction efficiency can be obtained in the diffraction of the target light. The in-plane retardation Re(λ) = $\Delta n_\lambda \times d$ of the optically anisotropic layer with respect to incidence light having a wavelength in the x direction of λ nm is preferably within a range defined by the following expression and can be appropriately set.

$$0.7 \times (\lambda/2)\ \text{nm} \leq \Delta n_\lambda \times d \leq 1.3 \times (\lambda/2)\ \text{nm}$$

Here, by changing the single period Λ of the liquid crystal alignment pattern formed in the optically anisotropic layer 1, refraction angles of the transmitted rays $L_2$ and $L_5$ can be adjusted. Specifically, as the single period Λ of the liquid crystal alignment pattern decreases, light transmitted through the liquid crystal compounds 30 adjacent to each other more strongly interfere with each other, so that the transmitted rays $L_2$ and $L_5$ can be more largely refracted. Furthermore, by reversing a rotation direction of the optical axis 30A of the liquid crystal compound 30 which rotates in the x direction, a refraction direction of the transmitted light can be reversed. The period Λ is preferably 50 μm or less, more preferably 25 μm or less, and still more preferably 5 μm or less.

It is sufficient that the film thickness d of the optically anisotropic layer 1 is appropriately set in order to obtain a desired in-plane retardation, but the film thickness d is preferably 1 μm or less, more preferably 0.8 μm or less, and still more preferably 0.5 μm or less. In particular, in a case where the optically anisotropic layer 1 is used as a birefringent mask for forming a photo-alignment pattern, a smaller film thickness d is preferable. As the film thickness d is smaller, a formation accuracy of the photo-alignment pattern can be improved.

The ratio Λ/d of the period Λ to the film thickness d of the optically anisotropic layer is preferably 1 or more.

The period Λ of the liquid crystal alignment pattern in the optically anisotropic layer 1 can be obtained from a period of light and dark by observing a bright and dark periodic pattern of bright portions and dark portions with a polarizing microscope under a condition of crossed nicols. Twice the period of the observed bright and dark period pattern corresponds to the period Λ of the liquid crystal alignment pattern.
In addition, the film thickness d of the optically anisotropic layer 1 can be measured by, for example, observing a cross section of the optically anisotropic layer with a scanning electron microscope.
In the optically anisotropic layer 1, the refractive index anisotropy $\Delta n$ at a wavelength of 550 nm is preferably 0.21 or more. The upper limit thereof is not particularly limited, but is preferably 0.8 or less.
In addition, it is also preferable that the optically anisotropic layer can be made to have a substantially wide range for the wavelength of incidence light by imparting a torsion component to the liquid crystal composition or by laminating different retardation layers. For example, in the optically anisotropic layer, a method of achieving a $\lambda/2$ plate having a wide-range pattern by laminating two liquid crystal layers having different twisted directions is described in, for example, JP2014-089476A, and can be suitably used in the optically anisotropic layer according to the embodiment of the present invention.

<Production method of optically anisotropic layer 1>

Specific examples of a production method of the optically anisotropic layer 1 include an aspect of including a step X of bringing a substrate including an alignment film having a predetermined alignment pattern into contact with the liquid crystal composition to form a composition layer on the alignment film of the substrate; and a step Y of subjecting the liquid crystal composition layer to a heating treatment to align the liquid crystal compound, and then subjecting the liquid crystal composition layer to a curing treatment.
After the production of the optically anisotropic layer 1, the above-described substrate may be removed from the optically anisotropic layer, or may not be removed. In addition, in the same manner, the above-described alignment film may be removed from the optically anisotropic layer after the production of the optically anisotropic layer 1, or may not be removed.
Hereinafter, specific procedures for the step X and the step Y will be described in detail.

(Step X)

· Substrate

In the step X, the type of the substrate to be used is not particularly limited, and examples thereof include known substrates (for example, a resin substrate, a glass substrate, a ceramic substrate, a semiconductor substrate, and a metal substrate).

· Alignment film

The alignment film is disposed on the substrate. In a case where the alignment film is present, the liquid crystal compound 30 is easily aligned in a predetermined liquid crystal alignment pattern in the production of the optically anisotropic layer 1. As derived above, the optically anisotropic layer 1 has the liquid crystal alignment pattern in which the orientation of the optical axis 30A (see FIG. 2) derived from the liquid crystal compound 30 changes while continuously rotating in one in-plane direction (x direction). Therefore, the alignment film is formed such that the optically anisotropic layer can form the liquid crystal alignment pattern.
As the alignment film, various known films can be used. Examples of the alignment film include a rubbed film formed of an organic compound such as a polymer, an obliquely vapor-deposited film formed of an inorganic compound, a film having a microgroove, and a film formed by lamination of Langmuir-Blodgett (LB) films formed with a Langmuir-Blodgett's method using an organic compound such as ω-tricosanoic acid, dioctadecylmethylammonium chloride, and methyl stearate.
The alignment film formed by a rubbing treatment can be formed by rubbing a surface of a polymer layer with paper or fabric in a given direction multiple times.
As a material used for the alignment film, polyimide, polyvinyl alcohol, a polymer having a polymerizable group, described in JP1997-152509A (JP-H9-152509A), and a material used for forming an alignment film described in JP2005-097377A, JP2005-099228A, JP2005-128503A, and the like can be suitably used.
In addition, as the alignment film, a so-called photo-alignment film obtained by irradiating a photo-aligning material with polarized or non-polarized light to form an alignment film can be suitably used. In a case of being irradiated with polarized light to form the alignment film, the alignment film can be formed by irradiating the photo-alignment material with polarized light from a vertical direction or an oblique direction; and in a case of being irradiated with non-polarized light

to obtain the alignment film, the alignment film can be formed by irradiating the photo-alignment material with non-polarized light from an oblique direction.

Examples of the photo-alignment material used in the photo-alignment film include: an azo compound described in JP2006-285197A, JP2007-76839A, JP2007-138138A, JP2007-94071A, JP2007-121721A, JP2007-140465A, JP2007-156439A, JP2007-133184A, JP2009-109831A, JP3883848B, and JP4151746B; an aromatic ester compound described in JP2002-229039A; a maleimide- and/or alkenyl-substituted nadiimide compound having a photo-alignable unit described in JP2002-265541A and JP2002-317013A; a photocrosslinking silane derivative described in JP4205195B and JP4205198B, a photocrosslinking polyimide, a photocrosslinking polyamide, or a photocrosslinking ester described in JP2003-520878A, JP2004-529220A, and JP4162850B; and a photodimerizable compound, in particular, a cinnamate compound, a chalcone compound, or a coumarin compound described in JP1997-118717A (JP-H9-118717A), JP1998-506420A (JP-H10-506420A), JP2003-505561A, WO2010/150748A, JP2013-177561A, and JP2014-12823A. Among these, an azo compound, a photocrosslinking polyimide, a photocrosslinking polyamide, a photocrosslinking ester, a cinnamate compound, a chalcone compound, or the like can be suitably used.

A thickness of the alignment film is not particularly limited. The thickness with which a required alignment function can be obtained may be appropriately set depending on the material for forming the alignment film.

The thickness of the alignment film is preferably 0.01 to 5 μm and more preferably 0.05 to 2 μm.

A method of forming the alignment film is not particularly limited, and various known methods can be used according to the material for forming the alignment film.

From the viewpoint that the alignment pattern of the optically anisotropic layer 1 is more easily formed, a photo-alignment film which is obtained by irradiating the photo-aligning material with polarized or non-polarized light to form an alignment film is preferable, and a method described in [0078] to [0080] of WO2020/022496A can be suitably adopted.

· Procedure of step X

A method of bringing the substrate including the alignment film having a predetermined alignment pattern (hereinafter, also referred to as "substrate with an alignment film") into contact with the liquid crystal composition is not particularly limited, and examples thereof include a method of applying the liquid crystal composition onto the alignment film of the substrate and a method of immersing the above-described substrate with an alignment film in the liquid crystal composition. After the substrate with an alignment film is brought into contact with the composition, a drying treatment may be performed as necessary to remove a solvent from the composition layer disposed on the alignment film of the substrate.

(Step Y)

The step Y is a step in which the composition layer is subjected to a heating treatment to align the liquid crystal compound, and then a curing treatment is performed. By subjecting the composition layer to a heating treatment, the liquid crystal compound is aligned to form a liquid crystal phase. For example, in a case where the composition layer contains a chiral agent, a cholesteric liquid crystalline phase is formed.

Conditions of the heating treatment are not particularly limited, and the optimum conditions are selected depending on the type of the liquid crystal compound.

The method of the curing treatment is not particularly limited, and examples thereof include photo-curing treatment and thermosetting treatment. Among these, a light irradiation treatment is preferable and an ultraviolet irradiation treatment is more preferable.

A light source such as an ultraviolet lamp is used for the ultraviolet irradiation.

The cured product obtained by the above-described treatment corresponds to a layer in which the liquid crystalline phase is immobilized. In particular, in a case where the liquid crystal composition contains the chiral agent, a layer with a fixed cholesteric liquid crystalline phase is formed.

These layers do not need to exhibit liquid crystallinity anymore. More specifically, for example, as a state in which the cholesteric liquid crystalline phase is "fixed", the most typical and preferred aspect is a state in which the alignment of the liquid crystal compound, which is the cholesteric liquid crystalline phase, is retained. More specifically, it is preferable that, in a temperature range of 0°C to 50°C and under more severe conditions in a temperature range of -30°C to 70°C, a state in which the layer has no fluidity and the immobilized alignment form can be maintained stably without causing a change in alignment form due to an external field or an external force is preferable.

In the manufacturing method of the optically anisotropic layer, in a case where the thickness of the optically anisotropic layer has not reached a desired value, another optically anisotropic layer may be further formed on the surface of the optically anisotropic layer obtained in the step Y. That is, a plurality of optically anisotropic layers may be laminated by repeating the step X and the step Y until the thickness of the optically anisotropic layer reaches a desired thickness. Even in a case where a plurality of optically anisotropic layers are formed, the alignment direction of the alignment film can be propagated from the lower surface to the upper surface of the optically anisotropic layer.

Furthermore, in a case where another optically anisotropic layer (hereinafter, also referred to as "optically anisotropic layer B") is further formed on the surface of the optically anisotropic layer (hereinafter, also referred to as "optically anisotropic layer A") obtained in the step Y, a treatment (cleaning treatment) for extracting the specific compound by applying a solvent to the surface of the optically anisotropic layer A on the side where the optically anisotropic layer B is to be disposed may be performed.

Specific examples of the cleaning treatment include a treatment of rinsing the surface of the optically anisotropic layer A on the side where the optically anisotropic layer B is disposed with a solvent to extract the specific compound.

<<Modification example of optically anisotropic layer>>

An optically anisotropic layer 2 shown in FIG. 5 is an optically anisotropic layer in which the liquid crystal compound 30 is cholesterically aligned in a thickness direction.

It is known that the cholesteric liquid crystalline phase exhibits selective reflectivity at a specific wavelength. A central wavelength (selective reflection center wavelength) $\lambda$ of selective reflection depends on a pitch P (=helical period) of a helical structure in the cholesteric liquid crystalline phase and satisfies a relationship of $\lambda = n \times P$ with an average refractive index n of the cholesteric liquid crystalline phase. Therefore, the selective reflection central wavelength can be adjusted by adjusting the pitch of the helical structure.

The cholesteric liquid crystalline phase exhibits selective reflectivity with respect to left-handed or right-handed circular polarization at a specific wavelength. Whether or not the reflected light is dextrorotatory circularly polarized light or levorotatory circularly polarized light is determined depending on a helically twisted direction (sense) of the cholesteric liquid crystalline phase. Regarding the selective reflection of the circular polarization by the cholesteric liquid crystalline phase, in a case where the helically twisted direction of the cholesteric liquid crystalline phase is right, dextrorotatory circularly polarized light is reflected, and in a case where the helically twisted direction of the cholesteric liquid crystalline phase is left, levorotatory circularly polarized light is reflected.

In addition, a half-width $\Delta\lambda$ (nm) of a selective reflection range (circular polarization reflection range) where selective reflection is exhibited depends on $\Delta n$ of the cholesteric liquid crystalline phase and the helical pitch P and complies with a relationship of $\Delta\lambda = \Delta n \times P$. Therefore, the width of the selective reflection range can be controlled by adjusting $\Delta n$.

That is, the optically anisotropic layer 2 exhibits a function of selectively reflecting light in a predetermined wavelength range in specific circularly polarized light (dextrorotatory circularly polarized light or levorotatory circularly polarized light).

On the other hand, since the alignment pattern of the optical axis 30A in the in-plane direction of the optically anisotropic layer 2 is the same as the alignment pattern in the optically anisotropic layer 1 shown in FIG. 1, the same effect as the optically anisotropic layer 1 is exhibited. That is, in the same manner as in the optically anisotropic layer 1 described above, the optically anisotropic layer 2 exhibits an action of bending incidence light to a predetermined direction by changing an absolute phase of the incidence light. Therefore, the optically anisotropic layer 2 has both the action of bending the incidence light to a direction different from the incidence direction and the action of the above-described cholesteric alignment, and reflects light at an angle in a predetermined direction with respect to the reflection direction of specular reflection.

For example, the optically anisotropic layer 2 is designed such that the cholesteric liquid crystalline phase of the optically anisotropic layer 2 reflects dextrorotatory circularly polarized light. In this case, as shown in FIG. 5, in a case where a ray $L_6$ of dextrorotatory circularly polarized light $P_R$ is vertically incident into the main surface of the optically anisotropic layer 2, that is, along the normal line, a reflected ray $L_7$ which travels in a direction having a tilt with respect to the normal direction is generated. That is, the optically anisotropic layer 2 functions as a reflective type diffraction grating.

In the liquid crystal alignment pattern of the optically anisotropic layer shown in FIGS. 1 to 5, the optical axis 30A of the liquid crystal compound 30 continuously rotates only along the x direction in the plane.

However, in the optically anisotropic layer according to the embodiment of the present invention, various configurations can be used as long as the optical axis 30A of the liquid crystal compound 30 continuously rotates along one direction.

FIG. 6 is a schematic plan view of an optically anisotropic layer 3 of a design modified example. In FIG. 6, the liquid crystal alignment pattern is shown by the optical axis 30A of the liquid crystal compound. The optically anisotropic layer 3 has a liquid crystal alignment pattern that regions in which the optical axes 30A have the same alignment are provided concentrically, and that the one direction of the optical axes 30A, which changes rotationally, is provided radially from the center of the optically anisotropic layer 3.

In the optically anisotropic layer 3, the orientations of the optical axes 30A are changed while continuously rotating along a large number of directions from the center of the optically anisotropic layer 3 toward the outside, for example, a direction indicated by an arrow $A_1$, a direction indicated by an arrow $A_2$, a direction indicated by an arrow $A_3$, and the like.

In circularly polarized light incident into the optically anisotropic layer 3 having the above-described liquid crystal alignment pattern, the absolute phase changes depending on individual local regions having different orientations of optical axes of the liquid crystal compound 30. At this time, the amount of change in absolute phase varies depending on the orientations of the optical axes of the liquid crystal compound 30 into which circularly polarized light is incident.

In this way, in the optically anisotropic layer 3 having the concentric circular liquid crystal alignment pattern, that is, the liquid crystal alignment pattern in which the optical axis changes rotationally in a radial shape, transmission of incidence light can be allowed as diverging light or converging light depending on the rotation direction of the optical axis of the liquid crystal compound 30 and the direction of circularly polarized light to be incident.

That is, by setting the liquid crystal alignment pattern of the optically anisotropic layer in a concentric circular shape, the optically anisotropic layer exhibits, for example, a function as a convex lens or a concave lens.

Here, in a case where the liquid crystal alignment pattern of the optically anisotropic layer is concentric circular such that the optically anisotropic layer functions as a convex lens, it is preferable that the length of the single period Λ over which the optical axis rotates 180° in the liquid crystal alignment pattern gradually decreases from the center of the optically anisotropic layer toward the outer direction of the one direction in which the optical axis continuously rotates. The refraction angle of light with respect to an incidence direction increases as the length of the single period Λ in the liquid crystal alignment pattern decreases. Accordingly, the length of the single period Λ in the liquid crystal alignment pattern gradually decreases from the center of the optically anisotropic layer 3 toward the outer direction of the one direction in which the optical axis continuously rotates. As a result, the light gathering power of the optically anisotropic layer 3 can be improved, and the performance as a convex lens can be improved.

In addition, depending on the uses of the laminate such as a concave lens, it is preferable that the length of the single period Λ over which the optical axis rotates 180° in the liquid crystal alignment pattern gradually decreases from the center of the optically anisotropic layer 3 toward the outer direction of the one direction by reversing the direction in which the optical axis continuously rotates. The refraction angle of light with respect to an incidence direction increases as the length of the single period Λ in the liquid crystal alignment pattern decreases. Accordingly, the length of the single period Λ in the liquid crystal alignment pattern gradually decreases from the center of the optically anisotropic layer 3 toward the outer direction of the one direction in which the optical axis continuously rotates. As a result, the light diverging power of the optically anisotropic layer 3 can be improved, and the performance as a concave lens can be improved.

For example, in a case where the optically anisotropic layer is used as a concave lens, it is also preferable that a turning direction of incident circularly polarized light is reversed.

Conversely, the length of the single period Λ in the concentric circular liquid crystal alignment pattern may gradually increase from the center of the optically anisotropic layer 3 toward the outer direction of the one direction in which the optical axis continuously rotates.

Furthermore, depending on the uses of the optically anisotropic layer such as a case in which it is desired to provide a light amount distribution in the transmitted light, a configuration in which regions having partially different lengths of the single periods Λ in the one direction in which the optical axis continuously rotates are provided can also be used instead of the configuration in which the length of the single period Λ gradually changes in the one direction in which the optical axis continuously rotates.

Furthermore, a light emitting element may include an optically anisotropic layer in which the single period Λ is homogeneous over the entire surface, and an optically anisotropic layer in which regions having different lengths of the single periods Λ are provided.

In this way, the configuration of changing the length of the single period Λ over which the optical axis rotates 180° in the one direction in which the optical axis continuously rotates can also be used in the configuration shown in FIGS. 1 to 4 in which the optical axis 30A of the liquid crystal compound 30 continuously rotates only in the one direction of the x direction.

For example, by gradually decreasing the single period Λ of the liquid crystal alignment pattern in the x direction, an optically anisotropic layer which transmits light so as to be collected can be obtained. In addition, by reversing the direction over which the optical axis in the liquid crystal alignment pattern rotates 180°, an optically anisotropic layer which transmits light so as to be diffused only in the x direction can be obtained. By reversing the turning direction of incident circularly polarized light, an optically anisotropic layer which allows transmission of light to be diffused only in the arrow X direction can be obtained.

Furthermore, depending on the uses of the optically anisotropic layer such as a case in which it is desired to provide a light amount distribution in the transmitted light, a configuration in which regions having partially different lengths of the single periods Λ in the x direction are provided can also be used instead of the configuration in which the length of the single period Λ gradually changes in the x direction.

[Optical element]

An optical element according to the present invention includes the optically anisotropic layer formed of the liquid

crystal composition described above.

The application of the optical element is not particularly limited, but the optical element can be used for various uses where transmission of light in a direction different from an incidence direction is allowed, for example, an optical path changing member, a light collecting element, a light diffusing element to a predetermined direction, a diffraction element, or the like in an optical apparatus.

Among these, preferred examples of the application include a light guide element. The light guide element typically includes a light guide plate and a diffraction element which is disposed on the light guide plate (preferably, disposed to be spaced from the light guide plate). The optical element according to the present invention is suitably used as a diffraction element.

Examples

Hereinafter, the present invention will be described in more detail with reference to Examples. The materials, the amounts of materials used, the proportions, the treatment details, the treatment procedure, and the like shown in Examples below may be appropriately modified as long as the modifications do not depart from the spirit of the present invention. Therefore, the scope of the present invention should not be construed as being limited to Examples.

Abbreviations used in the following description are as follows.

DMF: N,N-dimethylformamide
DMAc: N,N-dimethylacetamide
THF: tetrahydrofuran
EDCI: 1-(3-dimethylaminopropyl)-3-ethylcarbodiimide hydrochloride
DMAP: 4-dimethylaminopyridine

[Synthesis Example]

[Synthesis of compound A1]

The compound A1 was synthesized according to the following procedure.

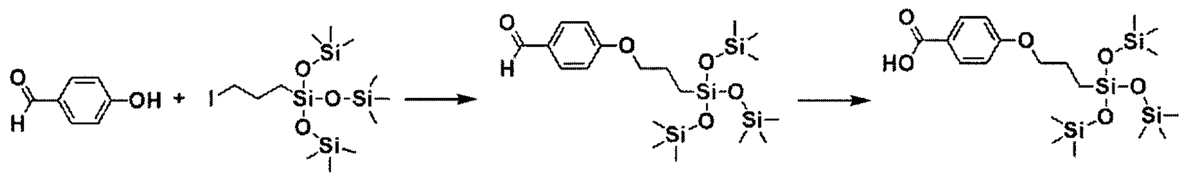

1a 1b 1c

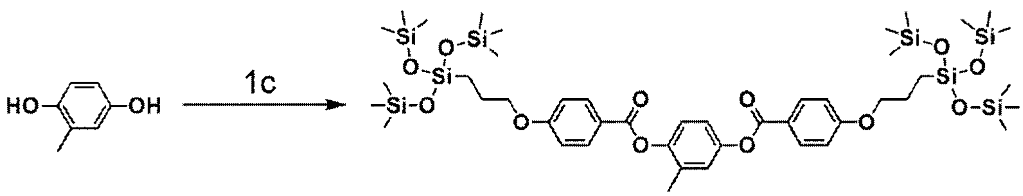


A1

<Synthesis of compound 1b>

A compound 1a (8.6 mmol) was added to a solution obtained by dissolving p-hydroxybenzaldehyde (8.2 mmol) and cesium carbonate (12.3 mmol) in DMF (50 mL), and the mixture was stirred at room temperature for 6 hours. After the stirring, ethyl acetate, a hydrochloric acid solution, and a saline were added to the obtained reaction solution, and the mixture was subjected to a liquid separation treatment, and the solvent was distilled off. The residue was purified by silica gel column chromatography (hexane/ethyl acetate = 20/1) to obtain a compound 1b (yield: 70%).

<Synthesis of compound 1c>

A solution A was prepared by dissolving $NaH_2PO_4$ dihydrate (2.2 mmol) and tetrabutylammonium hydrogen sulfate (0.08 mmol) in water (2.2 mL). Next, a solution B was prepared by dissolving the compound 1b (7.8 mmol) in ethyl acetate (6 mL) and THF (5 mL), and the solution A was added dropwise to the solution B. Hydrogen peroxide (1.3 mmol) was further added to the obtained mixture, a $NaClO_2$ (9.4 mmol) aqueous solution (2.5 mL) was added thereto, and the mixture was stirred at 40°C for 1 hour. After the stirring, the reaction was quenched with a sodium sulfite aqueous solution, ethyl acetate and a hydrochloric acid solution were added thereto, the mixture was subjected to a liquid separation treatment, and the solvent was distilled off to obtain a compound 1c (yield: 95%).

<Synthesis of compound A1>

Methylhydroquinone (1.0 mmol) and the compound 1c (2.2 mmol) were dissolved in dichloromethane (10 mL), and EDC1 (3.0 mmol) and DMAP (0.1 mmol) were further added thereto under water cooling. The obtained reaction solution was stirred at room temperature for 4 hours, and then water was added thereto to perform a liquid separation treatment. The reaction solution was purified by silica gel column chromatography (hexane/ethyl acetate = 20/1) to obtain the compound A1 (yield: 80%).
$^1H$ NMR (400 MHz, $CDCl_3$) δppm: 0 (s, 54H), 1.0 (t, 4H), 1.7 (quint, 4H), 2.1 (s, 3H), 3.9 (t, 4H), 6.8 (quart, 4H), 6.9 to 7.1 (m, 3H), 8 (t, 4H)

[Synthesis of compound A2]

The compound A2 was synthesized according to the following procedure.

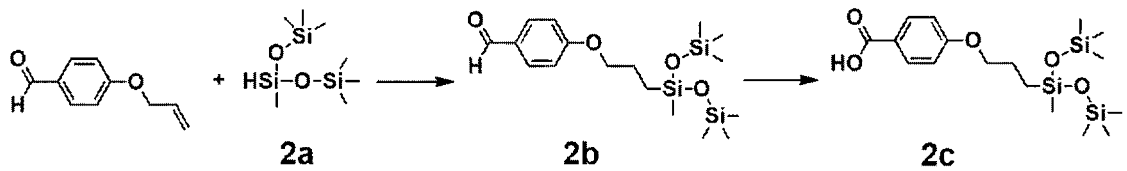

2a 2b 2c

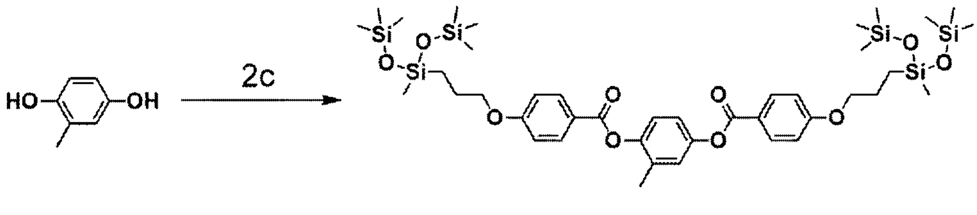


A2

<Synthesis of compound 2b>

p-Allyloxybenzaldehyde (18.5 mmol) and a compound 2a (18.5 mmol) were dissolved in THF (3 mL) under a nitrogen atmosphere, and Karsted's catalyst (Pt 2% xylene solution, 30 μL) was further added thereto under water cooling. The obtained reaction solution was stirred at room temperature for 2 hours, the solvent was distilled off, the residue was purified by silica gel column chromatography (hexane/ethyl acetate = 9/1) to obtain a compound 2b (yield: 70%).

<Synthesis of compound 2c>

A compound 2c was obtained by the same procedure as in <Synthesis of compound 1c> described above.

<Synthesis of compound A2>

The compound A2 was obtained by the same procedure as in <Synthesis of compound A1> described above.
$^1H$ NMR (400 MHz, $CDCl_3$) δppm: 0 (s, 6H), 0.1 (s, 36H), 0.6 (quint, 4H), 1.9 (m, 4H) 2.2 (s, 3H), 4.0 (t, 4H), 7.0 (m, 4H), 7.1 to 7.2 (m, 3H), 8.1 (t, 4H)

[Synthesis of compound A3]

The compound A3 was synthesized according to the following procedure.

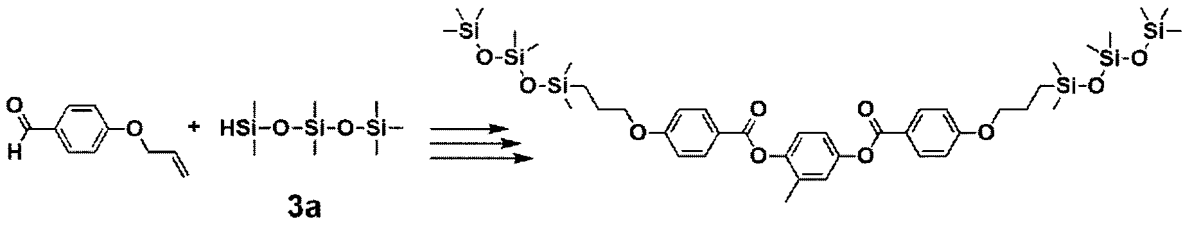

3a

A3

The compound A3 was synthesized by the same procedure as in [Synthesis of compound A2] described above, except that the compound 2a as a raw material component was changed to a compound 3a.
$^1$H NMR (400 MHz, $CDCl_3$) δppm: 0 (s, 12H), 0.1 (s, 18H), 0.1 (s, 12H), 0.7 (t, 4H), 1.9 (quint, 4H) 2.2 (s, 3H), 4.0 (t, 4H), 7.0 (quart, 4H), 7.1 to 7.2 (m, 3H), 8.1 (t, 4H)

[Synthesis of compound A40]

A compound A40 was synthesized according to the following procedure.

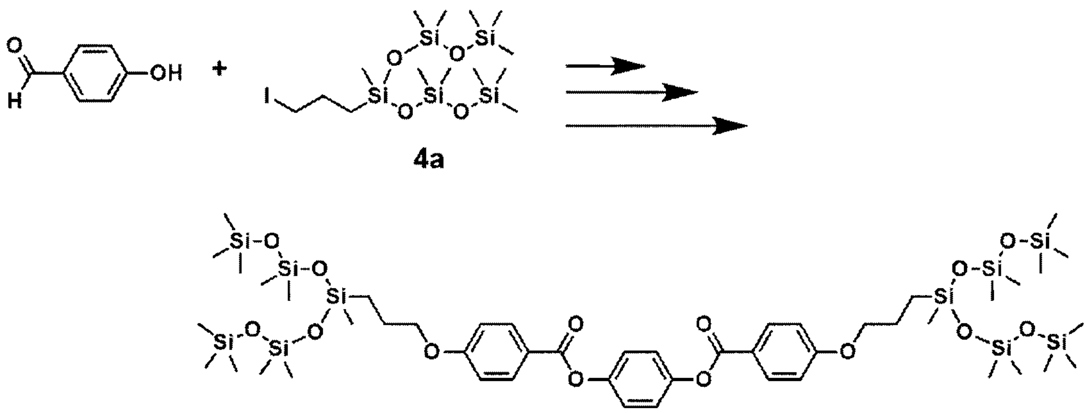

4a

A40

The compound A40 was synthesized by the same procedure as in [Synthesis of compound A1] described above, except that the compound 1a as a raw material component was changed to a compound 4a, and the raw material of the skeleton was changed to hydroquinone.

$^1$H NMR (400 MHz, $CDCl_3$) δppm: 0.1 (s, 30H), 0.1 (s, 36H), 0.6 (m, 4H), 1.9 (m, 4H), 4.0 (t, 4H), 7.0 (d, 4H), 8.2 (d, 4H)

[Synthesis of compound A41]

A compound A41 was synthesized according to the following procedure.

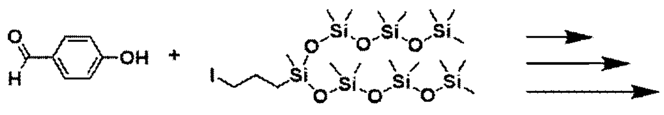

5a

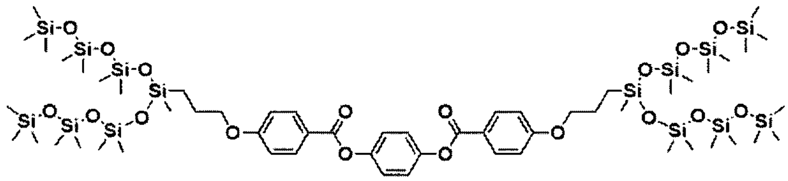

A41

The compound A41 was synthesized by the same procedure as in [Synthesis of compound A1] described above, except that the compound 1a as a raw material component was changed to a compound 5a, and the raw material of the skeleton was changed to hydroquinone.
$^1$H NMR (400 MHz, $CDCl_3$) δppm: 0 to 0.1 (s, 90H), 0.6 (m, 4H), 1.9 (m, 4H), 4.0 (t, 4H), 7.0 (d, 4H), 8.2 (d, 4H)

[Synthesis of compound A42]

A compound A42 was synthesized according to the following procedure.

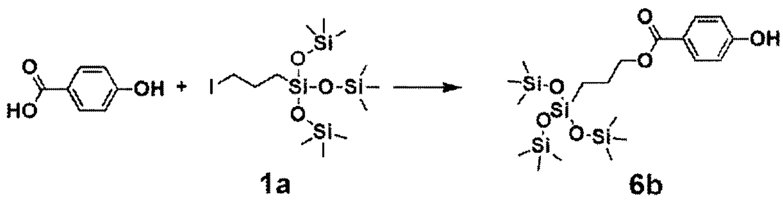

1a 6b

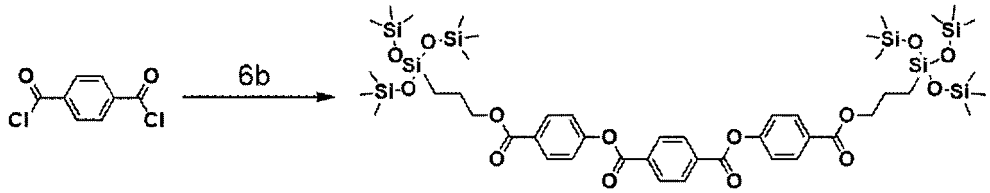


A42

<Synthesis of compound 6b>

p-Hydroxybenzoic acid (17.9 mmol) and the compound 1a (26.8 mmol) were dissolved in cyclopentanone (40 mL) and DMAc (40 mL) under a nitrogen atmosphere, the temperature was raised to 100°C, and then N,N-diisopropylethylamine (35.7 mmol) was added thereto. The obtained reaction solution was heated and stirred at 100°C for 5 hours. The solvent was distilled off, and the residue was purified by silica gel column chromatography (hexane/ethyl acetate) to obtain a compound 6b.

<Synthesis of compound A42>

Dichloroterephthalic acid (8.0 mmol) and the compound 6b (17.9 mmol) were dissolved in cyclopentanone (20 mL), and N,N-diisopropylethylamine (20.1 mmol) and N-methylimidazole (1.6 mmol) were added thereto under water cooling. The obtained reaction solution was stirred at room temperature for 1 hour, the solid precipitated by quenching with methanol and H2O was recovered, and the residue was purified by silica gel column chromatography (hexane/ethyl acetate) to obtain a compound A42 (yield: 70%).
$^1$H NMR (400 MHz, $CDCl_3$) δppm: 0 (s, 54H), 0.5 (quint,4H), 1.6 to 1.7 (m, 4H), 4.2 (t, 4H), 7.2 (d, 4H), 8.0 (d, 4H), 8.2 (s, 4H)

[Synthesis of compound A43]

A compound A43 was synthesized according to the following procedure.

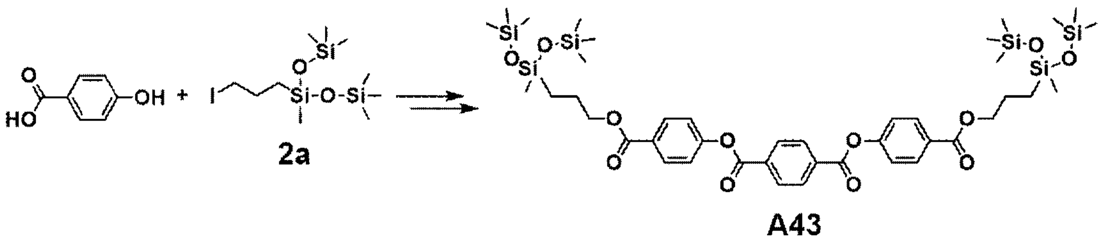

2a

A43

The compound A43 was synthesized by the same procedure as in [Synthesis of compound A42] described above, except that the compound 1a as a raw material component was changed to a compound 2a.
$^1$H NMR (400 MHz, $CDCl_3$) δppm: 0 (s, 6H), 0.1 (s, 36H), 0.5 (quint, 4H), 1.6 to 1.7 (m, 4H), 4.2 (t, 4H), 7.2 (d, 4H), 8.0 (d, 4H), 8.2 (s, 4H)

[Synthesis of compound A44]

A compound A44 was synthesized according to the following procedure.

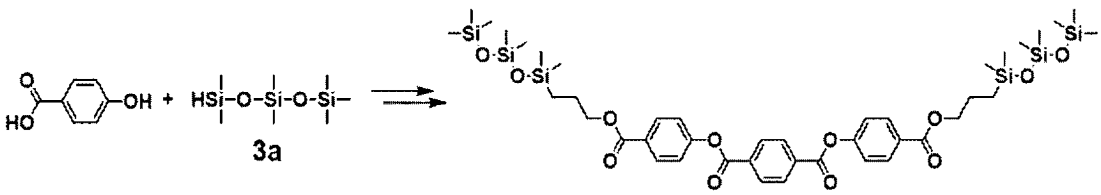

3a

A44

The compound A44 was synthesized by the same procedure as in [Synthesis of compound A42] described above, except that the compound 1a as a raw material component was changed to a compound 3a.
$^1$H NMR (400 MHz, $CDCl_3$) δppm: 0 (s, 12H), 0.1 (s, 18H), 0.1 (s, 12H), 0.5 (quint, 4H), 1.6 to 1.7 (m, 4H), 4.2 (t, 4H), 7.2 (d, 4H), 8.0 (d, 4H), 8.2 (s, 4H)

[Synthesis of compound A45]

A compound A45 was synthesized according to the following procedure.

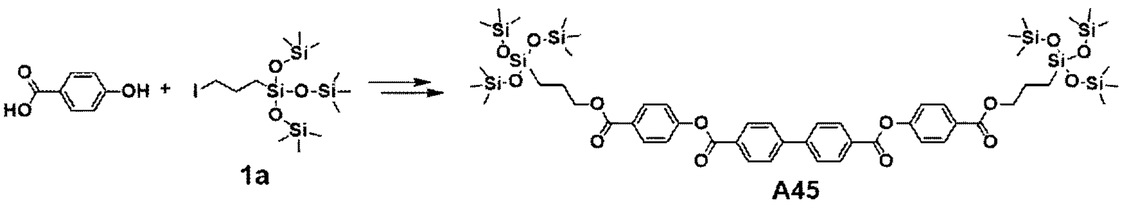

1a

A45

The compound A45 was synthesized by the same procedure as in [Synthesis of compound A42] described above, except that the raw material of the skeleton was changed to biphenyl-4,4'-dicarbonyl chloride.
$^1$H NMR (400 MHz, $CDCl_3$) δppm: 0 (s, 54H), 0.5 (quint, 4H), 1.6 to 1.7 (m, 4H), 4.2 (t, 4H), 7.2 (d, 4H), 7.7 (d, 4H), 8.0 (d, 4H), 8.2 (s, 4H)

[Synthesis of compound B27]

A compound B27 was synthesized according to the following procedure.

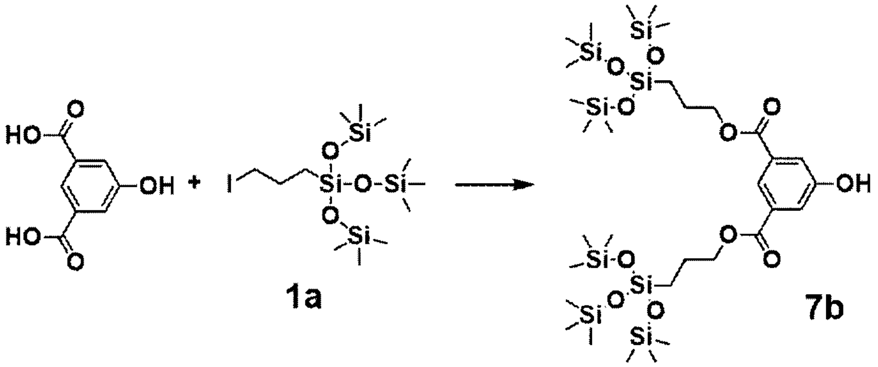

1a

7b

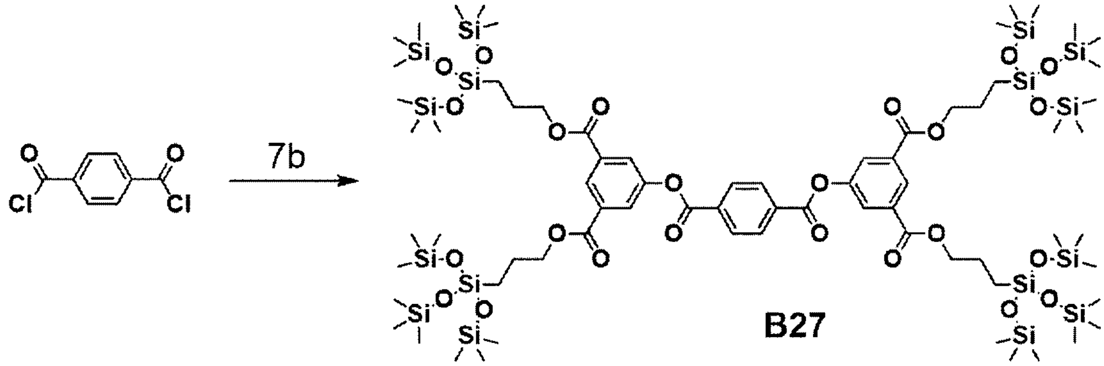


B27

<Synthesis of compound 7b>

5-Hydroxyisophthalic acid (4.47 mmol) and the compound 1a (13.4 mmol) were dissolved in cyclopentanone (20 mL) and DMAc (20 mL) under a nitrogen atmosphere, the temperature was raised to 100°C, and then N,N-diisopropylethylamine (17.9 mmol) was added thereto. The obtained reaction solution was heated and stirred at 100°C for 5 hours. The solvent was distilled off, and the residue was purified by silica gel column chromatography (hexane/ethyl acetate) to obtain a compound 7b.

<Synthesis of compound B27>

Dichloroterephthalic acid (2.01 mmol) and the compound 7b (4.47 mmol) were dissolved in cyclopentanone (10 mL), and N,N-diisopropylethylamine (5.0 mmol) and N-methylimidazole (0.4 mmol) were added thereto under water cooling. The obtained reaction solution was stirred at room temperature for 1 hour, the solid precipitated by quenching with methanol and $H_2O$ was recovered, and the residue was purified by silica gel column chromatography (hexane/ethyl acetate) to obtain a compound B27 (yield: 70%).
$^1$H NMR (400 MHz, $CDCl_3$) δppm: 0 (s, 108H), 0.5 (quint,8H), 1.6 to 1.7 (m, 8H), 4.2 (t, 8H), 7.2 (d, 4H), 8.0 (d, 4H), 8.6 (t, 2H)

[Synthesis of compound B28]

A compound B28 was synthesized according to the following procedure.

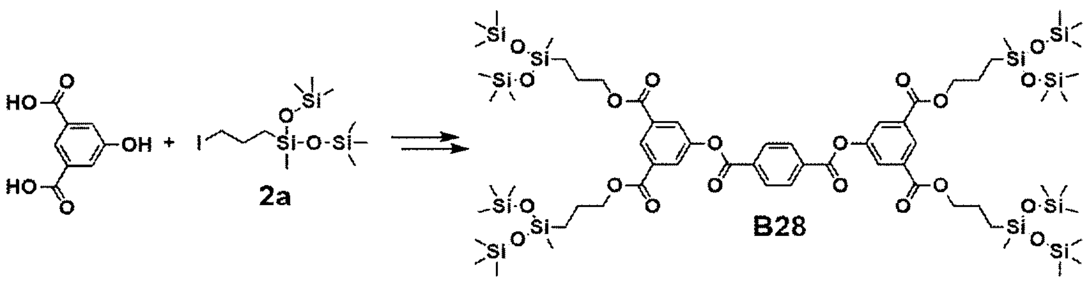

2a

B28

The compound B28 was synthesized by the same procedure as in [Synthesis of compound B27] described above, except that the compound 1a as a raw material component was changed to the compound 2a.
$^1$H NMR (400 MHz, $CDCl_3$) δppm: 0 (s, 12H), 0.1 (s, 72H), 0.5 (quint, 8H), 1.6 to 1.7 (m, 8H), 4.2 (t, 8H), 7.2 (d, 4H), 8.0 (d, 4H), 8.6 (t, 2H)

[Synthesis of compound B29]

A compound B29 was synthesized according to the following procedure.

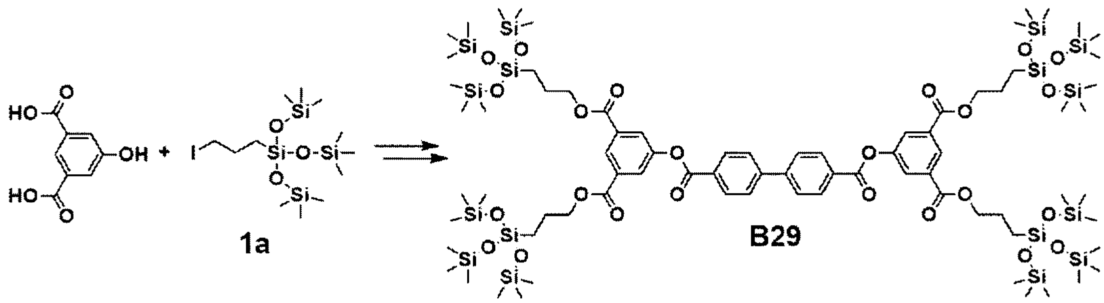

The compound B29 was synthesized by the same procedure as in [Synthesis of compound B27] described above, except that the skeleton of the raw material was changed to biphenyl-4,4'-dicarbonyl chloride.
$^1$H NMR (400 MHz, $CDCl_3$) δppm: 0 (s, 108H), 0.5 (quint, 8H), 1.6 to 1.7 (m, 8H), 4.2 (t, 8H), 7.7 (d, 4H), 8.0 (d, 4H), 8.2 (d, 4H), 8.6 (t, 2H)

[Synthesis of compound B30]

A compound B30 was synthesized according to the following procedure.

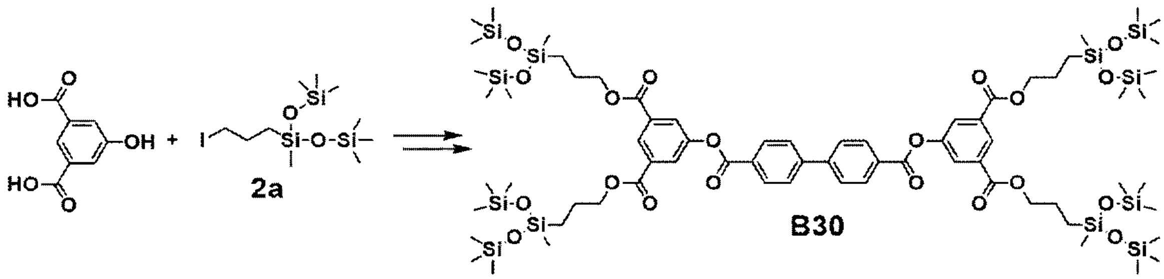

The compound B30 was synthesized by the same procedure as in [Synthesis of compound B27] described above, except that the compound 1a as a raw material component was changed to the compound 2a, and the skeleton of the raw material was changed to biphenyl-4,4'-dicarbonyl chloride.
$^1$H NMR (400 MHz, $CDCl_3$) δppm: 0 (s, 12H), 0.1 (s, 72H), 0.5 (quint, 8H), 1.6 to 1.7 (m, 8H), 4.2 (t, 8H), 7.7 (d, 4H), 8.0 (d, 4H), 8.2 (d, 4H), 8.6 (t, 2H)

[Synthesis of compound B31]

A compound B31 was synthesized according to the following procedure.

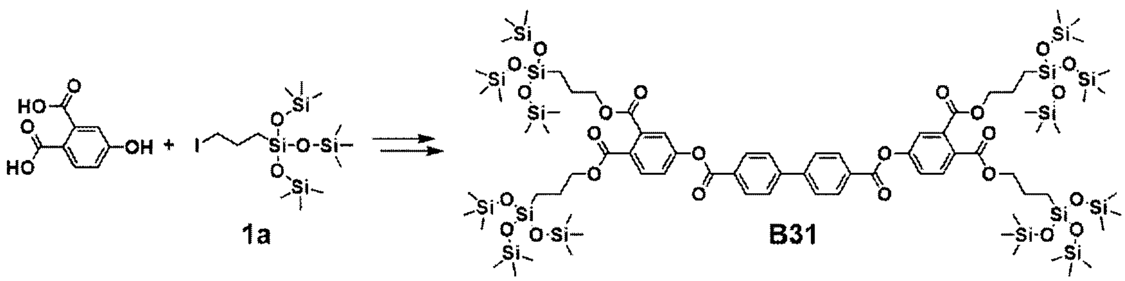

The compound B31 was synthesized by the same procedure as in [Synthesis of compound B27] described above, except that the 5-hydroxyisophthalic acid as a raw material component was changed to 4-hydroxyphthalic acid, and the skeleton of the raw material was changed to biphenyl-4,4'-dicarbonyl chloride.
$^1$H NMR (400 MHz, $CDCl_3$) δppm: 0 (s, 108H), 0.4 to 0.5 (m, 8H), 1.6 to 1.7 (m, 8H), 4.2 (t, 8H), 7.4 (dd, 2H), 7.5 (d, 2H), 7.7 (d, 4H), 7.8 (d, 2H), 8.2 (d, 4H)

[Synthesis of compound B32]

A compound B32 was synthesized according to the following procedure.

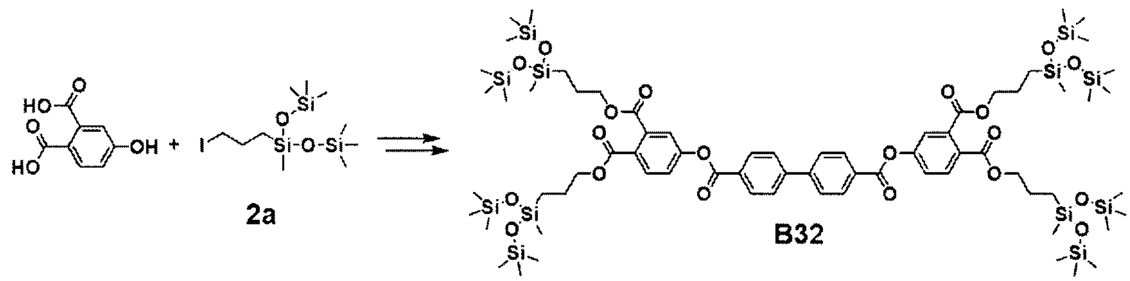
2a
B32

The compound B32 was synthesized by the same procedure as in [Synthesis of compound B27] described above, except that the 5-hydroxyisophthalic acid as a raw material component was changed to 4-hydroxyphthalic acid, the compound 1a was changed to the compound 2a, and the skeleton of the raw material was changed to biphenyl-4,4'-dicarbonyl chloride.
$^1$H NMR (400 MHz, $CDCl_3$) δppm: 0 (s, 12H), 0.1 (72H), 0.4 to 0.5 (m, 8H), 1.6 to 1.7 (m, 8H), 4.2 (t, 8H), 7.4 (dd, 2H), 7.5 (d, 2H), 7.7 (d, 4H), 7.8 (d, 2H), 8.2 (d, 4H)

[Synthesis of compound B33]

A compound B33 was synthesized according to the following procedure.

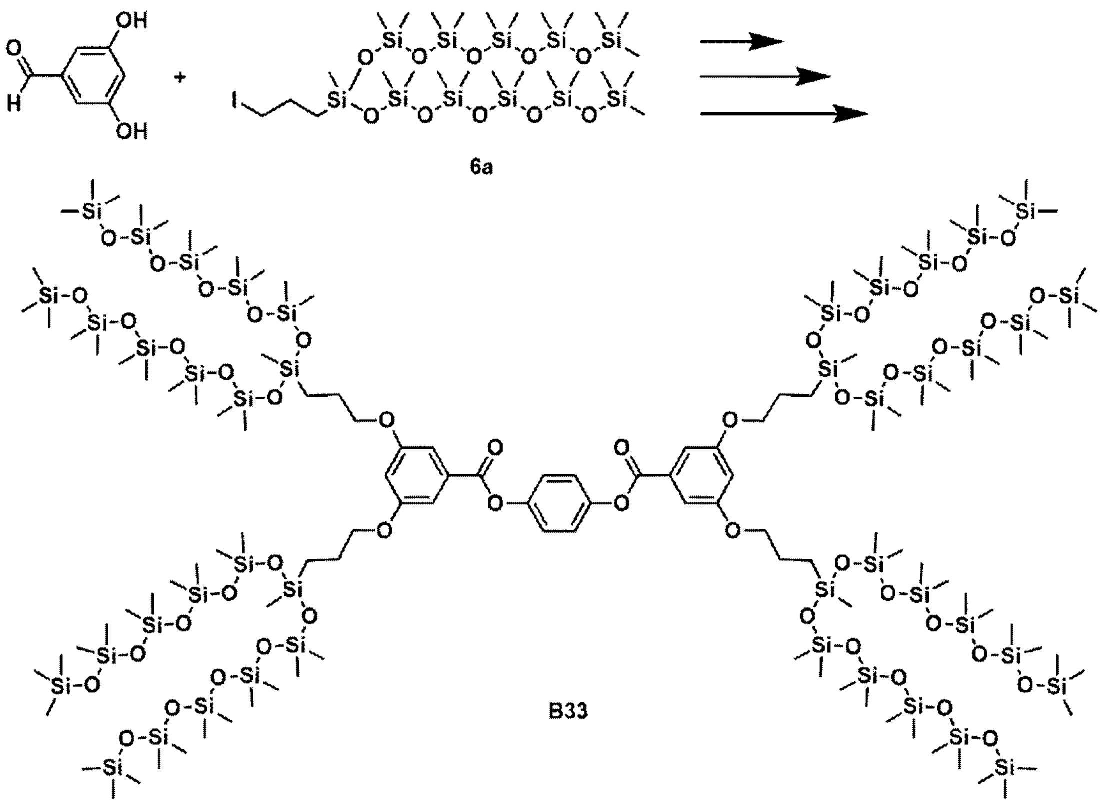
6a
B33

The compound B33 was synthesized by the same procedure as in [Synthesis of compound A1] described above, except that the compound 1a as a raw material component was changed to a compound 6a, and the raw material of the skeleton was changed to hydroquinone.
$^1H$ NMR (400 MHz, $CDCl_3$) δppm: 0 to 0.1 (m, 276H), 0.5 (quint,8H), 1.6 to 1.7 (m, 8H), 4.2 (t, 8H), 7.2 (d, 4H), 8.0 (d, 4H), 8.6 (t, 2H)

[Example 1]

[Production of photo-alignment film]

A glass substrate was used as a support. A coating liquid for forming a photo-alignment film was applied to the support using a spin coater at 2,500 rpm for 30 seconds. Next, the support on which the coating liquid for forming a photo-alignment film was applied was dried on a hot plate at 60°C for 60 seconds to form a dried film on the support.

| Coating liquid for forming photo-alignment film | |
|---|---|
| Material for photo alignment shown below | 1.00 part by mass |
| Water | 16.00 parts by mass |
| Butoxyethanol | 42.00 parts by mass |
| Propylene glycol monomethyl ether | 42.00 parts by mass |

-Material for photo alignment-

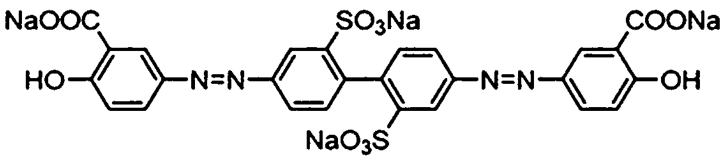

The above-described dried film was irradiated with linearly polarized UV light at 10 mW/cm$^2$ for 30 seconds using a 365 nm LED-UV irradiation device through a wire grid polarizing plate to form a photo-alignment film.

[Production and evaluation of optically anisotropic layer]

<Preparation of coating liquid 1 for forming optically anisotropic layer (coating liquid 1)>

A coating liquid 1 for forming an optically anisotropic layer, having the following formulation, was prepared.

| Coating liquid 1 for forming optically anisotropic layer | |
|---|---|
| · Polymerizable liquid crystal compound 1 shown below | 80.00 parts by mass |
| · Omnirad 819 (manufactured by IGM Resins B.V.) | 3.00 parts by mass |
| · Aligning agent (compound A1) described in Table 1 | 0.10 parts by mass |
| · 2-Butanone | amount at which concentration of solute was 30% by mass |

-Polymerizable liquid crystal compound 1 (mixture)-

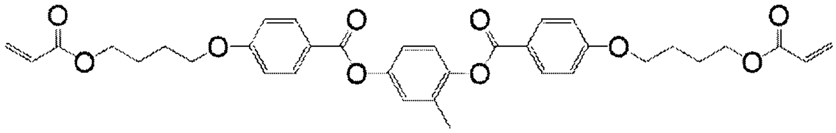

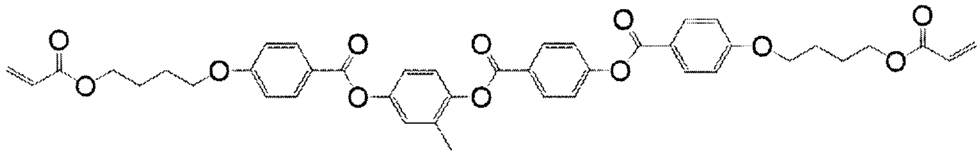

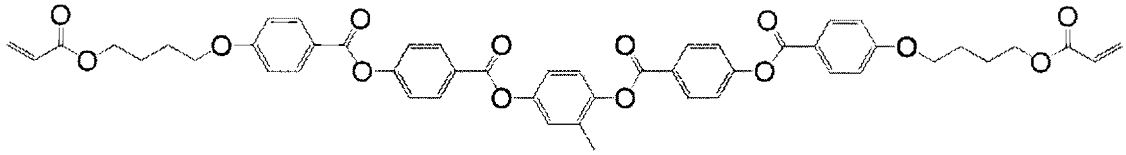

<Production and evaluation of optically anisotropic layer 1A>

50 μL of the coating liquid 1 for forming an optically anisotropic layer was weighed using a micropipette, and the coating liquid was added dropwise onto the photo-alignment film and spin-coated at a rotation speed of 1,500 rpm. Next, the obtained coating film was subjected to a heating treatment at 80°C for 1 minute, and then irradiated with UV light at 10 $mW/cm^2$ for 30 seconds using a 365 nm LED-UV irradiation device in a nitrogen atmosphere to form an optically anisotropic layer 1A.

The obtained optically anisotropic layer 1A was observed with an optical microscope, and aligning properties were evaluated according to the following standard. The results are shown in Table 1.

(Evaluation standard)

"A": almost no alignment defect
"B": slight alignment defect
"C": many alignment defects

<Production and evaluation of optically anisotropic layer 1B>

200 μL of cyclohexanone was weighed using a micropipette, and added dropwise onto the optically anisotropic layer 1A and spin-coated at a rotation speed of 1,500 rpm. Subsequently, 50 μL of the coating liquid 1 for forming an optically anisotropic layer was weighed using a micropipette, and the coating liquid was added dropwise onto the optically anisotropic layer 1A and spin-coated at a rotation speed of 1,500 rpm. Next, the obtained coating film was subjected to a heating treatment at 80°C for 1 minute, and then irradiated with UV light at 10 $mW/cm^2$ for 30 seconds using a 365 nm LED-UV irradiation device in a nitrogen atmosphere to form an optically anisotropic layer 1B.

By the above-described procedure, a laminate including the support, the photo-alignment film, the optically anisotropic layer 1A, and the optically anisotropic layer 1B in this order was obtained.

Aligning properties of the optically anisotropic layer 1B in the obtained laminate were observed with an optical microscope. In addition, a 5 mm slit was made in the obtained laminate, and a cross-cut test was carried out using a cellophane tape (registered trademark, the same applies hereinafter) No. 405 manufactured by NICHIBAN CO., LTD. to observe adhesiveness between layers (interfacial adhesiveness between the optically anisotropic layer 1A and the optically anisotropic layer 1B and interfacial adhesiveness between the cellophane tape No. 405 manufactured by NICHIBAN CO., LTD. and the optically anisotropic layer 1B).

Based on the obtained observation results, evaluation was performed according to the following evaluation standard. The results are shown in Table 1.

(Evaluation standard for adhesiveness)

"A": almost no peeling between layers
"B": slight peeling between layers
"C": some peeling between layers
"D": numerous peeling between layers

[Examples 2 to 16 and Comparative Examples 1 to 3]

[Preparation of coating liquids 2 to 16 and R1 to R3 for forming optically anisotropic layer]

Coating liquids 2 to 16 and R1 to R3 for forming an optically anisotropic layer (coating liquids 2 to 16, and R1 to R3) were prepared with the same formation as the coating liquid 1 for forming an optically anisotropic layer described above, except that the aligning agent was changed as described in Table 1.

The aligning agents (compounds A1 to A3, A40 to A45, B27 to B33, comparative compound Z1, and comparative compound Z2) shown in Table 1 are the following compounds.

<Compound A1>

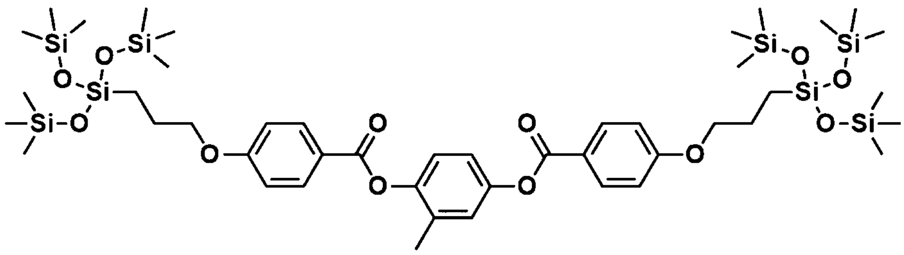

<Compound A2>

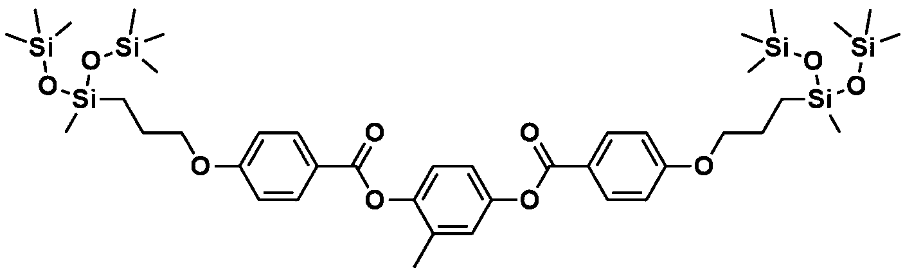

<Compound A3>

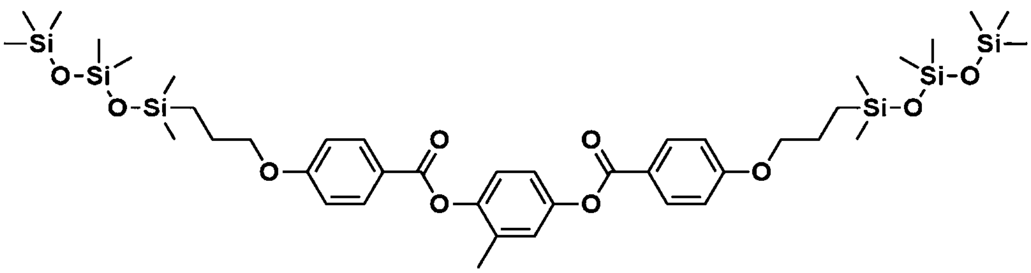

<Compound A40>

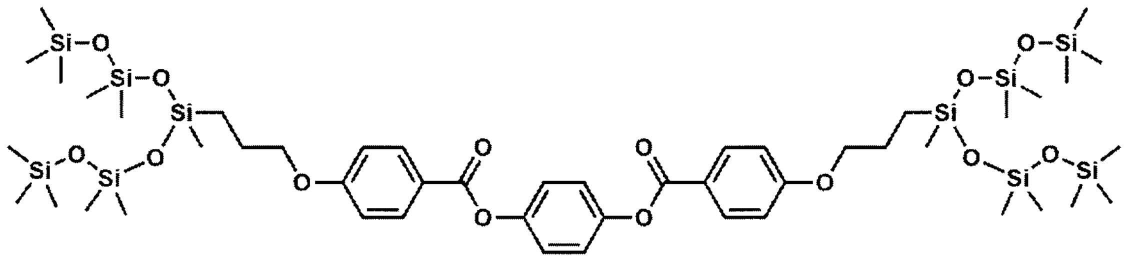

<Compound A41>

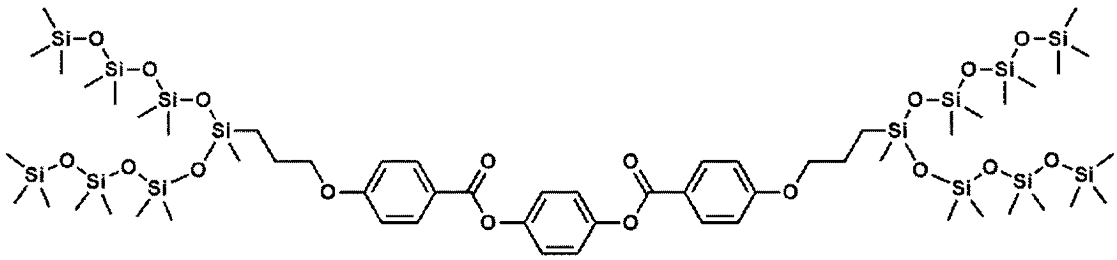

<Compound A42>

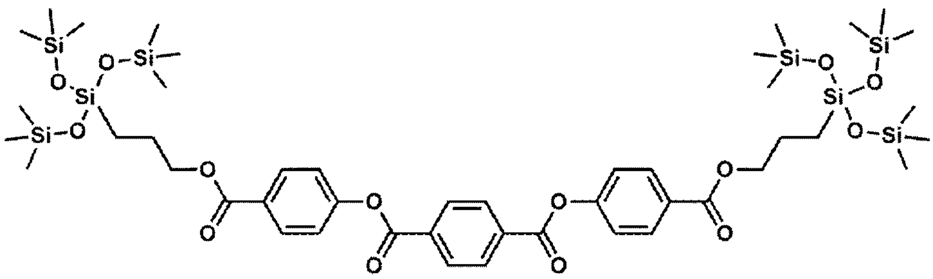

<Compound A43>

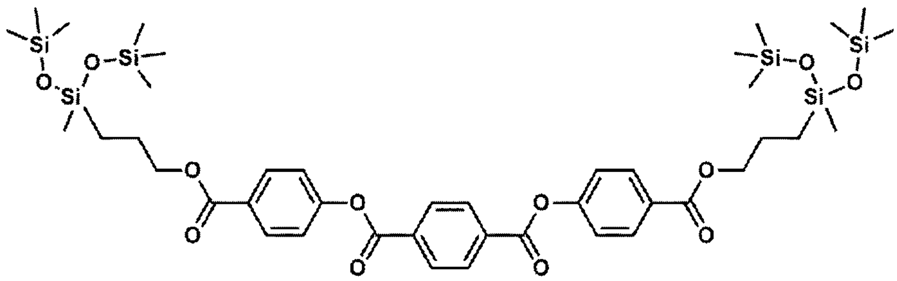

<Compound A44>

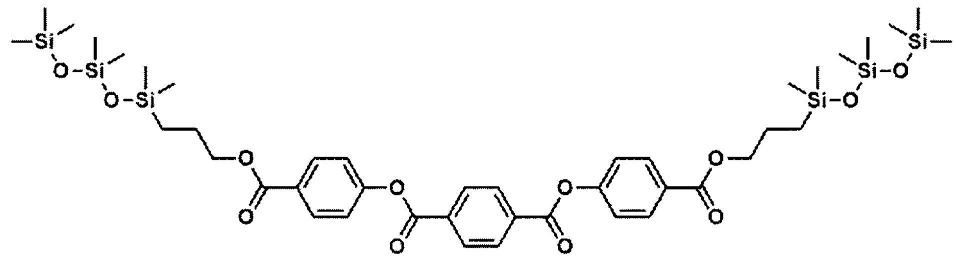

<Compound A45>

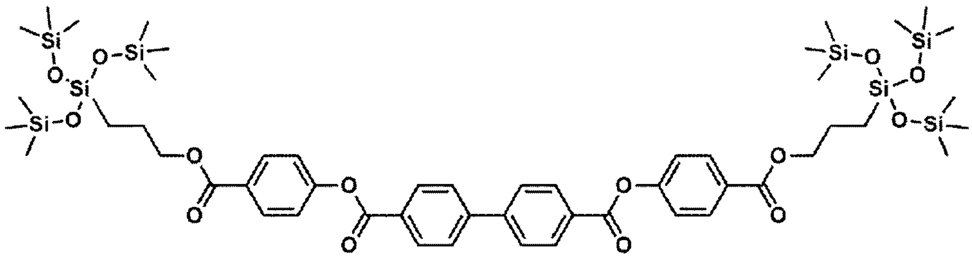

<Compound B27>

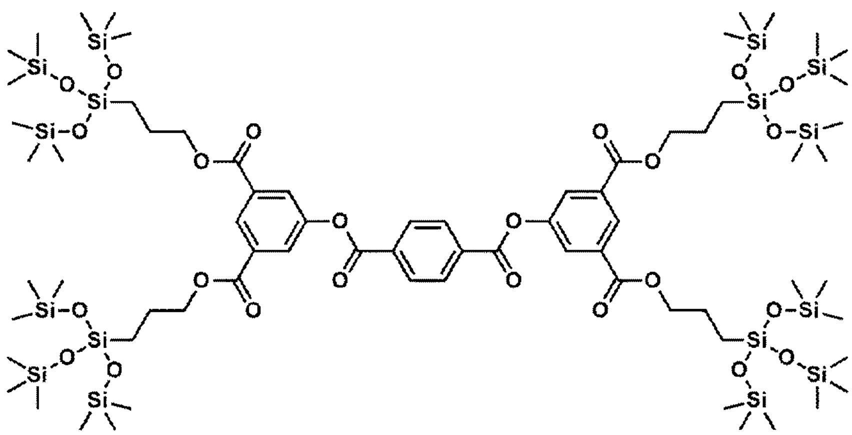

<Compound B28>

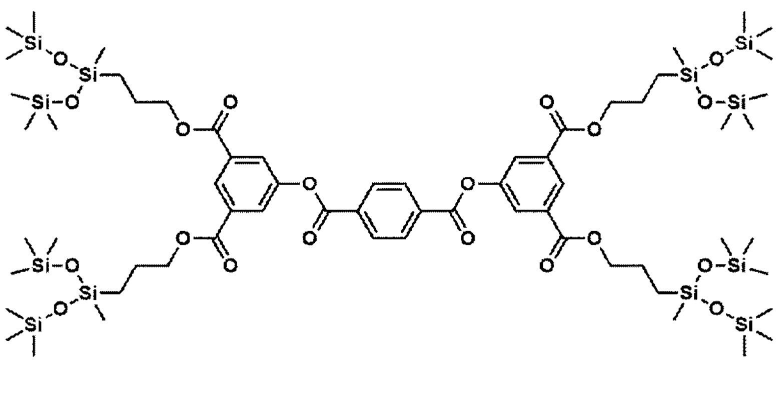

<Compound B29>

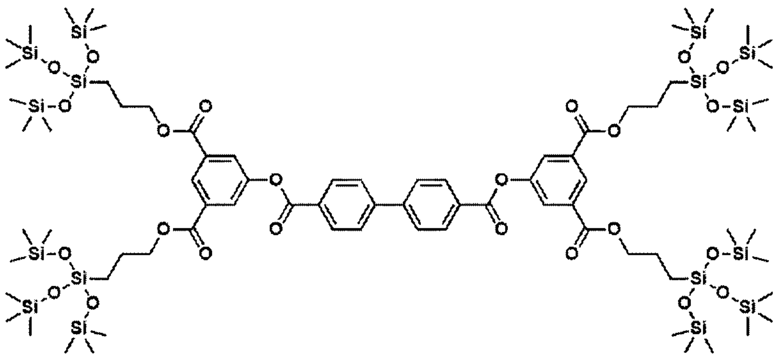

<Compound B30>

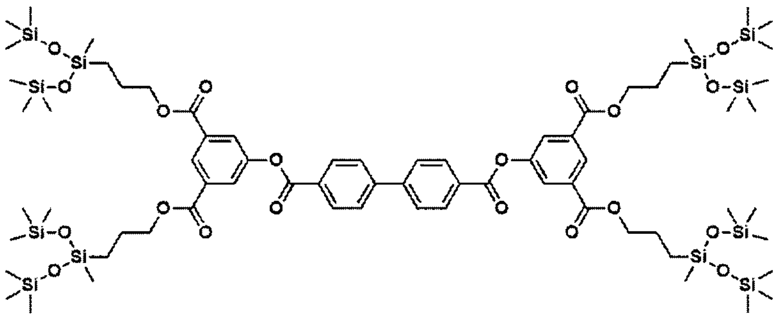

<Compound B31>

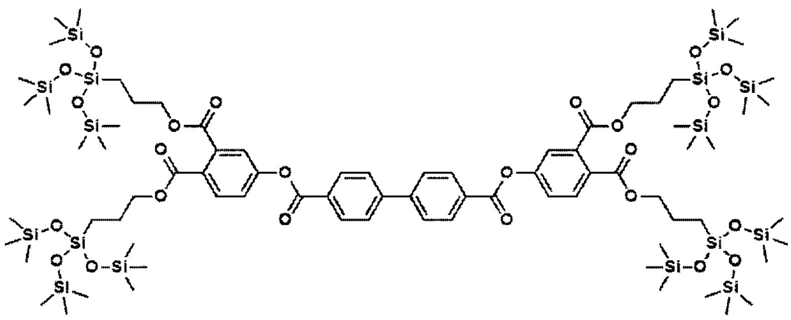

<Compound B32>

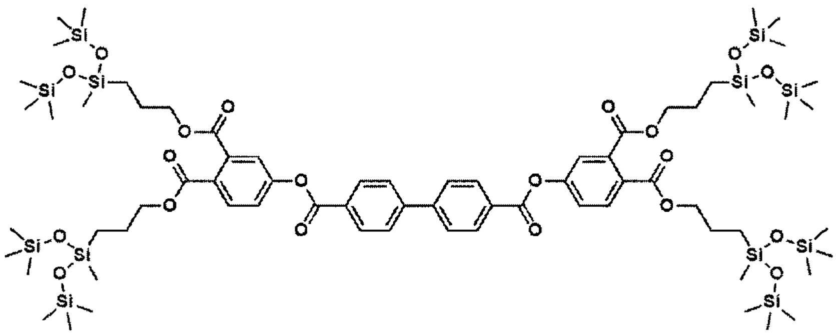

<Compound B33>

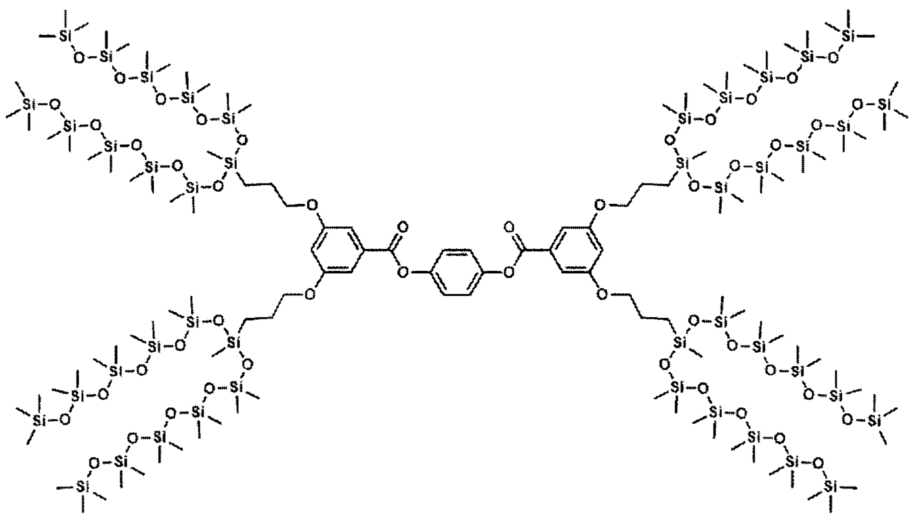

<Compound Z1>

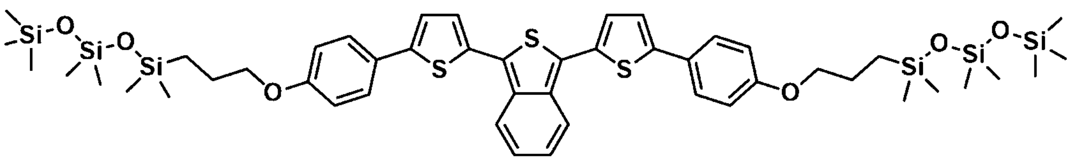

<Compound Z2>

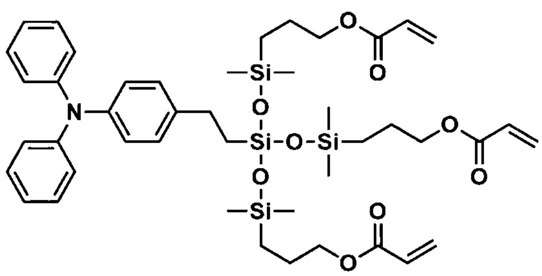

[Production and evaluation of optically anisotropic layers 2A to 16A, and R1A to R3A]

Optically anisotropic layers 2A to 16A, and R1A to R3A were produced by the same procedure as in <Production and evaluation of optically anisotropic layer 1A> described above, except that the coating liquid 1 for forming an optically anisotropic layer was changed to the coating liquids 2 to 16, and R1 to R3 for forming an optically anisotropic layer described in Table 1, and aligning properties were evaluated as described above. The results are shown in Table 1.

[Production and evaluation of optically anisotropic layers 2B to 16B, and R1B to R3B]

Optically anisotropic layers 2B to 16B, and R1B to R3B were formed on the surface of the optically anisotropic layers 2A to 16A, and R1A to R3A, respectively, by the same procedure as in <Production and evaluation of optically anisotropic layer 1B> described above, except that the coating liquid 1 for forming an optically anisotropic layer was changed to the coating liquids 2 to 16, and R1 to R3 for forming an optically anisotropic layer shown in Table 1 (that is, for example, in a case of Example 2, the optically anisotropic layer 2B was formed on the surface of the optically anisotropic layer 2A; and in a case of Example 3, the optically anisotropic layer 3B was formed on the surface of the optically anisotropic layer 3A). Next, the evaluation was performed by the same procedure as in <Production and evaluation of optically anisotropic layer 1B> described above using the produced laminate. The results are shown in Table 1.

[Table 19]

| Table 1 | Aligning agent of coating liquid for forming optically anisotropic laver | | | Evaluation result | |
|---|---|---|---|---|---|
| | Coating liquid number | Type of aligning agent | Si content | Aligning properties | Adhesiveness |
| Example 1 | 1 | Compound A1 | 21.7% | A | A |
| Example 2 | 2 | Compound A2 | 18.9% | B | A |
| Example 3 | 3 | Compound A3 | 18.9% | B | A |
| Example 4 | 4 | Compound A40 | 24.0% | A | B |
| Example 5 | 5 | Compound A41 | 26.8% | A | C |
| Example 6 | 6 | Compound A42 | 20.7% | A | A |
| Example 7 | 7 | Compound A43 | 18.0% | B | A |
| Example 8 | 8 | Compound A44 | 18.0% | B | A |
| Example 9 | 9 | Compound A45 | 19.4% | B | A |
| Example 10 | 10 | Compound B27 | 24.3% | A | B |
| Example 11 | 11 | Compound B28 | 21.8% | A | A |
| Example 12 | 12 | Compound B29 | 23.4% | A | B |
| Example 13 | 13 | Compound B30 | 20.7% | A | A |
| Example 14 | 14 | Compound B31 | 23.4% | A | B |
| Example 15 | 15 | Compound B32 | 20.7% | A | A |
| Example 16 | 16 | Compound B33 | 32.4% | A | C |
| Comparative Example 1 | R1 | Compound Z1 | 16.6% | C | D |
| Comparative Example 2 | R2 | Compound Z2 | 13.0% | C | D |
| Comparative Example 3 | R3 | None | - | C | D |

From the results of Table 1, it was clarified that, according to the liquid crystal composition of Examples, in a case of forming a liquid crystal layer, the liquid crystal compound had excellent aligning properties, and the adhesiveness between the liquid crystal layer after being cleaned with a solvent and a layer disposed adjacent to the liquid crystal layer was excellent.

In addition, from the comparison between Examples 1 to 16, it was clarified that, in a case where the silicon atom content in the specific aligning agent was 20.0% or more, the liquid crystal compound had excellent aligning properties in a

case of forming a liquid crystal layer; and in a case where the silicon atom content was 23.0% or less, the liquid crystal compound had excellent adhesiveness in a case of forming a liquid crystal layer.

Explanation of References

1, 2, 3: optically anisotropic layer
xy plane: sheet surface
z direction: thickness direction
30: liquid crystal compound
A: length of single period
30A: optical axis derived from liquid crystal compound 30
$\theta$: angle
R: region
d: thickness (film thickness) of optically anisotropic layer
$P_L$: levorotatory circularly polarized light
$P_R$: dextrorotatory circularly polarized light
$L_1$, $L_4$, $L_6$: incident ray
$L_2$, $L_5$, $L_7$: transmitted ray
Q1, Q2: absolute phase
E1, E2: equiphase plane
A1, A2, A3: direction

## Claims

**1.** A liquid crystal composition comprising:

a compound represented by Formula (1); and
a liquid crystal compound,

$$B\text{-}Z\text{-}(A\text{-}Z)_{n1}\text{-}B \qquad (1)$$

in Formula (1), A's each independently represent a group selected from the group consisting of groups represented by Formula (A-1) to Formula (A-13), provided that, in a case where n1 is an integer of 2 or more, a plurality of A's may be the same or different from each other,

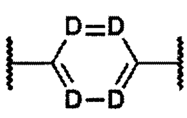
(A-1)

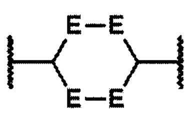
(A-2)

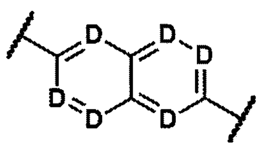
(A-3)

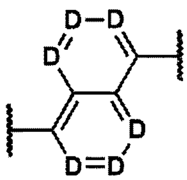
(A-4)

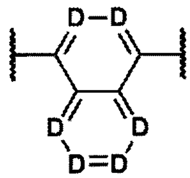
(A-5)

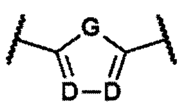
(A-6)

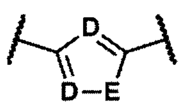
(A-7)

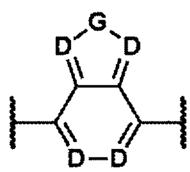
(A-8)

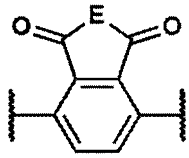
(A-9)

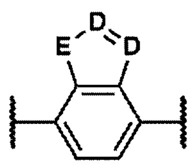
(A-10)

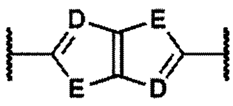

**(A-11)**

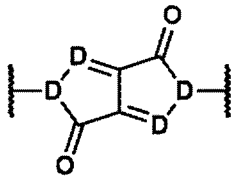

**(A-12)**

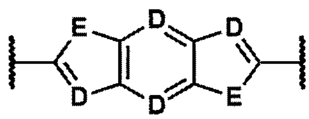

**(A-13)**

in Formula (A-1) to Formula (A-13), D's each independently represent $CR^{A1}$ or a nitrogen atom, E's each independently represent $CR^{A2}R^{A3}$, $NR^{A4}$, an oxygen atom, or a sulfur atom, G represents $CR^{A5}R^{A6}$, $NR^{A7}$, or an oxygen atom, and $R^{A1}$ to $R^{A7}$ each independently represent a hydrogen atom or a substituent S1,

Z's each independently represent a single bond, -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, -CH=CH-COO-, -CH=CH-OCO-, $-COO-CH_2CH_2-$, $-OCO-CH_2CH_2-$, $-COO-CH_2-$, $-OCO-CH_2-$, -COO-NH-, -CH=CH-, -N=N-, -CH=N-N=CH-, -CH=N-, -CF=CF-, -C=C-, -C≡C-C≡C-, $-OCH_2CH_2O-$, $-SCH_2CH_2S-$, -O-CO-CO-O-, or $-O-CH_2-O-$, n1 represents an integer of 1 or more, and B's each independently represent a group selected from the group consisting of groups represented by Formula (B-1) to Formula (B-5),

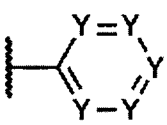

**(B-1)**

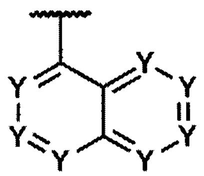

**(B-2)**

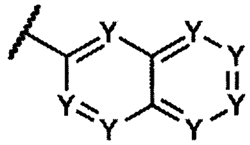

**(B-3)**

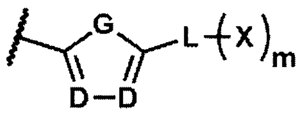

**(B-4)**

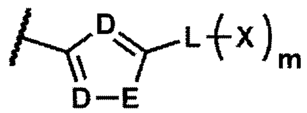

**(B-5)**

in Formula (B-1) to Formula (B-5), Y's each independently represent $CR^{B1}$ or a nitrogen atom, $R^{B1}$'s each independently represent a hydrogen atom, a substituent S1, or $-L-(X)_m$, where at least one of Y's represents $CR^{BT}$, $R^{BT}$ represents $-L-(X)_m$, D's each independently represent $CR^{A1}$ or a nitrogen atom, E represents $CR^{A2}R^{A3}$, $NR^{A4}$, an oxygen atom, or a sulfur atom, G represents $CR^{A5}R^{A6}$, $NR^{A7}$, or an oxygen atom, $R^{A1}$ to $R^{A7}$ each independently represent a hydrogen atom or a substituent S1, L's each independently represent a single bond or a chain-like (m+1)-valent hydrocarbon group, where in the hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C≡C-, at least one -CH< may be replaced with -N< or -SiH<, and at least one >C< may be replaced with >Si<, m represents an integer of 1 or more, and X represents a group selected from the group consisting of the groups represented by Formula (C-1) to Formula (C-3), provided that, in a case where m is an integer of 2 or more, a plurality of X's may be the same or different from each other,

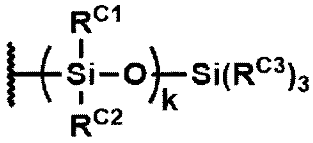

(C-1)

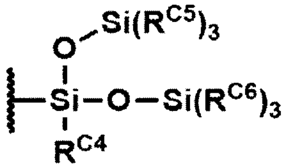

(C-2)

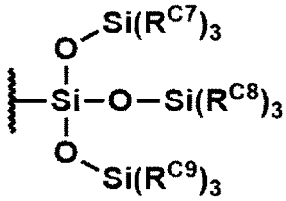

(C-3)

in Formula (C-1), $R^{C1}$ to $R^{C3}$ each independently represent an alkyl group having 1 to 10 carbon atoms, k represents an integer of 2 to 20, in Formula (C-1), a plurality of $R^{C1}$'s, a plurality of $R^{C2}$'s, and a plurality of $R^{C3}$'s may be the same or different from each other, in Formula (C-2), $R^{C4}$ represents an alkyl group having 1 to 10 carbon atoms, and $R^{C5}$ and $R^{C6}$ each independently represent an alkyl group having 1 to 10 carbon atoms or a group represented by Formula (C-1X), in Formula (C-2), a plurality of $R^{C5}$'s and a plurality of $R^{C6}$'s may be the same or different from each other, in Formula (C-3), $R^{C7}$ to $R^{C9}$ each independently represent an alkyl group having 1 to 10 carbon atoms or a group represented by Formula (C-1X), in Formula (C-3), a plurality of $R^{C7}$'s, a plurality of $R^{C8}$'s, and a plurality of $R^{C9}$'s may be the same or different from each other,

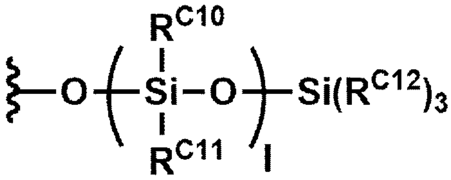

(C-1X)

in Formula (C-1X), $R^{C10}$ to $R^{C12}$ each independently represent an alkyl group having 1 to 10 carbon atoms, and 1 represents an integer of 0 to 20, in Formula (C-1X), in a case where 1 is an integer of 2 or more, a plurality of $R^{C10}$'s or a plurality of $R^{C11}$'s may be the same or different from each other, and a plurality of $R^{C12}$'s may be the same or different from each other,

the substituent S1 is a group selected from the group consisting of a halogen atom, an alkyl group, a cycloalkyl group, an aryl group, a heterocyclic group, a cyano group, a hydroxy group, a nitro group, a carboxyl group, an alkoxy group, an aryloxy group, a silyloxy group, a heterocyclic oxy group, an acyloxy group, a carbamoyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo or heterocyclic azo group, an imide group, a phosphino group, a phosphinyl group, a phosphinyloxy group, a phosphinylamino group, and a silyl group.

**2.** The liquid crystal composition according to claim 1,
wherein, in Formula (B-1) to Formula (B-5), X represents the group represented by Formula (C-2) or Formula (C-3).

**3.** The liquid crystal composition according to claim 1 or 2,
wherein, in Formula (B-1) to Formula (B-5), X represents the group represented by Formula (C-3).

**4.** The liquid crystal composition according to claim 1 or 2,
wherein a silicon atom content of the compound represented by Formula (1) is 17.5% to 40.0%.

**5.** The liquid crystal composition according to claim 1 or 2,
wherein, in Formula (B-1) to Formula (B-5), m represents 1, and L represents a chain-like alkylene group having 1 to 4 carbon atoms in total, in which at least one $-CH_2-$ may be replaced with -NH-, -O-, -S-, -CO-, -CS-, -SO-, or $-SO_2-$.

**6.** The liquid crystal composition according to claim 1,

wherein B's each independently represent a group selected from the group consisting of groups represented by Formula (B-1-1) to Formula (B-1-5),

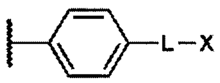
(B-1-1)

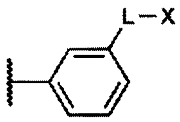
(B-1-2)

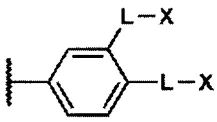
(B-1-3)

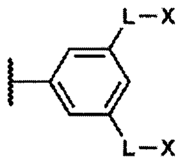
(B-1-4)

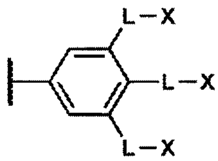
(B-1-5)

in Formula (B-1-1) to Formula (B-1-5), L's each independently represent a single bond or a chain-like divalent hydrocarbon group, where in the hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C≡C-, at least one -CH< may be replaced with -N< or -SiH<, and at least one >C< may be replaced with >Si<, and X's each independently represent a group selected from the group consisting of the groups represented by Formula (C-1) to Formula (C-3).

**7.** The liquid crystal composition according to claim 1 or 2,

wherein the liquid crystal compound is a compound represented by Formula (2),

$$P\text{-}L\text{-}T\text{-}(Q\text{-}T)_{n2}\text{-}L\text{-}P \qquad (2)$$

in Formula (2), P's each independently represent a hydrogen atom or a substituent S2,
L's each independently represent a single bond or an alkylene group in which at least one $-CH_2-$ may be replaced with -NH-, -O-, -S-, -CO-, -SO-, or $-SO_2-$,
T's each independently represent a single bond, -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, -CH=CH-COO-, -CH=CH-OCO-, $-COO-CH_2CH_2-$, $-OCO-CH_2CH_2-$, $-COO-CH_2-$, $-OCO-CH_2-$, -COO-NH-, -CH=CH-, -N=N-, -CH=N-N=CH-, -CH=N-, -N=CH-, -CF=CF-, -C=C-, -C≡C-C≡C-, $-OCH_2CH_2O-$, or $-SCH_2CH_2S-$, and
Q represents a divalent aromatic ring group or a divalent alicyclic ring group, which may have a substituent, provided that, in a case where n2 is an integer of 2 or more, a plurality of Q's in the formula may be the same or different from each other,
n2 represents an integer of 1 or more, and
the substituent S2 is a group selected from the group consisting of a halogen atom, an alkyl group, a cycloalkyl group, an alkynyl group, an aryl group, a heterocyclic group, a cyano group, a hydroxy group, a nitro group, a carboxyl group, an alkoxy group, an aryloxy group, a silyloxy group, a heterocyclic oxy group, an acyloxy group, a carbamoyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo or heterocyclic azo group, an imide group, a phosphino group, a phosphinyl group, a phosphinyloxy group, a phosphinylamino group, a silyl group, and a polymerizable group.

**8.** The liquid crystal composition according to claim 7,
wherein, in Formula (2), at least one of two P's represents an acryloyloxy group, a methacryloyloxy group, an epoxy group, a vinyl ether group, or a vinyl ester group.

**9.** The liquid crystal composition according to claim 7,
wherein, in Formula (2), two P's each independently represent an acryloyloxy group, a methacryloyloxy group, an epoxy group, a vinyl ether group, or a vinyl ester group.

**10.** The liquid crystal composition according to claim 7,
wherein the compound represented by Formula (2) includes a tolan structural moiety.

**11.** An optically anisotropic layer formed of the liquid crystal composition according to claim 1 or 2.

**12.** A cured film formed of the liquid crystal composition according to claim 1 or 2.

**13.** A diffraction element formed of the liquid crystal composition according to claim 1 or 2.

**14.** A compound represented by Formula (1),

$$B\text{-}Z\text{-}(A\text{-}Z)_{n1}\text{-}B \qquad (1)$$

in Formula (1), A's each independently represent a group selected from the group consisting of groups represented by Formula (A-1) to Formula (A-13), provided that, in a case where n1 is an integer of 2 or more, a plurality of A's may be the same or different from each other,

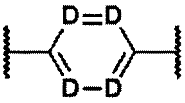
(A-1)
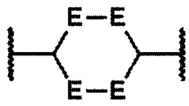
(A-2)
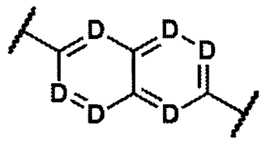
(A-3)
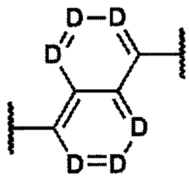
(A-4)
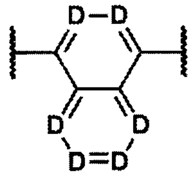
(A-5)

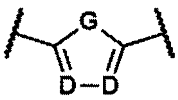
(A-6)
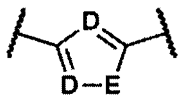
(A-7)
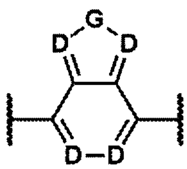
(A-8)
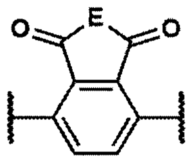
(A-9)
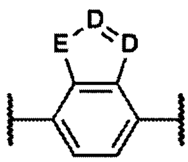
(A-10)

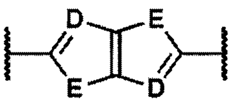
(A-11)
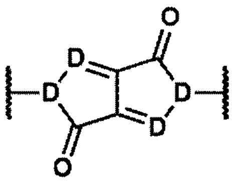
(A-12)
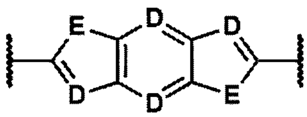
(A-13)

in Formula (A-1) to Formula (A-13), D's each independently represent $CR^{A1}$ or a nitrogen atom,
E's each independently represent $CR^{A2}R^{A3}$, $NR^{A4}$, an oxygen atom, or a sulfur atom,
G represents $CR^{A5}R^{A6}$, $NR^{A7}$, or an oxygen atom, and
$R^{A1}$ to $R^{A7}$ each independently represent a hydrogen atom or a substituent S1,

Z's each independently represent a single bond, -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, -CH=CH-COO-, -CH=CH-OCO-, $-COO-CH_2CH_2-$, $-OCO-CH_2CH_2-$, $-COO-CH_2-$, $-OCO-CH_2-$, -COO-NH-, -CH=CH-, -N=N-, -CH=N-N=CH-, -CH=N-, -CF=CF-, -C≡C-, -C=C-C=C-, $-OCH_2CH_2O-$, $-SCH_2CH_2S-$, -O-CO-CO-O-, or $-O-CH_2-O-$,
n1 represents an integer of 1 or more, and
B's each independently represent a group selected from the group consisting of groups represented by Formula (B-1) to Formula (B-5),

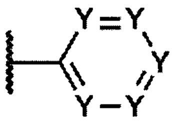

(B-1)

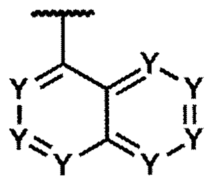

(B-2)

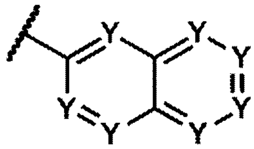

(B-3)

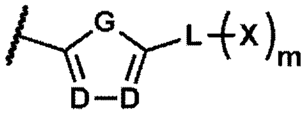

(B-4)

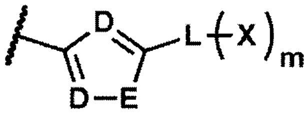

(B-5)

in Formula (B-1) to Formula (B-5), Y's each independently represent $CR^{B1}$ or a nitrogen atom, $R^{B1}$'s each independently represent a hydrogen atom, a substituent S1, or $-L-(X)_m$, where at least one of Y's represents $CR^{BT}$, $R^{BT}$ represents $-L-(X)_m$, D's each independently represent $CR^{A1}$ or a nitrogen atom, E represents $CR^{A2}R^{A3}$, $NR^{A4}$, an oxygen atom, or a sulfur atom, G represents $CR^{A5}R^{A6}$, $NR^{A7}$, or an oxygen atom, $R^{A1}$ to $R^{A7}$ each independently represent a hydrogen atom or a substituent S1, L's each independently represent a single bond or a chain-like (m+1)-valent hydrocarbon group, where in the hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C=C-, at least one -CH< may be replaced with -N< or -SiH<, and at least one >C< may be replaced with >Si<, m represents an integer of 1 or more, and X represents a group selected from the group consisting of the groups represented by Formula (C-1) to Formula (C-3), provided that, in a case where m is an integer of 2 or more, a plurality of X's may be the same or different from each other,

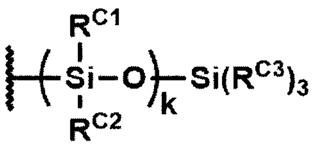

(C-1)

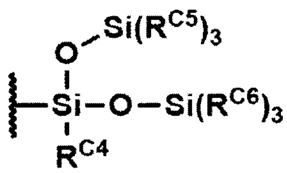

(C-2)

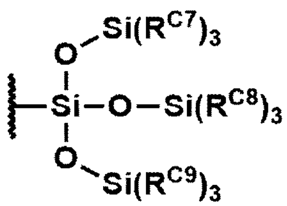

(C-3)

in Formula (C-1), $R^{C1}$ to $R^{C3}$ each independently represent an alkyl group having 1 to 10 carbon atoms, k represents an integer of 2 to 20, in Formula (C-1), a plurality of $R^{C1}$'s, a plurality of $R^{C2}$'s, and a plurality of $R^{C3}$'s may be the same or different from each other, in Formula (C-2), $R^{C4}$ represents an alkyl group having 1 to 10 carbon atoms, and $R^{C5}$ and $R^{C6}$ each independently represent an alkyl group having 1 to 10 carbon atoms or a group represented by Formula (C-1X), in Formula (C-2), a plurality of $R^{C5}$'s and a plurality of $R^{C6}$'s may be the same or different from each other, in Formula (C-3), $R^{C7}$ to $R^{C9}$ each independently represent an alkyl group having 1 to 10 carbon atoms or a group represented by Formula (C-1X), in Formula (C-3), a plurality of $R^{C7}$'s, a plurality of $R^{C8}$'s, and a plurality of $R^{C9}$'s may be the same or different from each other,

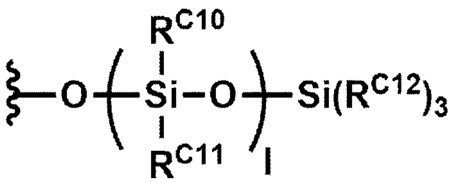

(C-1X)

in Formula (C-1X), $R^{C10}$ to $R^{C12}$ each independently represent an alkyl group having 1 to 10 carbon atoms, and 1

represents an integer of 0 to 20, in Formula (C-1X), in a case where 1 is an integer of 2 or more, a plurality of $R^{C10}$'s or a plurality of $R^{C11}$'s may be the same or different from each other, and a plurality of $R^{C12}$'s may be the same or different from each other,

the substituent S1 is a group selected from the group consisting of a halogen atom, an alkyl group, a cycloalkyl group, an aryl group, a heterocyclic group, a cyano group, a hydroxy group, a nitro group, a carboxyl group, an alkoxy group, an aryloxy group, a silyloxy group, a heterocyclic oxy group, an acyloxy group, a carbamoyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo or heterocyclic azo group, an imide group, a phosphino group, a phosphinyl group, a phosphinyloxy group, a phosphinylamino group, and a silyl group.

**15.** The compound according to claim 14,
wherein, in Formula (B-1) to Formula (B-5), X represents the group represented by Formula (C-2) or Formula (C-3).

**16.** The compound according to claim 14 or 15,
wherein, in Formula (B-1) to Formula (B-5), X represents the group represented by Formula (C-3).

**17.** The compound according to claim 14 or 15,
wherein a silicon atom content is 17.5% to 40.0%.

**18.** The compound according to claim 14 or 15,
wherein, in Formula (B-1) to Formula (B-5), m represents 1, and L represents a chain-like alkylene group having 1 to 4 carbon atoms in total, in which at least one $-CH_2-$ may be replaced with -NH-, -O-, -S-, -CO-, -CS-, -SO-, or $-SO_2-$.

**19.** The compound according to claim 14,

wherein B's each independently represent a group selected from the group consisting of groups represented by Formula (B-1-1) to Formula (B-1-5),

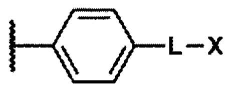
(B-1-1)

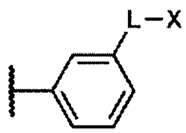
(B-1-2)

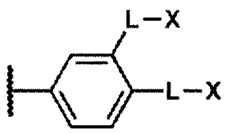
(B-1-3)

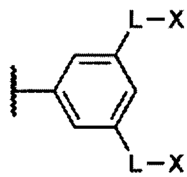
(B-1-4)

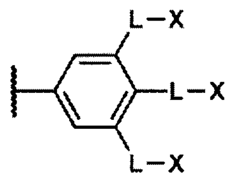
(B-1-5)

in Formula (B-1-1) to Formula (B-1-5), L's each independently represent a single bond or a chain-like divalent hydrocarbon group, where in the hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C≡C-, at least one -CH< may be replaced with -N< or -SiH<, and at least one >C< may be replaced with >Si<, and X's each independently represent a group selected from the group consisting of the groups represented by Formula (C-1) to Formula (C-3).

FIG. 1

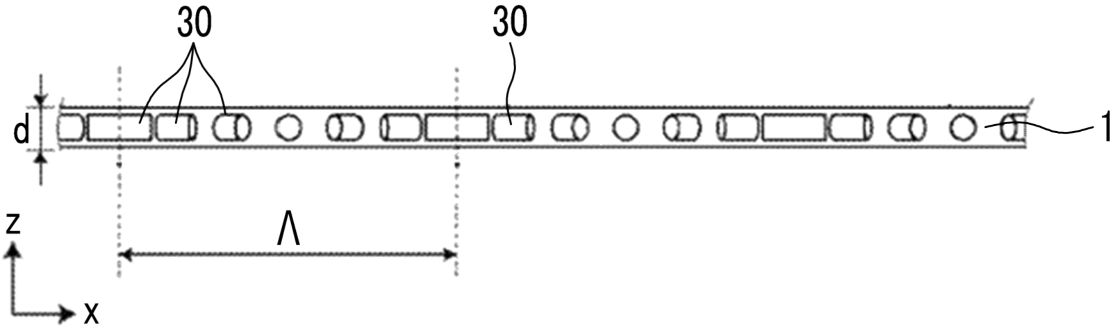


FIG. 2

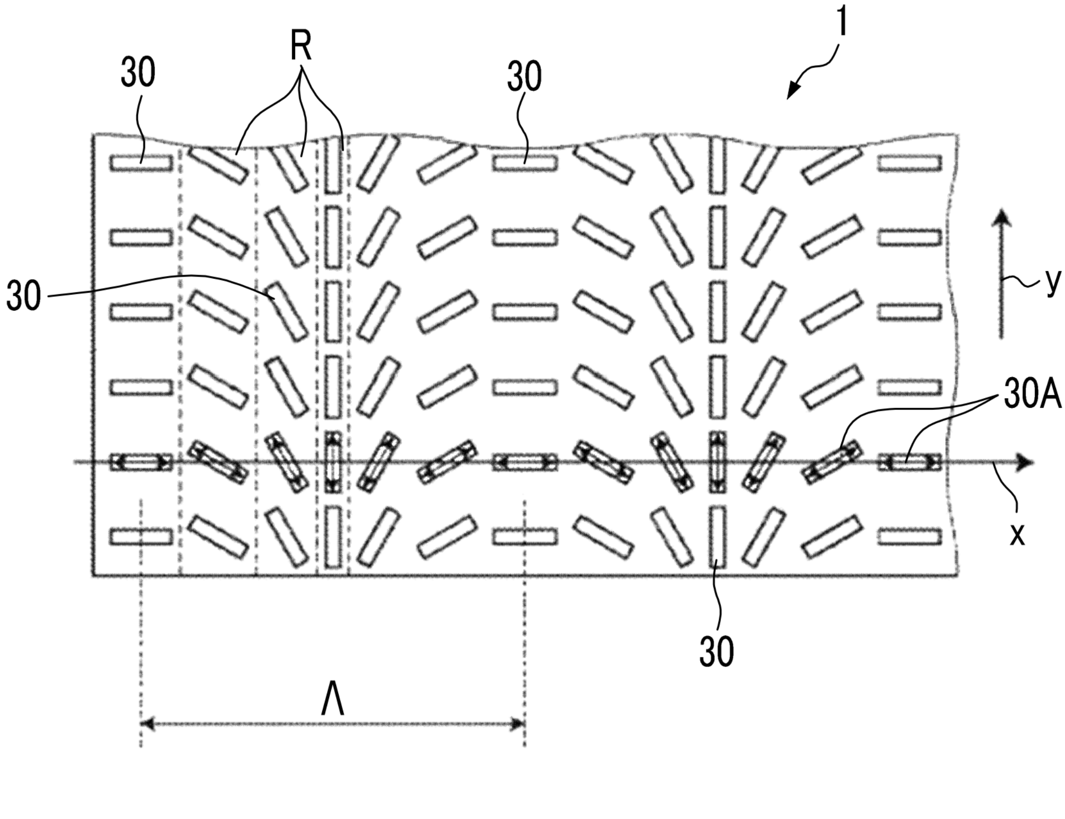

FIG. 3

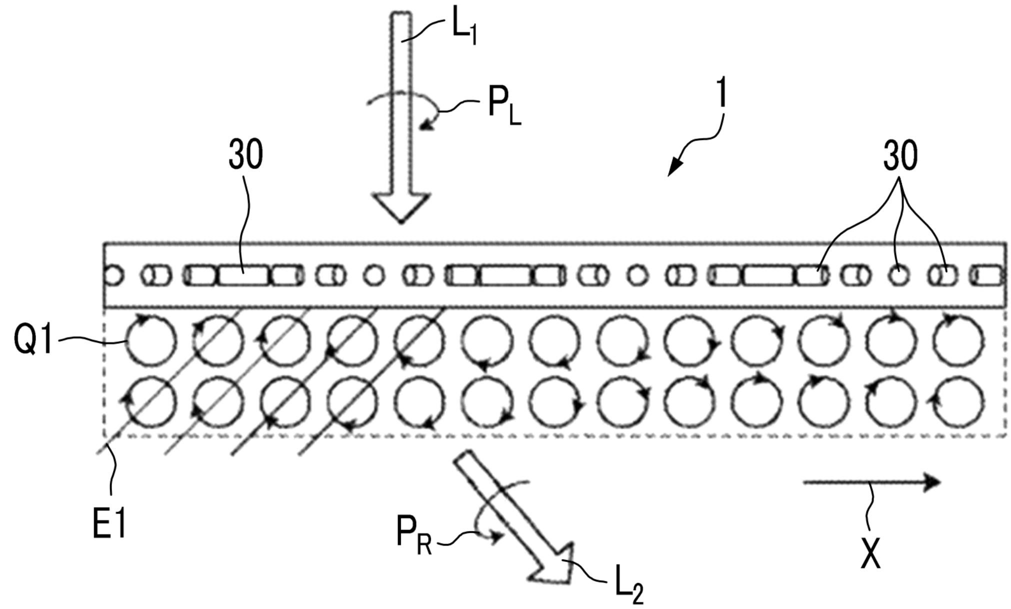


FIG. 4

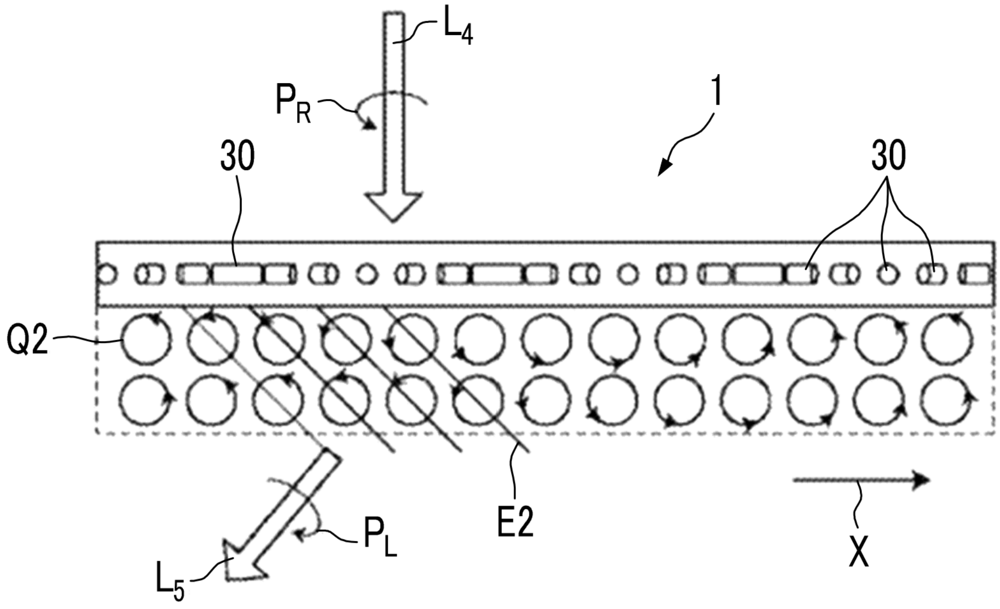

FIG. 5

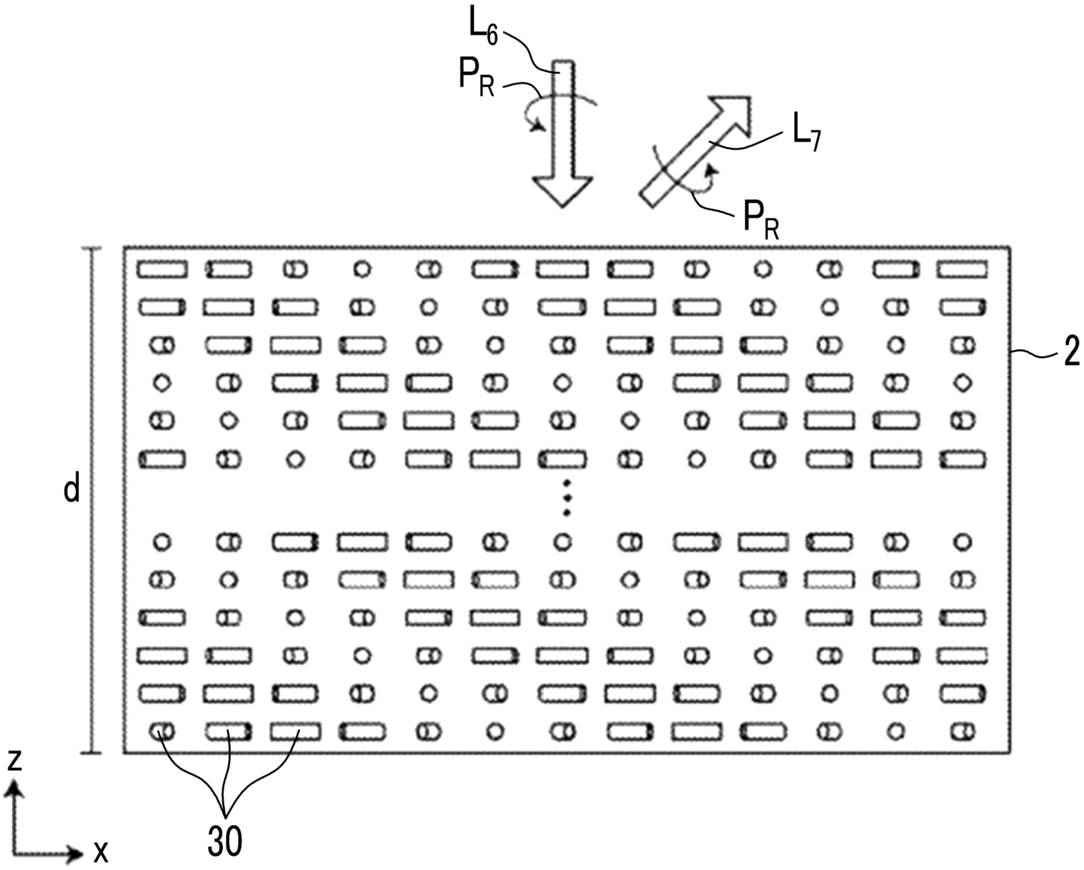


FIG. 6

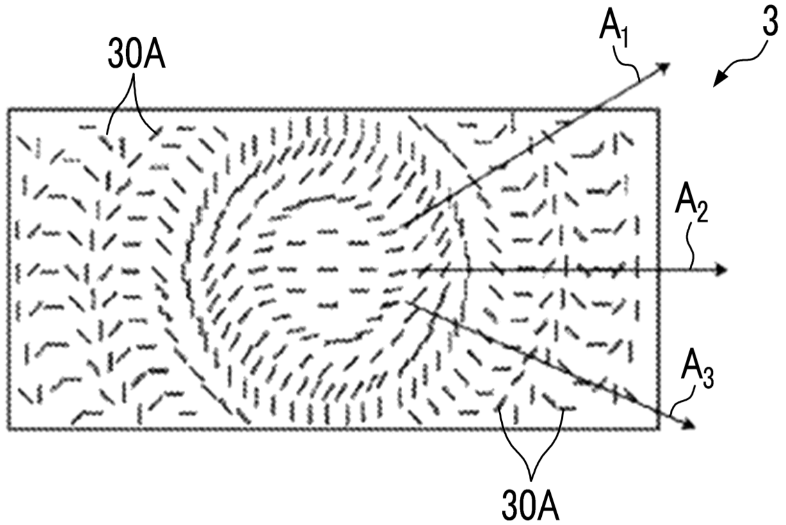

## INTERNATIONAL SEARCH REPORT

International application No.
**PCT/JP2024/024982**

**A. CLASSIFICATION OF SUBJECT MATTER**

***G02B 5/30***(2006.01)i; ***C07F 7/08***(2006.01)i; ***G02B 5/18***(2006.01)i
FI: G02B5/30; C07F7/08 X CSP; G02B5/18

According to International Patent Classification (IPC) or to both national classification and IPC

**B. FIELDS SEARCHED**

Minimum documentation searched (classification system followed by classification symbols)

G02B5/30; C07F7/08; G02B5/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | PUGH, C. et al., Induction of Smectic Layering in Nematic Liquid Crystals Using Immiscible Components. 2. Laterally Attached Side-Chain Liquid-Crystalline Poly(norbornene)s and Their Low-Molar-Mass Analogues with Hydrocarbon/Oligodimethylsiloxane Substituents, Macromolecules (1998), 15 July 1998, 31(16), pp.5188-5200, ISSN 0024-9297<br>p.5191, Scheme 1 | 14, 17-19 |
| Y | | 1, 4-13 |
| A | | 2-3, 15-16 |
| X | NICKMANS, K. et al., 3D Orientational Control in Self-Assembled Thin Films with Sub-5 nm Features by Light, Small (2017), 24 July 2017, 13, 1701043, pp.1-11, ISSN 1613-6810<br>p.2, Scheme 1 | 14, 17-19 |
| Y | | 1, 4-13 |
| A | | 2-3, 15-16 |
| Y | JP 2008-239622 A (DAI NIPPON PRINTING CO., LTD.) 09 October 2008 (2008-10-09)<br>paragraph [0042] | 1, 4-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 August 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**

International application No. **PCT/JP2024/024982**

**C. DOCUMENTS CONSIDERED TO BE RELEVANT**

| Category* | Citation of document, with indication, where appropriate, of the relevant passages | Relevant to claim No. |
|---|---|---|
| Y | JP 5-255277 A (HOECHST AKTIENGESELLSCHAFT) 05 October 1993 (1993-10-05) paragraphs [0011], [0014] | 1, 4-7 |
| Y | WO 2023/127537 A1 (FUJIFILM CORPORATION) 06 July 2023 (2023-07-06) paragraphs [0002], [0021], [0075], [0149] | 7-13 |
| Y | JP 2007-182423 A (CHISSO CORPORATION) 19 July 2007 (2007-07-19) claims, paragraphs [0092], [0096], [0143]-[0155] | 7-13 |
| Y | JP 2000-235184 A (FUJI PHOTO FILM CO., LTD.) 29 August 2000 (2000-08-29) paragraphs [0009], [0034]-[0036] | 7-13 |
| A | KEITH. C. et al., Layer frustration, polar order and chirality in liquid crystalline phases of silyl-terminated achiral bent-core molecules, Chemistry - A European Journal (2007), 22 December 2006, 13(9), pp.2556-2577, ISSN 0947-6539 p.2558, fig. 3 | 1-19 |
| A | JP 6-347770 A (SUMITOMO ELECTRIC INDUSTRIES, LTD.) 22 December 1994 (1994-12-22) example 2, paragraph [0035] | 1-19 |
| A | JP 2011-122077 A (SONY CORPORATION) 23 June 2011 (2011-06-23) paragraph [0045] | 1-19 |

Form PCT/ISA/210 (second sheet) (July 2022)

**INTERNATIONAL SEARCH REPORT**
**Information on patent family members**

International application No.
**PCT/JP2024/024982**

| Patent document cited in search report | Publication date (day/month/year) | Patent family member(s) | Publication date (day/month/year) |
|---|---|---|---|
| JP 2008-239622 A | 09 October 2008 | US 2008/0230745 A1<br>paragraph [0054] | |
| JP 5-255277 A | 05 October 1993 | US 5200521 A<br>second column, lines 3-15, 42-50<br>US 5439612 A<br>EP 477901 A2<br>DE 4030579 A1<br>KR 92-6331 A<br>TW 223062 B | |
| WO 2023/127537 A1 | 06 July 2023 | (Family: none) | |
| JP 2007-182423 A | 19 July 2007 | US 2007/0134447 A1<br>claims, paragraphs [0088]-[0090], [0151]-[0158]<br>US 2011/0144293 A1 | |
| JP 2000-235184 A | 29 August 2000 | (Family: none) | |
| JP 6-347770 A | 22 December 1994 | (Family: none) | |
| JP 2011-122077 A | 23 June 2011 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019508526 A
- WO 2014010325 A
- US 4683327 A
- US 5622648 A
- US 5770107 A
- WO 95022586 A
- WO 95024455 A
- WO 97000600 A
- WO 98023580 A
- WO 98052905 A
- JP 1272551 A
- JP H1272551 A
- JP 6016616 A
- JP H6016616 A
- JP 7110469 A
- JP H7110469 A
- JP 11080081 A
- JP H11080081 A
- JP 2001328973 A
- JP 1999513019 A
- JP H11513019 A
- JP 2007279688 A
- JP 57165480 A
- JP S57165480 A
- JP 9133810 A
- JP H9133810 A
- JP 11293252 A
- JP H11293252 A
- JP 2007108732 A
- JP 2010244038 A
- JP 2009102245 A
- JP 4655348 B
- JP 4524827 B
- JP 4720200 B
- JP 2004091380 A
- JP 3972430 B
- JP 4517416 B
- JP 2002128742 A
- JP 4810750 B
- JP 5888544 B
- JP 2014019654 A
- JP 6241654 B
- JP 6372060 B
- JP 6323144 B
- JP 2005015406 A
- JP 2007230968 A
- JP 6761484 B
- JP 6681992 B
- WO 19182129 A
- CN 01134217 A
- KR 101069555 B
- KR 101690767 B
- CN 20120229730 A
- JP 4053782 B
- JP 2009249406 A
- JP 4121075 B
- JP 2005528416 A
- US 6514578 B
- WO 06006819 A
- JP 2011184417 A
- JP 2013095685 A
- JP 2013103897 A
- JP 2002088008 A
- JP 2002226412 A
- JP 2012167214 A
- JP 2012167068 A
- JP 2018084511 A
- JP 2003055317 A
- JP 2001329264 A
- JP 2002030016 A
- JP 2003055664 A
- JP 2018070889 A
- CN 102557896 B
- US 2015369982 A
- JP 2020105264 A
- JP 2014224237 A
- JP 2012051862 A
- JP 2010106274 A
- JP 2005179557 A
- JP 2005035985 A
- JP 2002012579 A
- JP 2002003845 A
- JP 2001233837 A
- JP 2019532167 A
- JP 2016509247 A
- JP 2010503733 A
- JP 2003533557 A
- WO 19098115 A
- WO 18034216 A
- WO 18221236 A
- WO 18123396 A
- WO 18003482 A
- WO 17086143 A
- WO 14192655 A
- WO 13161669 A
- WO 09104468 A
- JP 2002080478 A
- JP 2002080851 A

- JP 2002179668 A
- JP 2002179669 A
- JP 2002179670 A
- JP 2002179681 A
- JP 2002179682 A
- JP 2002338575 A
- JP 2002338668 A
- JP 2003313189 A
- JP 2003313292 A
- JP 2014089476 A
- JP 9152509 A
- JP H9152509 A
- JP 2005097377 A
- JP 2005099228 A
- JP 2005128503 A
- JP 2006285197 A
- JP 2007076839 A
- JP 2007138138 A
- JP 2007094071 A
- JP 2007121721 A
- JP 2007140465 A
- JP 2007156439 A
- JP 2007133184 A
- JP 2009109831 A
- JP 3883848 B
- JP 4151746 B
- JP 2002229039 A
- JP 2002265541 A
- JP 2002317013 A
- JP 4205195 B
- JP 4205198 B
- JP 2003520878 A
- JP 2004529220 A
- JP 4162850 B
- JP 9118717 A
- JP H9118717 A
- JP 10506420 A
- JP H10506420 A
- JP 2003505561 A
- WO 2010150748 A
- JP 2013177561 A
- JP 2014012823 A
- WO 2020022496 A

**Non-patent literature cited in the description**


- **Y. GOTO**. *Mol. Cryst. Liq. Cryst*, 1995, vol. 260, 23-28
- *Makromol. Chem*, 1989, vol. 190, 2255
- *Advanced Materials*, 1993, vol. 5, 107